# EUROPEAN PATENT APPLICATION

(11) **EP 1 221 664 A2**
(43) Date of publication of application: **10.07.2002**
(21) Application number: 01126689.7
(22) Date of filing: 08.11.2001
(51) Int. Cl.: G06F 17/60

(54) **Working state administration system, job state administration system and working-job state administration system**

(30) Priority: 10.11.2000 JP 2000344005; 27.12.2000 JP 2000397757
(71) Applicant: KONICA CORPORATION, Tokyo (JP)
(72) Inventor: Yanagimachi, Noriyuku, Shinjuku-ku, Tokyo 163-0512 (JP)
(74) Representative: Henkel, Feiler, Hänzel

(57) **Abstract**

An administration system including; at least one job directory, for storing a file on a job, in which the job directory is recorded in a recording medium; a database for recording the working state of a working subject or of the job; a client terminal; an application software employed by a client user at each client terminal; and a working directory on a client terminal provided corresponding to the working subject and the job directory. In the administration system, if a connection state, between the working subject or the working directory corresponding thereto and the job directory, is changed, the application software records information regarding the connection state of the working subject onto the database so that the working state of the job is administered.

## Description

### BACKGROUND OF THE INVENTION

The present invention relates to the data access method, work state administration system and job state administration system, and more particularly to the data access method, work state administration system and job state administration system for ensuring easy working state and job state administration.

When work is consigned to another party in a company for example, the working time spent by the party assigned with the work is merely recorded by himself or herself. So far, this has not been based on a clearly defined rule in the conventional approach.

In recent years, there has been a rapid progress in networking such as in-house LAN, and work assignment has come to be made through networking such as in-house LAN.

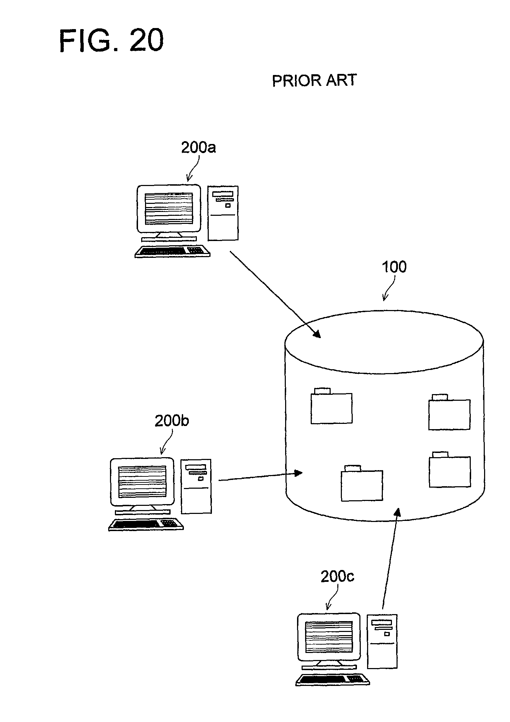

Fig. 20 shows the data access method via in-house LAN or the like. In Fig. 20, numeral 100 denotes a shared hard disk area, which is set in such a way that it can be shared among multiple clients 200a, 200b and 200c. Such a setting for shared usage is normally made when the in-house LAN is set up. Once it has been set, it can be accessed from any of the clients 200a, 200b and 200c at any time. Accordingly, when one client 200a requests work to be done by another client 200b, the client 200a loads a file on the relevant work in the shared hard disk area. Then another client 200b having received the work accesses such a shared hard disk area 100, hence the file on the relevant work.

Work has been performed so far in this way according to the prior art approach.

This prior art approach has been an excellent method for increasing work speed and efficiency, since it allows work to be assigned to others through the network.

In the network of such an in-house LAN, however, setting of the shared hard disk area 100 is made in advance simultaneously with that of the network. Clients 200a, 200b and 200c can access the file on the relevant work only through access to the shared hard disk area 100.
Accordingly, it has been impossible to determine which client is accessing which file.

Clients 200a, 200b and 200c can be accessed at any time. So when a client having received work accesses the hard disk, it is not always engaged in that work. When it has accessed the hard disk, there is no knowing which work in the hard disk it has accessed. The progress of the work done by the party assigned with the work can be known only through the record kept by that party, as before.

The party having requested the work cannot grasp the current progress of the relevant work; therefore, he cannot administer the work entrusted to others, according to the prior art approach.

### SUMMARY OF THE INVENTION

The present invention has been made to solve such problems. The object of the present invention is to provide a data access method which points out the particular job in multiple jobs to which the working subject has an access.

Another object of the present invention is to provide a working state administration system which permits easy administration of the current state in the progress of work for a job.

Still anther object of the present invention is to provide a job state administration system which ensures easy administration of the job state.

A further object of the present invention is to provide a job state administration system which permits easy administration of the job state in the work of the group consisting of multiple clients.

A still further object of the present invention is to provide a job state administration system which permits easy administration of the job state.

A still further object of the present invention is to provide a working state administration system which can be done only by the working subject preset for the job and which ensures easy administration of the state of the work set on the job.

A still further object of the present invention is to provide an accounting system which allows accounting in conformity to the fluctuation of the administration object or work state of the administration object in the user site system.

One embodiment for achieving the aforementioned objectives is a data access method characterized by direct logical connection to the job directory for storing the file on the job as an object of the relevant working subject, out of multiple job directories, according to the requirements of the working subject, and by accessing the file of this job.

A job used in the present invention is a unit of work defined by a series of work, and is an aggregate of work. At the same time, it is a data administration unit required in a series of work. For example, assume the case where a hundred photos are input by a scanner, and the input photo data is subjected to color correction and is output to the printer. If two persons take charge of this work with each person handling 50 sheets, it is possible to consider that they each are handling two different jobs. In this case, when viewed from the standpoint of work, a job is an aggregate of a series of work consisting of input, color correction and output. From the viewpoint of data, each unit can be considered as an administration unit for fifty photo data.

Access in the present invention is defined as work for an object job.

In the present invention, a working subject can be exemplified by a client user, front-end application software, external client application software and client terminal. The working subject is not what actually performs the work for a job, but the object to be subjected to working state administration. For example, even if what actually performs the work for a job is a client user, the working subject is front-end application software if the object of working state administration is defined for each front-end application software.

In the present invention, the client user is the user of the front-end application software.

In the present invention, logical connection is defined as follows: The directory (connection point) present on the client terminal and another directory to which connection is made (directory to which connection is made) are associated with each other in terms of software, and software-wise access to the data under the corresponding director to which connection is made is enabled or in the state of being enabled on the user level or application software level by access to the connection point.

In the present invention, direct connection is defined as an action or state of logical connection wherein the job directory of a working object is the destination for connection. It is different from the state of capable of accessing the job directory via a directory on the high-order hierarchy by making a logical connection where the directory of the high-order hierarchy including the directory under consideration is the destination for connection.

Another embodiment for solving the aforementioned problems is a data access method characterized in that a direct connection is made to the job directory as a working object only during the work out of multiple job directories for storing the job file without making a direct connection thereto during non-working period, whereby access is made to the job directory for storing the file on the relevant job.

A still another embodiment for solving the aforementioned problems is a working state administration system comprising;
(1) one or more job directories storing the file on the job,
(2) a recording medium recording the aforementioned job directory,
(3) a database for recording the working state of the working subject,
(4) a client terminal,
(5) a front-end application software employed by the client user at each client terminal, and
(6) a working directory on the client terminal provided in conformity to the working subject and job directory; the aforementioned working state administration system characterized in that, if the aforementioned client user is a working subject, and there is a change in the state of connection between
   (A) the aforementioned working directory provided in conformity to the working subject and job directory, and
   (B) the job directory for storing the file on the job to be worked by the working subject out of one or more job directories, then the aforementioned front-end application software records information on the state of connection into the aforementioned database, whereby the working state of the client user with respect to the job is administered.

A further embodiment for solving the aforementioned problems is a working state administration system comprising;
(1) one or more job directories storing the file on the job,
(2) a recording medium recording the aforementioned job directory,
(3) a database for recording the working state of the working subject,
(4) a client terminal,
(5) a front-end application software employed by the client user at the client terminal, and
(6) a working directory on the client terminal provided in conformity to the working subject and job directory; the aforementioned working state administration system characterized in that, if the aforementioned front-end application software is a working subject, and there is a change in the state of connection between
   (A) the aforementioned working directory provided in conformity to the working subject and job directory, and
   (B) the job directory for storing the file on the job to be worked by the working subject out of one or more job directories,
      then the aforementioned front-end application software records information on the state of connection into the aforementioned database, whereby the working state of the front-end application software with respect to the job is administered.

In the present invention, front-end application software is application software driven by the command from the client user or external client application software, and is designed to implement the system described in this specification.

A still further embodiment for solving the aforementioned problems is a working state administration system comprising;
(1) one or more job directories storing the file on the job,
(2) a recording medium recording the aforementioned job directory,
(3) a database for recording the working state of the working subject,
(4) a client terminal,
(5) a front-end application software employed by the external client application software at the client terminal, and
(6) a working directory on the client terminal provided in conformity to the working subject and job directory; the aforementioned working state administration system characterized in that, if the aforementioned external client application software is a working subject, and there is a change in the state of connection between
   (A) the aforementioned working directory provided in conformity to the working subject and job directory, and
   (B) the job directory for storing the file on the job to be worked by the working subject out of one or more job directories, then the aforementioned front-end application software records information on the state of connection into the aforementioned database, whereby the working state of the external client application software with respect to the job is administered.

In the present invention, external client application software is defined as application software other than the front-end application software which is driven by or synchronized with the front-end application software.

A still further embodiment for solving the aforementioned problems is a working state administration system comprising;
(1) one or more job directories storing the file on the job,
(2) a recording medium recording the aforementioned job directory,
(3) a database for recording the working state of the working subject,
(4) a client terminal,
(5) a front-end application software employed at the client terminal, and
(6) a working directory on the client terminal provided in conformity to the working subject and job directory; the aforementioned working state administration system characterized in that, if the aforementioned client terminal is a working subject, and there is a change in the state of connection between
   (A) the aforementioned working directory provided in conformity to the working subject and job directory, and
   (B) the job directory for storing the file on the job to be worked by the working subject out of one or more job directories,
      then the aforementioned front-end application software records information on the state of connection into the aforementioned database, whereby the working state of the client terminal with respect to the job is administered.

A still further embodiment for solving the aforementioned problems is a working state administration system characterized in that the working subject other than the corresponding working subject cannot access the aforementioned working directory.

A still further embodiment for solving the aforementioned problems is a working state administration system characterized in that the aforementioned working subject is in the state of connection only during the work, but in the state of disconnection during non-working period.

A still further embodiment for solving the aforementioned problems is a working state administration system characterized in that information on the aforementioned state of connection comprises at least the information for identifying the working subject, job identifying information and information for identifying the changed state of connection.

A still further embodiment for solving the aforementioned problems is a working state administration system characterized in that aforementioned state of connection comprises at least the information for identifying the working subject, job identifying information, information for identifying the changed state of connection, and information for identifying the points of time when the state of connection is changed.

A still further embodiment for solving the aforementioned problems is a working state administration system characterized in that aforementioned state of connection is either "connected" or "disconnected".

A still further embodiment for solving the aforementioned problems is a working state administration system characterized in that the aforementioned database comprises;
a job table comprising a job ID and job name,
a working subject table comprising a working subject ID and working subject name,
a working state table consisting of the working subject ID and the working state of the working subject associated with and job ID,
a working state change time table consisting of the job ID and the working state change time associated with working subject ID.

A still further embodiment for solving the aforementioned problems is a working state administration system characterized in that, when the working subject is connected in response to the command for start or restart of work by the aforementioned working subject, the working state of the working subject is recorded as "Working" in the aforementioned database; when the aforementioned state of connection is cut off response to the command for discontinuation of work by the aforementioned working subject, the working state of the working subject is recorded as "Discontinued" in the aforementioned database; and when the aforementioned state of connection is cut off response to the command for the end of work by the aforementioned working subject, the working state of the working subject is recorded as "End" in the aforementioned database.

A still further embodiment for solving the aforementioned problems is a working state administration system characterized in that working time of the aforementioned working subject for the job is calculated using the time when the working state of the aforementioned working subject has changed.

A still further embodiment for solving the aforementioned problems is a working state administration system characterized in that the working state of the working subject is administered by accessing the aforementioned database and verifying the working state of the aforementioned working subject.

A still further embodiment for solving the aforementioned problems is a working state administration system characterized in that the working subject table comprises a working subject ID associated with the working subject name and client terminal.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed by the client user at the client terminal, and
(6) a working directory on the client terminal provided in conformity to the working subject and job directory; the aforementioned job state administration system characterized in that, if the aforementioned client user is a working subject, and there is a change in the state of connection between
   (A) the aforementioned working directory provided in conformity to the working subject and job directory, and
   (B) the job directory for storing the file on the job to be worked by the working subject out of one or more job directories,
      then the aforementioned front-end application software records information on the state of connection into the aforementioned database, and the working state of the working subject with respect to the job is determined according to the information on the state of connection whereby the working state is administered in conformity to this working state.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed by the client user at each client terminal, and
(6) a working directory on the client terminal provided in conformity to the working subject and job directory;
   the aforementioned job state administration system characterized in that, if the aforementioned front-end application software is a working subject, and there is a change in the state of connection between
   (A) the aforementioned working directory provided in conformity to the working subject and job directory, and
   (B) the job directory for storing the file on the job to be worked by the working subject out of one or more job directories,
      then the aforementioned front-end application software records information on the state of connection into the aforementioned database, and the working state of the working subject with respect to the job is determined according to the information on the state of connection, whereby the working state of the job is administered in conformity to this working state.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed by the external client application software at each client terminal, and
(6) a working directory on the client terminal provided in conformity to the working subject and job directory;
   the aforementioned job state administration system characterized in that if the aforementioned external client application software is a working subject, and there is a change in the state of connection between
   (A) the aforementioned working directory provided in conformity to the working subject and job directory, and
   (B) the job directory for storing the file on the job to be worked by the working subject out of one or more job directories,
      then the aforementioned front-end application software records information on the state of connection into the aforementioned database, and the working state of the working subject with respect to the job is determined according to the information on the state of connection, whereby the working state of the job is administered in conformity to this working state.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed at each client terminal, and
(6) a working directory on the client terminal provided in conformity to the working subject and job directory;
   the aforementioned job state administration system characterized in that if the aforementioned client terminal is a working subject, and there is a change in the state of connection between
   (A) the aforementioned working directory provided in conformity to the working subject and job directory, and
   (B) the job directory for storing the file on the job to be worked by the working subject out of one or more job directories,
      then the aforementioned front-end application software records information on the state of connection into the aforementioned database,
      and the working state of the working subject with respect to the job is determined according to the information on the state of connection, whereby the working state of the job is administered in conformity to this working state.

A still further embodiment for solving the aforementioned problems is a job state administration system characterized in that the working subject other than the corresponding working subject cannot access the aforementioned working directory.

A still further embodiment for solving the aforementioned problems is a job state administration system characterized in that the aforementioned working subject is in the aforementioned state of connection only during the work, but not in the aforementioned state of connection during non-working period.

A still further embodiment for solving the aforementioned problems is a job state administration system characterized in that information on the aforementioned state of connection comprises at least the information for identifying the working subject, job identifying information and information for identifying the changed state of connection.

A still further embodiment for solving the aforementioned problems is a job state administration system characterized in that information on the aforementioned state of connection comprises at least the information for identifying the working subject, job identifying information, information for identifying the changed state of connection, and information for identifying the points of time when the state of connection is changed.

A still further embodiment for solving the aforementioned problems is a job state administration system characterized in that aforementioned state of connection is either "connected" or "disconnected".

A still further embodiment for solving the aforementioned problems is a job state administration system characterized in that the aforementioned database comprises; a job table comprising a job ID, job name and job working state
a working subject table comprising a working subject ID and working subject name,
a working state table consisting of the working state of the working subject associated with the working subject ID and job ID, and
a working state change time table consisting of the working state change time associated with the job ID and working subject ID.

A still further embodiment for solving the aforementioned problems is characterized in that, when the working subject is connected in response to the command for start or restart of work by the aforementioned working subject, the working state of the working subject is recorded as "Working" in the aforementioned database; when the aforementioned state of connection is cut off in response to the command for discontinuation of work by the aforementioned working subject, the working state of the working subject is recorded as "Discontinued" in the aforementioned database; and when the aforementioned state of connection is cut off in response to the command for termination of work by the aforementioned working subject, the working state of the working subject is recorded as "Terminated" in the aforementioned database.

A still further embodiment for solving the aforementioned problems is a job state administration system characterized in that, when the working state of the working subject is "Working", the working state of the relevant job is recorded as "Working" in the aforementioned database.

A still further embodiment for solving the aforementioned problems is a job state administration system characterized in that, when the working state of the working subject is "Discontinued", the working state of the relevant job is recorded as "Discontinued" in the aforementioned database.

A still further embodiment for solving the aforementioned problems is a job state administration system characterized in that, when the working state of the working subject is "Terminated", the working state of the relevant job is recorded as "Terminated" in the aforementioned database.

A still further embodiment for solving the aforementioned problems is a job state administration system characterized in that working time of the aforementioned working subject for the job is calculated using the point of time when the working state of the aforementioned working subject has changed.

A still further embodiment for solving the aforementioned problems is a job state administration system characterized in that the working state of the job is administered by accessing the aforementioned database and verifying the working state of the aforementioned job.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed by the client user at each client terminal, and
(6) a working directory on the client terminal provided in conformity to the working subject and job directory;
   the aforementioned job state administration system characterized in that, if there is a change in the state of connection between
   (A) one or more working directories provided in conformity to the working subject and job directory, and
   (B) the job directory for storing the file on the job to be worked by the working subject out of one or more job directories in the group work of the group consisting of multiple client users as working subjects,
      then the aforementioned front-end application software records information on the state of connection into the aforementioned database, and the working state of the working subject with respect to the job is determined according to the information on the state of connection, whereby the working state of the job is administered in conformity to this working state.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed by the client user at each client terminal, and
(6) a working directory on the client terminal provided in conformity to the working subject and job directory;
   the aforementioned job state administration system characterized in that, if there is a change in the state of connection between
   (A) one or more working directories provided in conformity to the working subject and job directory, and
   (B) the job directory for storing the file on the job to be worked by the working subject out of one or more job directories in the group work of the group consisting of multiple front-end application softwares as working subjects, then the aforementioned front-end application software records information on the state of connection into the aforementioned database, and the working state of the working subject with respect to the job is determined according to the information on the state of connection, whereby the working state of the job is administered in conformity to this working state.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed by the external client application software at each client terminal, and
(6) a working directory on the client terminal provided in conformity to the working subject and job directory;
   the aforementioned job state administration system characterized in that, if there is a change in the state of connection between
   (A) one or more working directories provided in conformity to the working subject and job directory, and
   (B) the job directory for storing the file on the job to be worked by the working subject out of one or more job directories in the group work of the group consisting of multiple eternal client application softwares as working subjects,
      then the aforementioned front-end application software records information on the state of connection into the aforementioned database, and the working state of the working subject with respect to the job is determined according to the information on the state of connection, whereby the working state of the job is administered in conformity to this working state.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed at each client terminal, and
(6) a working directory on the client terminal provided in conformity to the working subject and job directory;
   the aforementioned job state administration system characterized in that, if there is a change in the state of connection between
   (A) one or more working directories provided in conformity to the working subject and job directory, and
   (B) the job directory for storing the file on the job to be worked by the working subject out of one or more job directories in the group work of the group consisting of multiple eternal client application softwares as working subjects,
      then the aforementioned front-end application software records information on the state of connection into the aforementioned database, and the working state of the working subject with respect to the job is determined according to the information on the state of connection, whereby the working state of the job is administered in conformity to this working state.

A still further embodiment for solving the aforementioned problems is a job state administration system comprising;
(1) one or more job directories storing the file on the job,
(2) a recording medium recording the aforementioned job directory,
(3) a database,
(4) a client terminal,
(5) a front-end application software employed by the client user at each client terminal, and
(6) a working directory on the client terminal provided in conformity to the working subject and job directory;
   the aforementioned job state administration system characterized in that, if there is a change in the state of connection between
   (A) one or more working directories provided in conformity to the working subject and job directory, and
   (B) the job directory for storing the file on the job to be worked by the working subject out of one or more job directories,
      in the group work of the group consisting of (a) one or more client users as working subjects, (b) one or more client front-end application softwares, (c) one or more client external client application softwares, and/or (d) one or more client client terminals,
      then the aforementioned front-end application software records information on the state of connection into the aforementioned database, and the working state of the working subject with respect to the job is determined according to the information on the state of connection, whereby the working state of the job is administered in conformity to this working state.

A still further embodiment for solving the aforementioned problems is a job state administration system characterized in that, when the working state of at least one working subject out of the groups corresponds to the job to be administered is "Working", the working state of this job is recorded as "Working" in the data base.

A still further embodiment for solving the aforementioned problems is a job state administration system characterized in that, when the working states of all working subjects out of the groups corresponds to the job to be administered are "Terminated", the working state of this job is recorded as "Terminated" in the data base.

A still further embodiment for solving the aforementioned problems is a job state administration system characterized in that, when the working state of at least one working subject out of the groups corresponds to the job to be administered is "Discontinued", and there is no working subject whose working state is "Working", the working state of this job is recorded as "Discontinued" in the data base.

A still further embodiment for solving the aforementioned problems is a job state administration system characterized in that the working time for the job is calculated using the point of time when the working state of all the working subjects has changed.

A still further embodiment for solving the aforementioned problems is a working state administration system comprising;
(1) a recording medium or a file server recording one or more job directories storing the file on a job,
(2) a database server,
(3) a client terminal,
(4) a front-end application software employed by the client user at each client terminal, and
(5) a working directory on the client terminal provided in conformity to
   the aforementioned client user as a working subject and job directory;
   the aforementioned working state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the file on the job where the action serving as a working object for the working subject is set, and the information on the working state on the working subject is recorded in the aforementioned database, thereby ensuring the working state of the aforementioned client user for this action to be administered.

An action in the present invention is defined as an administration entity on the system associated with a series of work constituting the aforementioned job and registered on the database. Multiple actions can be assigned to one job. For example, if job a consists of three pieces of work, input, color correction and output, then three actions associated with each piece of work, input, color correction and output for job a will be set.

A directory in the present invention is defined in terms of hardware as the portion of the recording medium such as a memory, hard disk, floppy disk and optical magnetic disk or CD-ROM where data is recorded. For example, when a job directory storing a certain job is recorded in the hard disk, the job directory can be defined in terms of hardware as the portion of the hardware where the job data is recorded.

A still further embodiment for solving the aforementioned problems is a working state administration system comprising;
(1) a recording medium or a file server recording one or more job directories storing the file on a job,
(2) a database server,
(3) a client terminal,
(4) a front-end application software employed by the working subject at each client terminal, and
(5) a working directory on the client terminal provided in conformity to the aforementioned front-end application software as a working subject and job directory;
   the aforementioned working state administration system characterized in that, according to the information on the action set on the job as a working object and information for specifying the operation for that action, the aforementioned front-end application software changes the state of connection between the working directory and the job directory which is recorded in the aforementioned recording medium or file server and which stores the file on the job where the action serving as a working object for the working subject is set, and the information on the working state on the working subject is recorded in the aforementioned database, thereby ensuring the working state of the aforementioned front-end application software for this action to be administered.

A still further embodiment for solving the aforementioned problems is a working state administration system comprising;
(1) a recording medium or a file server recording one or more job directories storing the file on a job,
(2) a database server,
(3) a client terminal,
(4) a front-end application software employed by the external client application software at each client terminal, and
(5) a working directory on the client terminal provided in conformity to the aforementioned external client application software as a working subject and job directory;
   the aforementioned working state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the file on the job where the action serving as a working object for the working subject is set, and the information on the working state of the working subject is recorded in the aforementioned database, thereby ensuring the working state of the aforementioned client user for this action to be administered.

A still further embodiment for solving the aforementioned problems is a working state administration system comprising;
(1) a recording medium or a file server recording one or more job directories storing the file on a job,
(2) a database server,
(3) a client terminal,
(4) a front-end application software employed at each client terminal, and
(5) a working directory on the client terminal provided in conformity to the aforementioned client terminal as a working subject and job directory;
   the aforementioned working state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the file on the job where the action serving as a working object for the working subject is set, and the information on the working state on the working subject is recorded in the aforementioned database, thereby ensuring the working state of the aforementioned client terminal for this action to be administered.

A still further embodiment for solving the aforementioned problems is a working state administration system characterized in that the aforementioned front-end application software causes at least one of the first to third working states to be recorded in the database server as information on the working state of the relevant working subject with respect to the action set on the aforementioned job.

A still further embodiment for solving the aforementioned problems is a working state administration system characterized in that the aforementioned front-end application software causes at least one of the first to third working states and the point of time of the change in the working state to be recorded in the database server as information on the working state of the relevant working subject with respect to the action set on the aforementioned job.

A still further embodiment for solving the aforementioned problems is a working state administration system characterized in that the aforementioned front-end application software causes at least one of the first to third working states and the point of time of the change in the working state to be recorded in the database server as information on the working state of the relevant working subject with respect to the action set on the aforementioned job, and the aforementioned database server uses the aforementioned point of time to calculate the working time of the aforementioned working subject for the action, and the database server records the working time in the database.

A still further embodiment for solving the aforementioned problems is a working state administration system characterized in that the aforementioned front-end application software causes at least one of the first to third working states and the point of time of the change in the working state to be recorded in the database server as information on the working state of the relevant working subject with respect to the action set on the aforementioned job, and uses the aforementioned point of time to calculate the working time of the aforementioned working subject for the action.

A still further embodiment for solving the aforementioned problems is a working state administration system characterized in that the aforementioned first working state is recorded after the front-end application software has acquired from the database server the information on the storage position for the job where the action as a working object is set, and direct connection has been made between the job directory storing this job and the aforementioned working directory according to the acquired information on the storage position.

A still further embodiment for solving the aforementioned problems is a working state administration system characterized in that the aforementioned second working state is recorded after the aforementioned direct connection has been cut off by front-end application software.

A still further embodiment for solving the aforementioned problems is a working state administration system characterized in that the aforementioned third working state is recorded after the aforementioned direct connection has been cut off by the front-end application software, and the work of the working subject has been confirmed.

A still further embodiment for solving the aforementioned problems is a working state administration system characterized in that, the aforementioned first working state is recorded after the front-end application software has acquired from the database server the information on the storage position for the job where the action as a working object is set, and direct connection has been made between the job directory storing this job and the aforementioned working directory according to the acquired information on the storage position; the second working state is recorded after the aforementioned connection has been cut off by the front-end application software; and the third working state is recorded after the aforementioned connection has been cut off by front-end application software, and the work of the working subject has been confirmed.

A still further embodiment for solving the aforementioned problems is a working state administration system characterized in that, upon receipt of a command on any one of the aforementioned first to third working states, the aforementioned front-end application software follows;
a step of consulting the database server the working state of the working subject as an authentication process, prior to the aforementioned connection or disconnection
a step of determining, based on the result of consultation, if the aforementioned command can be accepted or not, and
a step of performing the aforementioned connection or disconnection if it can be accepted according to this determination, or
a step of sending a report to the effect that the command cannot be accepted if it cannot be accepted according to this determination.

A still further embodiment for solving the aforementioned problems is a working state administration system characterized in that, upon receipt of a command on any one of the aforementioned first to third working states, the aforementioned file server follows;
a step of consulting the database server as a authentication process, prior to the aforementioned connection or disconnection,
a step of determining, based on the result of consultation, if the aforementioned command can be accepted or not, and
a step of performing the aforementioned connection or disconnection if it can be accepted according to this determination, or
a step of sending a report to the effect that the command cannot be accepted if it cannot be accepted according to this determination.

A still further embodiment for solving the aforementioned problems is a working state administration system characterized in that, in the aforementioned step of authentication, acceptability of the command on the first working state is determined according to whether the action as a working object is present or not, or whether the state is the second working state or not; acceptability of the command on the second working state is determined according to whether the state is the first working state or not; and acceptability of the command on the third working state is determined according to whether it is either in the first or second working state or not.

A still further embodiment for solving the aforementioned problems is a job state administration system comprising;
(1) a recording medium or a file server recording one or more job directories storing the file on a job,
(2) a database server,
(3) a client terminal,
(4) a front-end application software employed by the working subject at each client terminal, and
(5) a working directory on the client terminal provided in conformity to the aforementioned working subject and job directory;
   the aforementioned job state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the job data as a working object for the working subject, and the information on the action state set on the job is recorded in the aforementioned database, thereby ensuring the working state of the aforementioned job to be administered.

A still further embodiment for solving the aforementioned problems is a job state administration system characterized in that the aforementioned front-end application software causes at least one of the first to fourth action states to be recorded in the database server as information on the action state set on the aforementioned job.

A still further embodiment for solving the aforementioned problems is a job state administration system characterized in that the aforementioned front-end application software causes at least one of the first to fourth action states and the point of time of the change in the action state to be recorded in the database server as information on the action state set on the aforementioned job.

A still further embodiment for solving the aforementioned problems is a job state administration system characterized in that the aforementioned front-end application software causes at least one of the first to fourth action states and the point of time of the change in the action state to be recorded in the database server as information on the action state set on the aforementioned job, and uses the aforementioned point of time to calculate the working time of the aforementioned action.

A still further embodiment for solving the aforementioned problems is a job state administration system characterized in that the aforementioned front-end application software causes at least one of the first to fourth action states and the point of time of the change in the action state to be recorded in the database server as information on the action state set on the aforementioned job, and the aforementioned database server uses the aforementioned point of time to calculate the working time of the aforementioned action and to record the result of calculation.

A still further embodiment for solving the aforementioned problems is a job state administration system characterized in that the aforementioned first action state is recorded after the action for the job has been set by the front-end application software.

A still further embodiment for solving the aforementioned problems is a job state administration system characterized in that the aforementioned second action state is recorded after the front-end application software has acquired from the database server the information on the storage position for the job where the action as a working object is set, and direct connection has been made between the job directory storing this job and the aforementioned working directory according to the acquired information on the storage position.

A still further embodiment for solving the aforementioned problems is a job state administration system characterized in that the aforementioned third action state is recorded after the aforementioned connection has been cut off by the front-end application software.

A still further embodiment for solving the aforementioned problems is a job state administration system characterized in that the aforementioned fourth action state is recorded after the aforementioned connection has been cut off by the front-end application software, and action been confirmed by the database server.

A still further embodiment for solving the aforementioned problems is a job state administration system characterized in that the aforementioned first action state is recorded after the action for the job has been set by the front-end application software; the second action state is recorded after the front-end application software has acquired from the database server the information on the storage position for the job where the action as a working object is set, and direct connection has been made between the job directory storing this job and the aforementioned working directory according to the acquired information on the storage position; the aforementioned third action state is recorded after the aforementioned connection has been cut off by the front-end application software; and the aforementioned fourth action state is recorded after the aforementioned connection has been cut off by the front-end application software, and the action has been confirmed by the database server.

A still further embodiment for solving the aforementioned problems is a job state administration system characterized in that, upon receipt of a command on any one of the aforementioned first to fourth action states, the aforementioned front-end application software follows;
a step of consulting the database server regarding the action state of this action as a authentication process, prior to setting of the aforementioned action, connection or disconnection,
a step of determining, based on the result of consultation, if the aforementioned command can be accepted or not, and
a step of setting the action and performing the aforementioned connection or disconnection if it can be accepted according to this determination, or
a step of sending a report to the effect that the command cannot be accepted if it cannot be accepted according to this determination.

A still further embodiment for solving the aforementioned problems is a job state administration system characterized in that, upon receipt of a command on any one of the aforementioned first to fourth action states, the aforementioned file server follows;
a step of consulting the database server regarding the action state of this action as a authentication process, prior to setting of the aforementioned action, connection or disconnection,
a step of determining, based on the result of consultation, if the aforementioned command can be accepted or not, and
a step of setting the action and performing the aforementioned connection or disconnection if it can be accepted according to this determination, or
a step of sending a report to the effect that the command cannot be accepted if it cannot be accepted according to this determination.

A still further embodiment for solving the aforementioned problems is a working-job state administration system characterized in that, in the aforementioned step of authentication, acceptability of the command on the first action state is determined according to whether the job to be set is present or not; acceptability of the command on the second action state is determined according to whether the state is the first action state or not; and acceptability of the command on the third action state is determined according to whether the state is the second action state or not; and acceptability of the command on the fourth action state is determined according to whether the state is either one of the second or third action state or not.

A still further embodiment for solving the aforementioned problems is a working-job state administration system comprising;
(1) a recording medium or a file server recording one or more job directories storing the file on a job,
(2) a database server,
(3) a client terminal,
(4) a front-end application software employed by the working subject at each client terminal, and
(5) multiple working directories on the client terminal provided in conformity to the aforementioned working subjects of a group consisting of client users as working subjects of this work, and job directories;
   the aforementioned working-job state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the job data as a working object for the working subject, and the information on the working state of the working subject for the action and the information on the action state set on this job are recorded in the aforementioned database, thereby ensuring the working states of the working subject and this job to be administered.

A still further embodiment for solving the aforementioned problems is a working-job state administration system comprising;
(1) a recording medium or a file server recording one or more job directories storing the file on a job,
(2) a database server,
(3) a client terminal,
(4) a front-end application software employed by the working subject at each client terminal, and
(5) multiple working directories on the client terminal provided in conformity to the aforementioned working subjects of a group consisting of front-end application softwares as working subjects of this work, and job directories;
   the aforementioned working-job state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the job data as a working object for the working subject, and the information on the working state of the working subject for the action and the information on the action state set on this job are recorded in the aforementioned database, thereby ensuring the working states of the working subject and this job to be administered.

A still further embodiment for solving the aforementioned problems is a working-job state administration system comprising;
(1) a recording medium or a file server recording one or more job directories storing the file on a job,
(2) a database server,
(3) a client terminal,
(4) a front-end application software employed by the working subject at each client terminal, and
(5) multiple working directories on the client terminal provided in conformity to the aforementioned working subjects of a group consisting of external client application softwares as working subjects of this work, and job directories;
   the aforementioned working-job state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the job data as a working object for the working subject, and the information on the working state of the working subject for the action and the information on the action state set on this job are recorded in the aforementioned database, thereby ensuring the working states of the working subject and this job to be administered.

A still further embodiment for solving the aforementioned problems is a working-job state administration system comprising;
(1) a recording medium or a file server recording one or more job directories storing the file on a job,
(2) a database server,
(3) a client terminal,
(4) a front-end application software employed by the working subject at each client terminal, and
(5) multiple working directories on the client terminal provided in conformity to the aforementioned working subjects of a group consisting of client terminals as working subjects of this work, and job directories;
   the aforementioned working-job state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the job data as a working object for the working subject, and the information on the working state of the working subject for the action and the information on the action state set on this job are recorded in the aforementioned database, thereby ensuring the working states of the working subject and this job to be administered.

A still further embodiment for solving the aforementioned problems is a working-job state administration system comprising;
(1) a recording medium or a file server recording one or more job directories storing the file on a job,
(2) a database server,
(3) a client terminal,
(4) a front-end application software employed by the working subject at each client terminal, and
(5) multiple working directories on the client terminal provided in conformity to the aforementioned working subjects consisting of a group of the client user, front-end application software, external client application software and client client terminal, and job directories;
   the aforementioned working-job state administration system characterized in that, when the aforementioned front-end application software has received information on the action set on the job as a working object and information for specifying the operation for that action, it changes the state of connection between the working directory and the job directory which is recorded in the aforementioned recording medium or file server and which stores the job data as a working object for the working subject, and the information on the working state of the working subject for the action and the information on the action state set on this job are recorded in the aforementioned database, thereby ensuring the working states of the working subject and this job to be administered.

A still further embodiment for solving the aforementioned problems is a working-job state administration system characterized in that the phases of the aforementioned second to fourth actions are determined by the working state of the aforementioned multiple working subjects.

A still further embodiment for solving the aforementioned problems is a working-job state administration system characterized in that, when the working state of at least one of the working subjects in the group performing the work for the aforementioned action is the first working state, the state of the action is described as "the second action state" in the database.

A still further embodiment for solving the aforementioned problems is a working-job state administration system characterized in that, when the working state of all the working subjects in the group performing the work for the aforementioned action is the third working state, the state of the action is described as "the fourth action state" in the database.

A still further embodiment for solving the aforementioned problems is a working-job state administration system characterized in that, when the working state of at least one of the working subjects in the group performing the work for the aforementioned action is the second working state, and there is no working subject whose working state is the first working state, then the state of the action is described as "the third action state" in the database.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrator the aforementioned job,
(6) an administration information control means for controlling the aforementioned administration information storage means, and
(7) a directory connecting means for changing the state of logically direct connection between the aforementioned job directory and working directory on the aforementioned work means;
   the aforementioned working state administration system characterized in that,
   (A) if a working subject capable of working for the aforementioned job and for this work has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject for the work is recorded in the aforementioned administration information storage means.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrator the aforementioned job,
(6) an administration information control means for controlling the aforementioned administration information storage means, and
(7) a directory connecting means for changing the state of logically direct connection between the aforementioned job directory and working directory on the aforementioned work means or work setting means;
   the aforementioned working state administration system characterized in that,
   (A) if a working subject capable of working for the aforementioned job and for this work has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject or a work setting subject for the work is recorded in the aforementioned administration information storage means.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrator the aforementioned job,
(6) an administration information control means for controlling the aforementioned administration information storage means,
(7) an administration means for the system administrating subject to administer this system, and
(8) a directory connecting means for changing the state of logically direct connection between the aforementioned job directory and working directory on the aforementioned work means, work setting means and work setting means and administration means;
   the aforementioned working state administration system characterized in that,
   (A) if a working subject capable of working for the aforementioned job and for this work has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject for the work, a work setting subject for the work or a system administration subject for the system is recorded in the aforementioned administration information storage means.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrator the aforementioned job,
(6) an administration information control means for controlling the aforementioned administration information storage means, and
(7) a directory connecting means for changing the state of logically direct connection between the aforementioned job directory and working directory on the aforementioned work means;
   the aforementioned working state administration system characterized in that,
   (A) if a work group consisting of one or more aforementioned working subjects capable of working for the aforementioned job and for this work, and the aforementioned work setting subject has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject pertaining to the working group for the aforementioned work is recorded in the aforementioned administration information storage means.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrator the aforementioned job,
(6) an administration information control means for controlling the aforementioned administration information storage means, and
(7) a directory connecting means for changing the state of logically direct connection between the aforementioned job directory and working directory on the aforementioned work means and work setting means;
   the aforementioned working state administration system characterized in that,
   (A) if a work group consisting of one or more aforementioned working subjects capable of working for the aforementioned job and for this work, and the aforementioned work setting subject has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject or a work setting subject for the aforementioned work pertaining to the working group for the aforementioned work is recorded in the aforementioned administration information storage means.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrer the aforementioned job,
(6) an administration information control means for controlling the aforementioned administration information storage means,
(7) an administration means for the system administrating subject to administer this system, and
(8) a directory connecting means for changing the state of logically direct connection between the aforementioned job directory and working directory on the aforementioned work means, work setting means and administration means;
   the aforementioned working state administration system characterized in that,
   (A) if a work group consisting of one or more aforementioned working subjects capable of working for the aforementioned job and for this work, and the aforementioned work setting subject has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject, a work setting subject for the aforementioned work or system administrating subject for the system pertaining to the work group for the aforementioned work is recorded in the aforementioned administration information storage means.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrer the aforementioned job,
(6) an administration information control means for controlling the aforementioned administration information storage means, and
(7) a directory connecting means for changing the state of logically direct connection between the aforementioned job directory and working directory on the aforementioned work means;
   the aforementioned working state administration system characterized in that,
   (A) if a work group consisting of multiple aforementioned working subjects capable of working for the aforementioned job and for this work, and the aforementioned work setting subject has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject pertaining to the work group capable of working for the aforementioned work is recorded in the aforementioned administration information storage means, and the aforementioned input working subject is the first working subject having started the work.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrer the aforementioned job,
(6) an administration information control means for controlling the aforementioned administration information storage means, and
(7) a directory connecting means for changing the state of logically direct connection between the aforementioned job directory and working directory on the aforementioned work means and work setting means;
   the aforementioned working state administration system characterized in that,
   (A) if a work group consisting of multiple aforementioned working subjects capable of working for the aforementioned job and for this work, and the aforementioned work setting subject has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject pertaining to the work group capable of working for the aforementioned work or a work setting subject for this work is recorded in the aforementioned administration information storage means, and the aforementioned input working subject is the first working subject having started the work.

A still further embodiment for solving the aforementioned problems is a working state administration system comprising;
(1) a job directory recording medium recording one or more job directories logically storing the job file,
(2) a job directory control means for controlling the aforementioned job directory recording medium,
(3) one or more work means for each working subject to perform the work for the job,
(4) a work setting means for the work setting subject to set the work for the aforementioned working subject,
(5) an administration information storage means for recording the information to administrer the aforementioned job,
(6) an administration information control means for controlling the aforementioned administration information storage means,
(7) an administration means for the system administrating subject to administer this system, and
(8) a directory connecting means for changing the state of logically direct connection between the aforementioned job directory and working directory on the aforementioned work means work setting means and administration means;
   the aforementioned working state administration system characterized in that,
   (A) if a work group consisting of multiple aforementioned working subjects capable of working for the aforementioned job and for this work, and the aforementioned work setting subject has been set in the aforementioned work setting means, then the aforementioned administration information control means records the information on the aforementioned setting in the aforementioned administration information storage means; and
   (B) if input of the work as a working object in the aforementioned work means and the working subject to perform the aforementioned work is given together with the input of starting the work, then the aforementioned directory connecting means performs a logically direct connection between the job directory storing the job with this work set thereto and the working directory associated with the input working subject, only when that the input working subject is set as a working subject pertaining to the work group capable of working for the aforementioned work, a work setting subject for this work or a system administrating subject for the system is recorded in the aforementioned administration information storage means, and the aforementioned input working subject is the first working subject having started the work.

A still further embodiment for solving the aforementioned problems is a working state administration system comprising;
a specialized access level setting means for setting a specialized access level for the work setting subject, and
a specialized access level storage means for recording the specialized access level set by the aforementioned specialized access level setting means;
   the aforementioned working state administration system characterized in that, based on the recorded specialized level, the attribute of the working subject which can be set in the aforementioned work setting means is determined as a working subject capable of working for the work set on the job.

A still further embodiment for solving the aforementioned problems is a working state administration system characterized in that the aforementioned specialized access level determines that the work setting subject itself which use the work setting means to set work can be set by the aforementioned work setting means as a working subject capable of working for the work set on the job.

A still further embodiment for solving the aforementioned problems is a working state administration system characterized in that the aforementioned specialized access level determines that the work setting subject itself which use the work setting means to set work, and the work group including this work setting subject can be set by the aforementioned work setting means as a working subject for the work set on the job.

A still further embodiment for solving the aforementioned problems is a working state administration system characterized in that the aforementioned specialized access level determines that the work setting subject itself which use the work setting means to set work, the work group including this work setting subject, and the working subject pertaining to the work group including this work setting subject can be set by the aforementioned work setting means as a working subject for the work set on the job.

A still further embodiment for solving the aforementioned problems is a working state administration system characterized in that the aforementioned specialized access level setting determines that the work setting subject itself which use the work setting means to set work, the work group including this work setting subject, the working subject pertaining to the work group including this work setting subject, and the work group to which the work setting means does not pertain can be set by the aforementioned work setting means as a working subject for the work set on the job.

A still further embodiment for solving the aforementioned problems is a working state administration system characterized in that the aforementioned specialized access level determines that all the working subjects and work groups can be set by the aforementioned work setting means as a working subject for the work set on the job.

A still further embodiment for solving the aforementioned problems is a working state administration system characterized in that the aforementioned specialized access level setting means can set the specialized level on an selective basis.

A still further embodiment for solving the aforementioned problems is a working state administration system characterized in that,
(A) if the input of the working subject is given by the aforementioned work means together with the input of starting the work, then the aforementioned directory connection means acquires from the aforementioned administration information storage means the information on the work where the working subject input by the aforementioned work means is set, and displays the acquired information on the work in the aforementioned work means;
(B) if the input of starting the work displayed in the aforementioned work means is given, then the directory connection means from the aforementioned administration information control means acquires the information of storing the job with this work set thereto, and, based on the acquired information, a logically direct connection is made between the working directory corresponding to the working subject input by the aforementioned work means and the job directory having a logical storage of the job where the work input by the aforementioned work means is set.

A still further embodiment for solving the aforementioned problems is a working state administration system characterized in that,
the aforementioned job directory storage means comprises a connectable area which can be connected by the job directory connection means and an unconnectable area which cannot be connected; and
if inputs for the work as an object of work in the aforementioned work means and the working subject are given together with the input of starting the work, then the aforementioned directory connecting means requests the aforementioned job directory control means to make a logically direct connection between the working directory corresponding to the working subject and the job directory having a logical storage of the job with this work set thereto, and then the job directory control means evaluates the legitimacy of this request for connection based on the information stored in the administration information storage means, and a job directory for connection present in the aforementioned unconnectable area is transferred to the connectable area if this request for connection is found as legitimate, whereby the aforementioned direct connection by the directory connection means is enabled.

A still further embodiment for solving the aforementioned problems is a working state administration system characterized in that,
the aforementioned job directory storage means comprises a connectable area which can be connected by the job directory connection means and an unconnectable area which cannot be connected; and
if inputs for the work as an object of work in the aforementioned work means and the working subject are given together with the input of starting the work, then the aforementioned directory connecting means requests the aforementioned job directory control means to make a logically direct connection between the working directory corresponding to the working subject and the job directory having a logical storage of the job with this work set thereto, and then the job directory control means evaluates the legitimacy of this request for connection based on the information stored in the administration information storage means, and the hard link of the job directory for connection present in the aforementioned unconnectable area is provided in the connectable area if this request for connection is found as legitimate, whereby the aforementioned direct connection by the directory connection means is enabled.

A still further embodiment for solving the aforementioned problems is a working state administration system characterized in that,
the aforementioned job directory control means makes the job directory unconnectable from the job directory connecting means in advance;
if inputs of work as an work object and working subject are given in the aforementioned work means together with the input of starting the work, then the aforementioned directory connection means requests the aforementioned job directory control means to make a logically direct connection between the job directory having a logical storage of the job with this work set thereto and the working directory corresponding to the working subject; and
the job directory control means evaluates the legitimacy of the request for connection based on the information stored in the administration information storage means, and allows the aforementioned direct connection of this job directory by the directory connection means if this request for connection is found as legitimate.

A still further embodiment for solving the aforementioned problems is a working state administration system characterized in that,
before the aforementioned directory connection means requests the aforementioned job directory control means to make a logically direct connection between the working directory corresponding to the working subject and the job directory having a logical storage of the job with this work set thereto, the aforementioned directory connection means acquires from the administration information storage means the information on the directory storage means where the job directory having a logical storage of the job with this work set thereto is recorded, and makes the aforementioned request to the aforementioned job directory control means for controlling the job directory recording means based on the acquired information.

A still further embodiment for solving the aforementioned problems is an accounting system comprising a user site system consisting of an administrator terminal connected via the network circuit, a worker terminal and a file server, and a provider site system consisting of a database server connected to this user site system via the network.

A still further embodiment for solving the aforementioned problems is an accounting system comprising;
a user site system consisting of an administrator terminal connected via the network circuit, a worker terminal and a file server, and
a provider site system consisting of a database server connected to this user site system via the network;
the aforementioned accounting system characterized in that the aforementioned user site system contains job data in the file server, and
the provider site system administers the job data of the aforementioned user site system, thereby performing accounting work.

A still further embodiment for solving the aforementioned problems is an accounting system comprising a user site system consisting of an administrator terminal connected via the network circuit, a worker terminal and a file server, and a provider site system consisting of a database server connected to this user site system via the network;
the aforementioned accounting system characterized in that the aforementioned user site system contains job data in the file server, and the provider site system has an accounting table for performing accounting work by administering the job data of the aforementioned user site system.

A still further embodiment for solving the aforementioned problems is an accounting system comprising at least;
(1) a fixed accounting amount table storing a fixed object of accounting and a fixed amount of accounting in a form associated with each other, wherein the aforementioned fixed object of accounting uses as an indicator at least one of the number of users, the number of terminals, the number of file servers and the total capacity of the file server in the preset user site system;
(2) a variable accounting amount table storing a variable object of accounting and a variable amount of accounting in a form associated with one another, wherein the aforementioned variable object of accounting uses as an indicator at least one of the number of job directories, the capacity of job directory, the number of files constituting the job directories, the number of actions set on the job and the number of histories; and
(3) a accounting amount table storing a company name for accounting, a fixed amount of accounting, a variable amount of accounting and a total amount of accounting in a form associated with one another.

A still further embodiment for solving the aforementioned problems is an accounting system comprising;
a user site system consisting of an administrator terminal connected via the network circuit, a worker terminal and a file server, and
a provider site system consisting of a database server connected to this user site system via the network;
   wherein the aforementioned database server has an accounting table for recording accounting information, and
the aforementioned administrator terminal has a job input means for inputting the job registration and setting of the action on the job, and inputting the deletion of job registration.

The aforementioned accounting system is further characterized as follows:
If the input of job registration and setting of the action on the job has been given in the aforementioned job input means, then the administrator terminal sends information of registering the job and action set on the job to the aforementioned file server; and the aforementioned file server having received this information stores the job directory storing the job data for this job as an object for administration, and, at the same time, sends the information on this job to the aforementioned database server; then this database server enters the record in the accounting table based on the information on the job sent from the aforementioned file server, whereby accounting work is performed.
If the input of deleting the registration of this job is given in the aforementioned job input means, then this administrator terminal sends information of deleting job registration to the aforementioned file server, and the aforementioned file server having received the information deletes the job directory storing the job data on this job from the object of administration; at the same time, it sends the information on this job to the aforementioned database server, and the database server deletes the record from the accounting table based on the information on the job set from the aforementioned file server, thereby ensuring that accounting work is not performed.

A still further embodiment for solving the aforementioned problems is an accounting system comprising; a user site system consisting of an administrator terminal connected via the network circuit, a worker terminal and a file server, and
a provider site system consisting of a database server connected to this user site system via the network;
wherein the aforementioned file server has a logical storage of the job directory storing the data on that job as an abject of administration, and the aforementioned worker terminal has a state input means for inputting change of the state of the work for the action set on the job.
The aforementioned accounting system is further characterized as follows:

Having received the input, by the working subject, of changing of the state of the work for the action set on the job from the aforementioned state input means, the aforementioned worker terminal changes the state of connection with the job directory storing the job data on this job, and, at the same time, sends the working state of the working subject and the action state of the action to the aforementioned database server.

The aforementioned data base server comprises a work state table for recording the working state of the working subject and an action state table for recording the action state of the action, and, at the same time, records in this work state table and action state table the working state and action state sent from the aforementioned worker terminal, and enters the record in the accounting table based on this record, whereby accounting work is performed.

A still further embodiment for solving the aforementioned problems is an accounting system further characterized in that if the work start is input in the step of changing the state of the aforementioned work by the aforementioned state input means, then the aforementioned worker terminal acquires from the aforementioned database server the information for connection to the job directory on this job, and changes the aforementioned connection state by direct connection to the job directory storing the job data on this job, based on the acquired information.

If work discontinuation or work termination is input by the aforementioned state input means in the step of changing the aforementioned work,then the aforementioned worker terminal cuts off the direct connection with the job directory storing the job data on this job, whereby the aforementioned connection state is changed.

A still further embodiment for solving the aforementioned problems is an accounting system characterized in that the information on the aforementioned job consists of a company name plus at least one of the number and capacity of job directories, the number and capacity of files constituting the job directories or the number of actions set on the job.

A still further embodiment for solving the aforementioned problems is an accounting system characterized in that a plurality of the aforementioned file servers are present.

A still further embodiment for solving the aforementioned problems is an accounting system characterized in that the aforementioned administrator terminal and worker terminal are one and the same terminal or separate terminals.

A still further embodiment for solving the aforementioned problems is an accounting system characterized in that multiple user site systems are connected with one aforementioned provider site system via the network.

### BRIEF DESCRIPTION OF THE DRAWINGS

Fig. 1 is a diagram representing a logical configuration of the directory structure to explain data access method according to the present invention;
Fig. 2 is an illustration representing the first embodiment of the work and job state administration system according to the present invention;
Fig. 3 is an illustration representing a first embodiment of the work and job state administration system according to the present invention;
Fig. 4 is a drawing representing an example of the configuration of a database according to the present invention;
Fig. 5 is a flowchart representing the working state administration program to be started when connection is required by the work start instruction;
Fig. 6 is a flowchart representing the working state administration program to be started when disconnection is required by the work discontinue instruction;
Fig. 7 is a flowchart representing the working state administration program to be started when disconnection is required by the work termination instruction;
Fig. 8 is an illustration representing a second embodiment of the working state and job state administration system according to the present invention;
Fig. 9 is an illustration representing a second embodiment of the working state and job state administration system according to the present invention;
Fig. 10 is an illustration representing a third embodiment of the working state and job state administration system according to the present invention;
Fig. 11 is an illustration representing a third embodiment of the working state and job state administration system according to the present invention;
Fig. 12 is an illustration representing a fourth embodiment of the working state and job state administration system according to the present invention;
Fig. 13 is an illustration representing a fourth embodiment of the working state and job state administration system according to the present invention;
Fig. 14 is a drawing representing another example of the configuration of a database according to the present invention;
Fig. 15 is a drawing illustrating the job state administration system in the work of the group consisting of the working subjects made up of multiple client users;
Fig. 16 is a drawing illustrating the job state administration system in the work of the group consisting of the working subjects made up of multiple front-end application softwares;
Fig. 17 is a drawing illustrating the job state administration system in the work of the group consisting of the working subjects made up of multiple packages of external client application software;
Fig. 18 is a drawing illustrating the job state administration system in the work of the group consisting of the working subjects made up of multiple client terminals;
Fig. 19 is a drawing illustrating the job state administration system in the work of the group consisting of the working subjects made up of at least one of multiple client users, front-end application softwares, external client application software and client terminals;
Fig. 20 is a drawing illustrating data access methods in the conventional in-house LAN or the like;
Fig. 21 is a drawing illustrating the fifth embodiment of the working state administration system according to the present invention;
Fig. 22 is a drawing illustrating the fifth embodiment of the working state administration system according to the present invention;
Fig. 23 is a drawing representing an example of the configuration of the database server table according to the present invention;
Fig. 24 is a drawing an example of the processing flow of the front-end application software according to the present invention;
Fig. 25 is a drawing another example of the processing flow of the front-end application software according to the present invention;
Fig. 26 is a drawing another example of the processing flow of the front-end application software according to the present invention;
Fig. 27 is a drawing illustrating the sixth embodiment of the working state administration system according to the present invention;
Fig. 28 is a drawing illustrating the sixth embodiment of the working state administration system according to the present invention;
Fig. 29 is a drawing illustrating the seventh embodiment of the working state administration system according to the present invention;
Fig. 30 is a drawing illustrating the seventh embodiment of the working state administration system according to the present invention;
Fig. 31 is a drawing illustrating the eighth embodiment of the working state administration system according to the present invention;
Fig. 32 is a drawing illustrating the eighth embodiment of the working state administration system according to the present invention;
Fig. 33 is a drawing representing another example of the configuration of the database server table according to the present invention;
Fig. 34 is a drawing representing another example of the processing flow of the front-end application software according to the present invention;
Fig. 35 is a drawing representing an example of the processing flow of the file server according to the present invention;
Fig. 36 is a drawing representing another example of the configuration of the database server table according to the present invention;
Fig. 37 is a drawing representing the state of connection when there is one client users as a working subject for action;
Fig. 38 is a drawing representing the state of connection when there is one client user as a working subject for action;
Fig. 39 is a state transition diagram representing the correspondence between the working state of the working subject and the action state of the job in the working-job state administration system;
Fig. 40 is a block diagram illustrating the ninth embodiment of the working state administration system according to the present invention;
Fig. 41 is a drawing representing the processing flow of a logically direct connection in the present embodiment;
Fig. 42 is a drawing representing another processing flow of a logically direct connection in the present embodiment;
Fig. 43 is a drawing illustrating the working state administration system according to the present invention in a printing company;
Fig. 44 is a drawing illustrating the directory configuration of a job directory;
Fig. 45 is a drawing representing a preferred example of the administration table of the database server recorder;
Fig. 46 is a drawing representing a preferred example of the accounting table of the database server recorder;
Fig. 47 is a drawing representing an example of the processing flow for starting the work by the DBC according to the present invention; and
Fig. 48 is an example of the processing flow for discontinuing or terminating the work by the DBC according to the present invention.

### DETAILED DESCRIPTION OF THE INVENTION

The following gives a detailed description of the embodiments according to the present invention:
The data access method, working state administration system and job state administration system in the present invention are suitably used to perform work by accessing the data in the computer environment linked by a network. For example, they are suitably used for DTP, prepressing and the like in the printing industry, for operation and administration of X-ray images in the medical industry, and for on-line publication, electronic publication and creation of post cards in the photo/image processing industries.

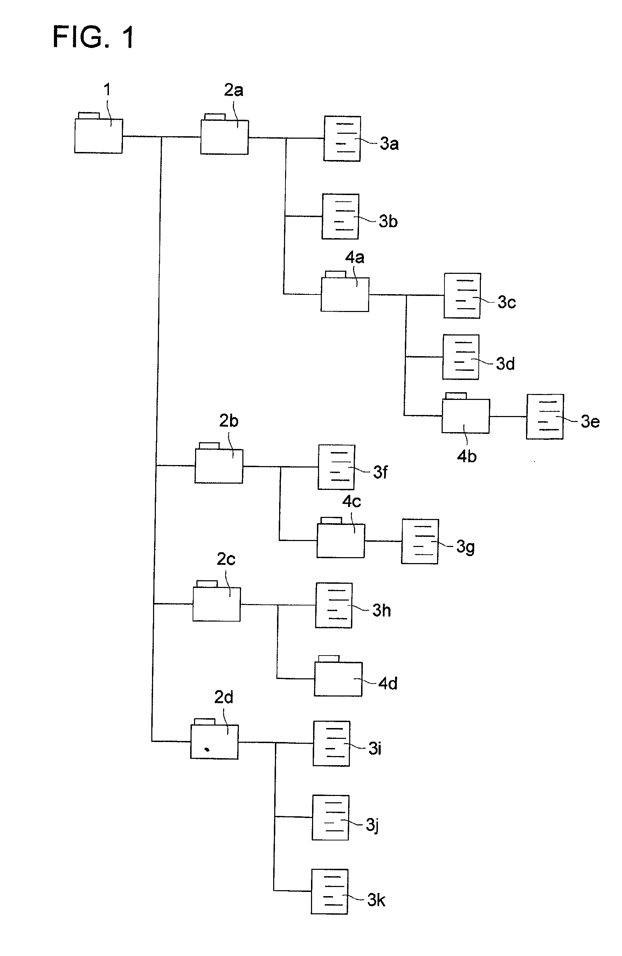

Fig. 1 is a diagram representing a logical configuration of the directory structure to explain data access method according to the present invention.

In Fig. 1, numeral 1 denotes a directory of the entire job, 2a and 2b shows job directories, 3a, 3b, 3c and others represent job-related files, and 4a, 4b and others show sub-directories under job directory.

The job directories 2a, 2b, 2c and others are logical storage directories of the job-related files 3a, 3b, 3c and others. In Fig. 1, job-related files 3a and 3b are stored in the job directory 2a. Job-related files 3c and 3d are stored in the sub-directory 4a placed in the job directory 2a. The job-related file 3e is stored in the sub-directory 4b contained in the aforementioned sub-directory 4a. In this manner, job-related files 3a, 3b, 3c, 3d and 3e are stored in the job directory 2a. In the same way, the job-related files 3f and 3g are contained in the job directory 2b. Also, the 3h is stored in the job directory 2c, and job-related files 3i, 3j and 3k are stored in the job directory 2d.

Further, job directories 2a, 2b, 2c and 2d are placed in the directory 1 of the entire job.

The combination and the number of directories, job directories and sub-directories in the entire job shown in the embodiment illustrated above show only an example. They can be configured in many different combinations, and their number can also be changed.

The following describes the examples of accessing the job-related file 3f according to Fig. 1:
The job-related file 3f is stored in the job directory 2b, as illustrated.

When starting access to the job-related file 3f, the working subject establishes a logically direct connection with the job directory 2b storing the job-related file 3f, not the directory 1 of the entire job.

In the prior art, the data of the relevant job is accessed to perform the job through connection with the directory 1 of the entire job, so any job can be accessed. This makes it impossible to grasp the job being accessed by the working subject. In the present invention (Claim 1), however, the data file of the relevant job is accessed by a logically direct connection with the job directory 2a, 2b and others containing the job-related file. This makes it possible to grasp the job directory being accessed by the working subject, hence the job being accessed by the working subject.

After the specified work has been performed, the logical connection with the job directory 2b is cut off.

According to the present invention, dynamic access (Claim 2) in logically direct connection represents a preferred embodiment. By way of an example, the preferred embodiment for dynamic access can be exemplified by the method for appropriate switching of the logical direct connection (connection or disconnection) with the job directory 2b storing the job-related file 3f as required only during the work.

As explained above, the job for which the working subject is working and time when it is working can be easily identified by adopting the direct access method of appropriate switching of the logical direct connection with the job directory storing the file related to the job as required only during the work.

The following describes the working state administration system according to the present invention (hereinafter referred to as "working state administration system of the present invention" whenever required) in details:

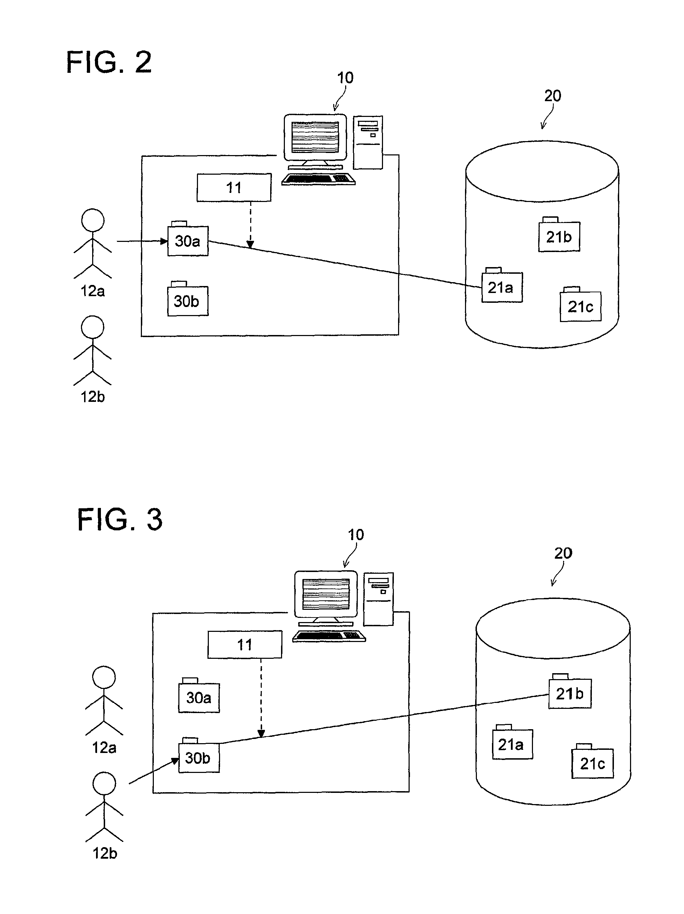

Figs. 2 and 3 are illustrations representing the first embodiment of the job state administration system according to the present invention.

In this embodiment, the working state is administered for each client user. A working directory is provided in conformity to the client user as a working subject and the job directory as a working object.

In Figs. 2 and 3, numeral 10 denotes a client terminal, and 11 shows an front-end application software installed on the client terminal 10. Numerals 12a and 12b indicate a client user for operating the client terminal 10. Numeral 20 denotes a hard disk area for job data, and job directories 21a, 21b and 21c storing the job-related file are present there. There is no restriction to the number of job directories.

Numerals 30a and 30b denote working directories corresponding to client user 12a as working subject, and job directory 21a, client user 12b and job directory 21b.

A normal PC (hardware resource) or the like can be used as a client terminal 10.

The front-end application software 11 is a program installed on the client terminal 10, and a logically direct connection with work directories 30a and 30b in conformity to the working subject and job directories 21a, 21b and 21c is carried out in response to the requirements by working subject for connection. After direct connection, the job directory can be accessed from any external application software, independently of the type of the external access application softwares. Since the front-end application software is independent of external application softwares as described above, it is possible to realize the working state administration independently of the external application software.

The hard disk area 20 of the job data is composed of the recording medium which allows reading and writing. Job directories 21a, 21b and 21c store the file including a series of related jobs, and are logically stored in the hard disk area 20 of the job data. Such job directories can be present in one recording medium or can be stored in a separate or overlapped form across multiple recording mediums.

The hard disk area 20 can be connected to the client terminal 10 via the network such as LAN and WAN, or can be present in the client terminal 10.

Working directories 30a and 30b are stored in such a recording medium as a hard disk inside the client terminal 10, and serve as a connection point provided in response to the client user as a working subject. Such a connection point is unique for the working subject. These directories can be accessed only by the working subject corresponding working subject.

Setting such a connection point to the working subject allows the connection state to be administered for each working subject.

Fig. 2 shows the state of connection where only the client user 12a is working for the job directory 21a. Fig. 3 client user 12b shows the state of connection where only the client user 21b is working for the job directory 21b.

In order that the client user 12a performs the work for job directory 21a in Fig. 2, the front-end application software 11 is used to make a logically direct connection between the job directory 21a and the working directory 30a which can be used only by the client user 12a, whereby the client user 12a is connected with the job directory 21a. In this case, client user 12b is not in the state of connection.

In order that the client user 12b performs the work for job directory 21b in Fig. 3, the front-end application software 11 is used to make a logically direct connection between the job directory 21b and the working directory 30b, a connection point which can be used only by the client user 12b, whereby the client user 12b is connected with the job directory 21b. In this case, client user 12a which was connected with the job directory 21a in Fig, 2 is not in the state of connection.

As described above, the working subject is connected only during the work, but is not connected when work is not performed. This allows the working state of the working subject to be administered virtually through administration of connection state of the working subject.

When the working state of such a working subject is administered, it is preferred to use the database (not illustrated) for recording the working state of the working subject. The following describes the database which can be used to administer the working state of the working subject:
Such a database contains the record of information on the state of connection comprising at least; working subject specifying information, job specifying information, and changed connection state specifying information; or preferably, working subject specifying information, job specifying information, changed connection state specifying information and connection state change time specifying information.

The aforementioned Information on the connection state is recorded by the front-end application software when the connection state has been changed.

The preferred state of connection is either "connected" or "discontinued".

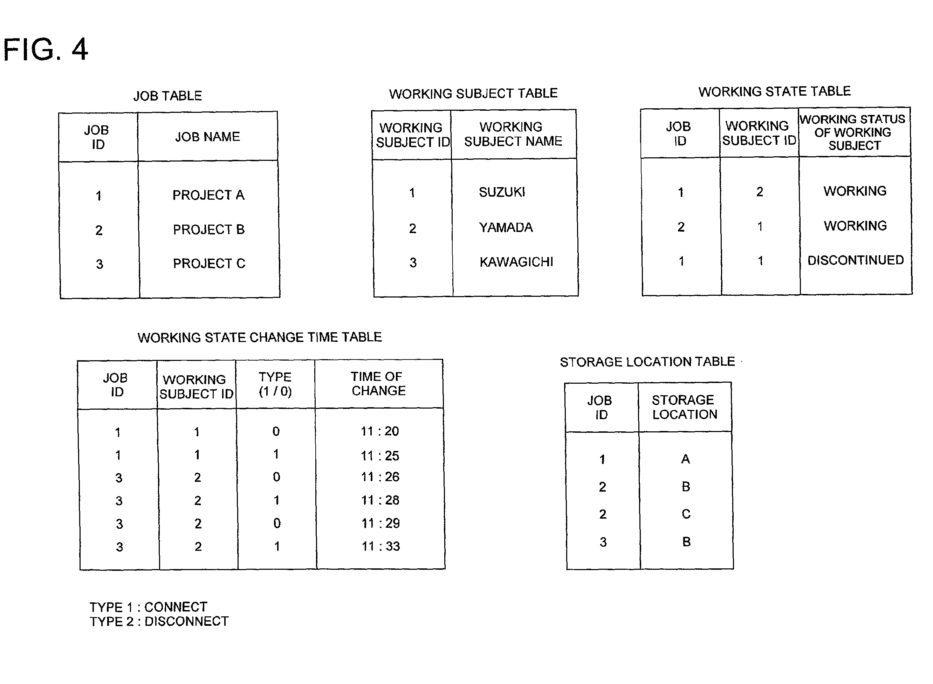

Fig. 4 is a drawing representing an example of the configuration of a database according to the present invention.

In Fig. 4, the database comprises;
a job table comprising a job ID and job name,
a working subject table further comprising a working subject ID and working subject name,
a storage position table further comprising job ID and job storage location,
a working state table consisting of the working state of the working subject associated with the working subject ID and job ID, and
a working state change time table consisting of the working state change time associated with the job ID and working subject ID.

When the working state of the working subject is to be identified, use of a database having such a configuration allows the working state to be identified by accessing this database.

The database which allows the aforementioned factors to be recorded whenever necessary can be used as the database mentioned above. For example, such a recording medium as hard disk can be used, but the database according to the present embodiment is not restricted thereto.

When the job to be administered or working subject are registered in the job table and working subject table, IDs corresponding to the job or working subject at a one-to-one ratio are issued and are recorded in such a way that the job name can be identified from the job ID and the working subject name can be identified from the working subject ID.

The storage location of the job to be administered together with the job ID is recorded in the storage location table in such a way that, when connection is started, the storage location for the job can be obtained from the job ID by the work administration program to be described below.

The working state and working state change time are recorded as appropriate in the working state table and working state change time table by the working state administration program to be described below, wherein the aforementioned working state is associated with the working subject ID for administration of the working state or working time and with the job ID.

The following describes the aforementioned working state administration program:
Such a working state administration program functions as part of the front-end application software program according to the present invention.

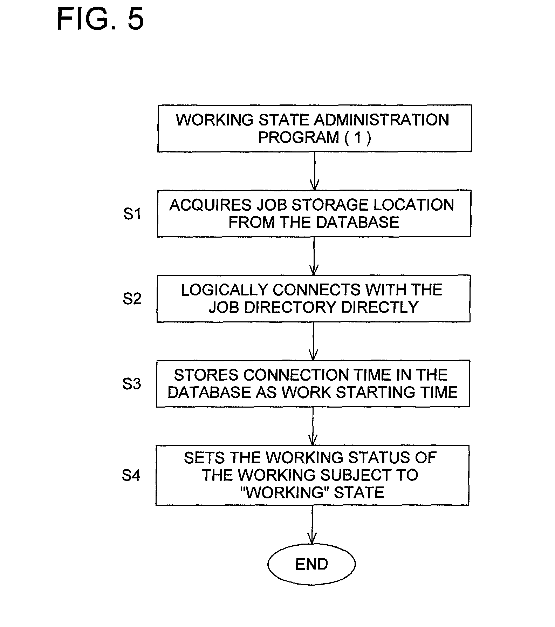

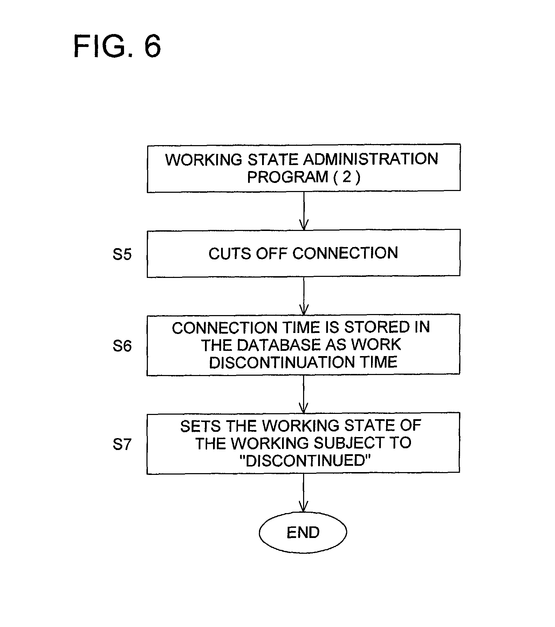

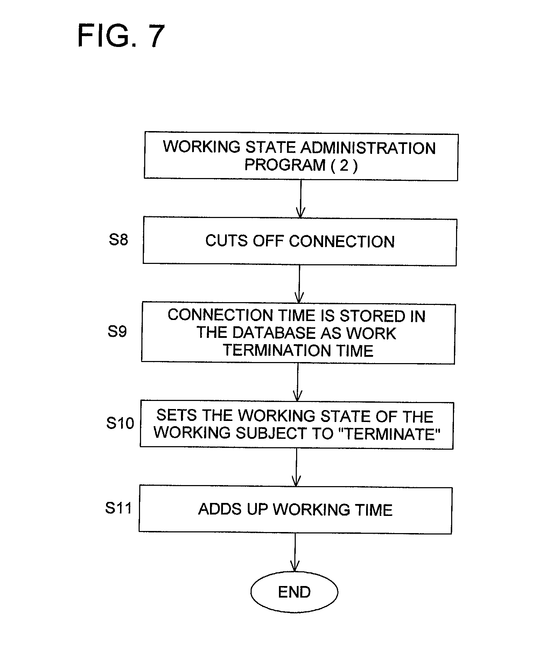

Fig. 5 is a flow chart for working state administration program (1) to be started in response to the request for connection under the work starting instruction. Fig. 6 is a flow chart for the working state administration program (2) to be started in response to the requirements for disconnection under DISCONTINUE instruction. Fig. 7 is a flow chart for the working state administration program (3) to be started in response to the requirements for disconnection under TERMINATE instruction.

When the client user 12a as a working subject having received a work instruction has requested connection under the work start instruction for the job directory 21a (See Fig. 2), the working state administration program (1) shown in Fig. 5 is started and the database is accessed. Then the information at the job storage location is obtained (S1). Based on the obtained information of the storage location, a logically direct connection is established between the working directory 30a as a connection point provided in response to client user 12a and job directory 21a, as shown in Fig. 2 (S2). The time of connection in S2 is stored in the database (S3) as a work starting time for client user 12a. At the same time, the working state of the client user 12a is set to "Working" (S4), whereby the operation terminates.

Then the working state administration program (2) shown in Fig. 6 will start when there is a request for connection under the DISCONTINUE instruction in order that the working subject stops the work. Connection is then cut off (S5), and the disconnection time of S5 is stored in the database as a work discontinuation time (S6). The working state of the working subject is set to "Discontinued" ("Not Working") (S7), whereby the operation terminates.

If there is a request for connection under the "TERMINATE instruction in order that the working subject terminates the work, the working state administration program (3) starts as shown in Fig. 7, and connection is cut off (S8). The disconnection time of S is stored in the database as work termination time (S9), and the working state of the working subject is set to "Work Terminated" (or "Not Working") (S10). Then working time is added up from the work starting time, work discontinuation time and work termination time certified in S3, S6 and S9 (S11). This added time is set as the total working time of the client user 12a as a working subject.

As described above, when the working subject is changed to the connected state under the work start instruction for the job directory 21a by the working subject, the working state of the working subject is recorded as "Working" in the aforementioned database. When the aforementioned connection is cut off under the instruction of the work by the aforementioned working subject, the working state of the working subject is recorded as "Discontinued" in the aforementioned database. When the aforementioned connection state is cut off under the work termination instruction by the aforementioned working subject, the working state of the working subject is recorded as "Terminated" in the aforementioned database. This allows the working state to be administered merely by accessing the database in such a way as to show whether the client user as a working subject is in the "Working", "Discontinued" or "Terminated" state.

The cumulative working time can be calculated as follows: When the database is in the state shown in Fig. 4 for example, the working time for the job having the job ID of "1" is five minutes from 11:20 to 11:25 in the case of the working subject having the working subject ID of "1". The working time for the job having the job ID of "3" is two minutes from 11:26 to 11:28 plus four minutes from 11:29 to 11:33 -- a total of six minutes in the case of the working subject having the working subject ID of "2". The working time obtained from this calculation can also recorded in the database.

As described above, the time when the working subject starts connection with the job directory 21a is recorded in the database as work starting time; the time of cutting off the connection under the "Discontinued" instruction is recorded in the database as work discontinuation time; and the time when the connection is cut off under the termination instruction is recorded in the database as work termination time. The time when this working state is changed is used to calculate the working time for this job regarding the working subject, and this working time is stored in the database, whereby the working time of the working subject can be administered.

As described above, various types of information is stored in the database in real time. This allows the working state of the working subject in real time to be administered by accessing the database and ascertaining the working state of the working subject.

In the same way, if connection state of client user 12b is as shown in Fig. 3, then the job directory 21b can be determined as being in a working state. If it is disconnected as shown in Fig. 2, the state can be evaluated as being "Not Working", whereby it is possible to determine whether client user 12b is working or not.

If the working subject table representing the working subject name and working subject ID in the aforementioned embodiment consists of the working subject ID associated with the working subject name and client terminal, then the same working subject can be administered separately for each client terminal.

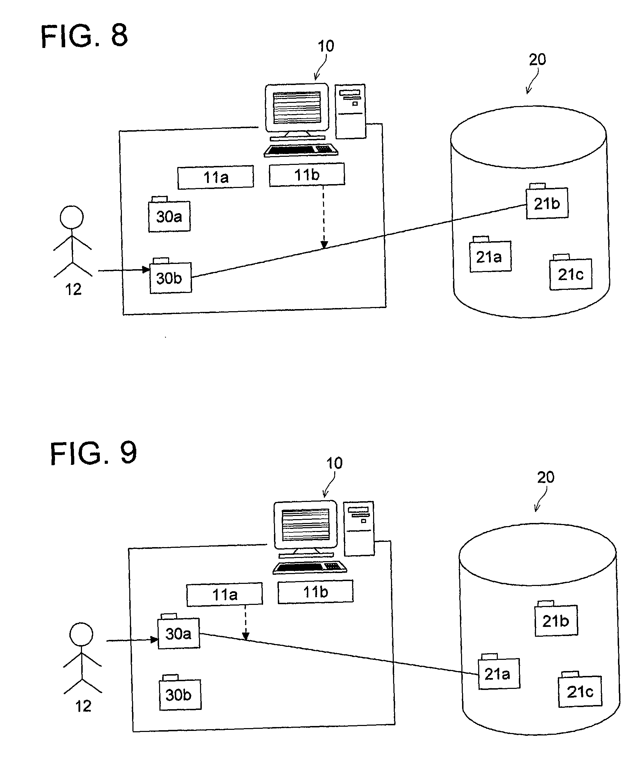

Figs. 8 and 9 are illustrations representing a second embodiment of the working state and job state administration system according to the present invention. In Figs. 8 and 9, the same reference numerals with those of Fig. 2 denote the same configurations.

According to the present embodiment, the working state is administered for each front-end application software. A working directory is provided in conformity to the front-end application software as a working subject and the job directory as a working object.

In the state shown in Fig. 8, connection by the front-end application software 11a is not yet established, the working state of the front-end application software 11a is evaluated as "Not Working" ("Discontinued" or "Terminated"), This is stored in the database.

The client user 12 uses the front-end application software 11b to make a direct connection between the working directory 30b usable only in the state of connection by the front-end application software 11b and the job directory 21b for storing job-related files, whereby the front-end application software 11b is placed in the connection state, with the result that the working state of the front-end application software 11b for the job directory 21b is stored in the database as "Working".

In the state shown in Fig. 9 on the other hand, the client user 12 uses the front end application software 11a to makes a direct connection between the working directory 30a usable only in the state of connection by the front-end application software 11a and the job directory 21a for storing the job-related files, whereby the front-end application software 11a is placed in the state of connection, with the result that the working state for the job directory 21a is evaluated as "Working" and is stored in the database. In this case, connection by the front-end application software 11b is not yet established. The working state of the front-end application software 11a is evaluated as "Not Working" ("Discontinued" or "Terminated"), and the result is stored in the database.

As described above, the working state is determined for each front-end application software, and is stored in the database, whereby the working state for each front-end can be administered.

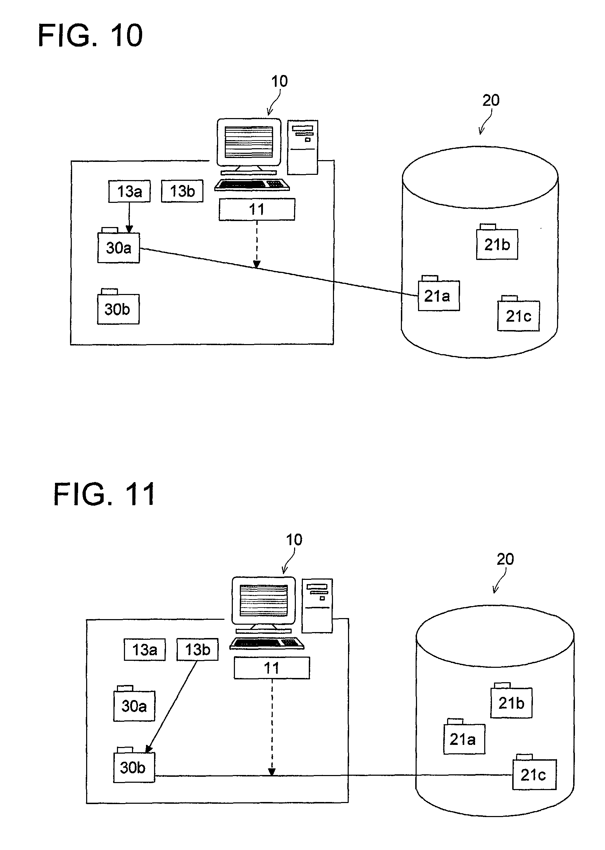

Figs. 10 and 11 are illustrations representing a second and third embodiments of the working state administration system according to the present invention. In Figs. 10 and 11, the same reference numerals with those of Fig. 2 denote the same configurations, and their detailed description will be omitted.

According to the present embodiment, the working state is administered for each external client application software. A working directory is provided in conformity to the external client application software as a working subject and the job directory as a working object.

In the state shown in Fig. 10, external client application software 13a uses the front-end application software 11b to make a direct connection between the working directory 30a usable only to the external client application software and the job directory 21a, whereby the working state for the job directory 21a is stored in the database as "Working".

Since the external client application software 13b is not connected, the working state of the external client application software 13b is stored in the database as "Not Working" ("Discontinued" or "Terminated").

In the state shown in Fig. 11, on the other hand, the external client application software 13a is not connected; therefore, the working state of the external client application software 13a is stored in the database as "Not Working" ("Discontinued" or "Terminated").

The external client application software 13b uses the front-end application software 11b to make a direct connection between the working directory 30b usable only to the external client application software 13b and the job directory 21c, whereby the working state for the job directory 21c is stored in the database as "Working".

As described above, the working state is determined for each external client application software, and is stored in the database. This allows the working state to be administered for each package of external client application software.

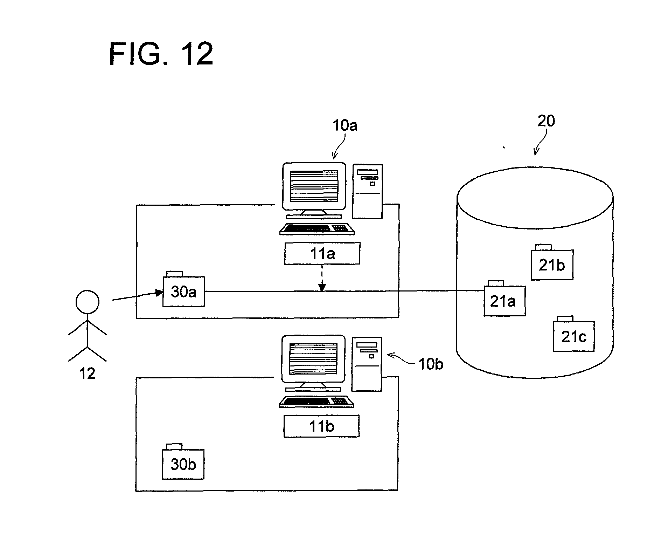

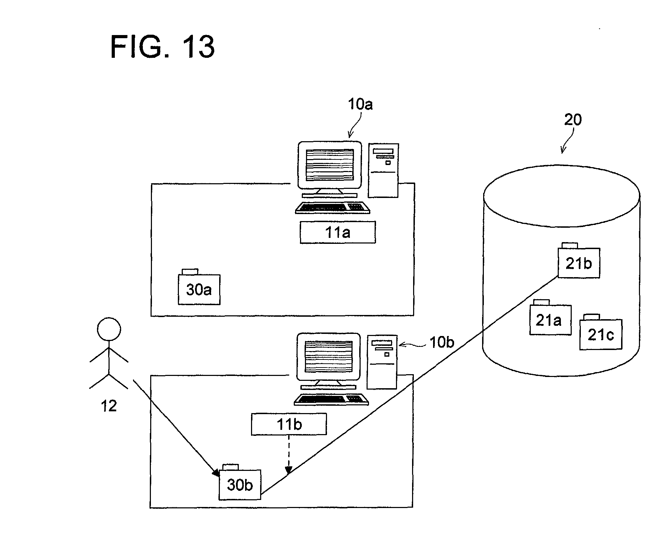

Figs. 12 and 13 are illustrations representing a fourth embodiment of the working state administration system according to the present invention. In Figs. 12 and 13, the same reference numerals with those of Fig. 2 denote the same configurations, and their detailed description will be omitted.

According to the present embodiment, the working state is administered for each client terminal. A working directory is provided in conformity to the client terminal as a working subject and the job directory as a working object.

In the state shown in Fig. 12, the client end user 12 uses the front-end application software installed on the client terminal 10a to make a direct connection between the working directory 30a usable only in the state of connection by the front-end application software 11a and the job directory 21a for storing the job-related files, whereby the client terminal 10a is placed in the connected state, with the result that the working state of the client terminal 10a for the job directory 21a is stored in the database as "Working".

The client terminal 10b is not connected with the job directory 21b; therefore, the working state of the client terminal 10b for the job directory 21b is stored in the database as "Not Working" ("Discontinued" or "Terminated").

In the state shown in Fig. 13, on the other hand, the client terminal 10a is not connected with the job directory 21a; therefore, the working state of the client terminal 10a for the job directory 21a is stored in the database as "Not Working" ("Discontinued" or "Terminated").

The client user 12 uses the front-end application software 11b installed on the client terminal 10b to make a direct connection between the working directory 30b and the job directory 21b for storing job-related files whereby the client terminal 10b is placed in the connected state, with the result that the working state of the client terminal 10b for the job directory 21b is stored in the database as "Working".

As described above, the working state is determined for each client terminal, and is stored in the database. This allows the working state to be administered for each client terminal.

The following describes the details of the job state administration system according to the present invention:
The following describes the first embodiment of the job state administration system: This embodiment can be explained with reference to Figs. 2 and 3 which were used to describe the first embodiment of the working state administration system according to the present invention.

The job state administration system according to the present invention is different from the technological concept with attention focused on the working state of the working subject in the previously described working state administration system in the present invention. It is an embodiment of the technological concept with attention focused on the working state of the job for the relevant job.

The configuration of the embodiment given in Figs. 2 and 3 has already been explained in the first embodiment of the working state administration system in the present invention. So description of hardware will be omitted.

Fig. 2 shows the connection state when only the client user 12a is working with respect to the job directory 21a, while Fig. 3 indicates the connection state when only the client user 12b is working with respect to the job directory 21b.

In Fig. 2, in order to work with respect to the job directory 21a, the client user 12a uses the front-end application software 11 to make a logically direct connection between the working directory 30a only to the client user 12a and the job directory 21a, whereby the client user 12a is connected with the job directory 21a. In this case, the client user 12b is not connected.

In Fig. 3, on the other hand, in order to perform the work for the job directory 21b, the client user 12b uses the front-end application software 11 make a logically direct connection between the work directory 30b as a connection point usable only to the client user 12b and job directory 21b, whereby the client user 12b is connected with the relevant job directory 21b. In this case, the client user 12b is not connected. The job directory 21a which was connected with client user 12a as a connection state in Fig. 2 is not connected.

As described above, the working subject is connected with the job directory containing the working object job only during the work, but is not connected when work is not performed. This allows the working state of the working subject to be determined virtually through administration of connection state of the working subject, and permits the working state of this job to be administered according to this working state.

When the working state in the present invention is administered, it is preferred to use the database recording the working state of the job. The following describes the database which can be used to administer the working state of the job:

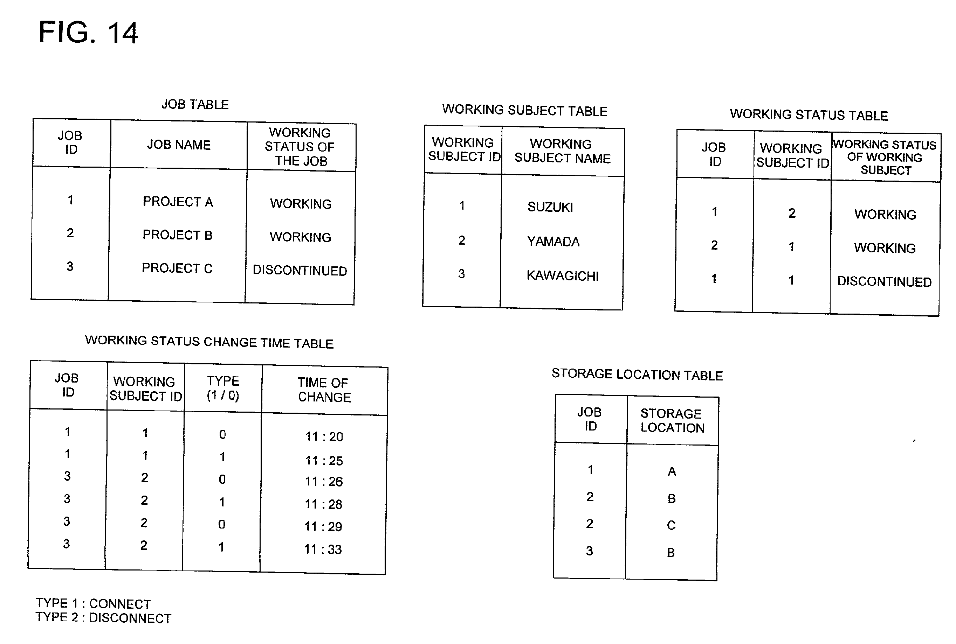

Fig. 14 is a drawing representing another example of the configuration of a database according to the present invention.

The database shown in Fig. 14 has the same basic configuration as that given in Fig. 4, but is different from the database used in the working state administration system in that the job table contains the work working state in the job state administration system according to the present invention.

When the working state for a job is to be identified, use of a database having such a configuration allows the working state of the job to be identified by accessing this database.

The database which allows the aforementioned factors to be recorded whenever necessary can be used as the database mentioned above. For example, such a recording medium as hard disk can be used, but the database according to the present embodiment is not restricted thereto.

When the job to be administered or working subject are registered in the job table and working subject table, IDs corresponding to the job or working subject at a one-to-one ratio are issued and are recorded in such a way that the job name can be identified from the job ID and the working subject name can be identified from the working subject ID.

The storage location of the job to be administered together with the job ID is recorded in the storage location table in such a way that when connection is started, the storage location for the job can be obtained from the job ID by the work administration program to be described below.

The working state and working state change time are recorded as appropriate in the working state table and working state change time table by the working state administration program to be described below, wherein the aforementioned working state is associated with the working subject ID for administration of the working state or working time and with the job ID.

The same program as the working state administration program (Figs. 5 to 7) used in the aforementioned working state administration system can be used as the job state administration program. Accordingly, programs shown in Figs. 5 to 7 should be read as job state administration programs, and the detailed description will be omitted.

In the job state administration system according to the present invention as described above, if the work state of the working subject is evaluated as "Working" in the working state table, then the working state of the job is also recorded in the database as "Working". This makes it possible to understand that the job is "Working". If the working state of the working subject is evaluated as "Discontinued", the working state of the job is also recorded in the database as "Discontinued". This makes it possible to understand that the job is "Discontinued". If the working state of the working subject is evaluated as "Terminated", the working state of the job is "Terminated".

Further, the cumulative working time can be calculated as follows: When the database is in the state shown in Fig. 5 for example, the working time for the job having a working subject job ID of "1" is five minutes from 11:20 to 11:25. The working time for the job having the working subject job ID of "3" is two minutes from 11:26 to 11:28 plus four minutes from 11:29 to 11:33 -- a total of six minutes. The working time obtained from this calculation can also recorded in the database.

As described above, the time when the working subject starts connection with the job directory 21a is recorded in the database as work starting time; the time of cutting off the connection under the "Discontinued" instruction is recorded in the database as work discontinuation time; and the time when the connection is cut off under the termination instruction is recorded in the database as work termination time. The time when this working state is changed is used to calculate the working time for this job, and this working time is stored in the database, whereby the working time for the job can be administered.

As described above, various types of information is stored in the database in real time. This allows the working state of the job in real time to be administered by accessing the database and ascertaining the working state of the job.

The following describes the second embodiment of the job state administration system according to the present invention. This embodiment can be explained with reference to Figs. 8 and 9 which were used to describe the second embodiment of the working state administration system according to the present invention.

The present embodiment provides job administration by determining the working state for each front-end application software. A working directory is provided in conformity to the front-end application software as a working subject and the job directory as a working object.

In the state shown in Fig. 8, connection by the front-end application software 11a is not yet established. The working state of the front-end application software 11a is evaluated as "Not Working" ("Discontinued" or "Terminated"), which is stored in the database.

The client user 12 uses the front-end application software 11b to make a direct connection between the working directory 30b usable only in the state of connection by the front-end application software 11b and the job directory 21b for storing the job-related files, whereby the front-end application software 11b is placed in the state of connection, with the result that the working state of the front-end application software 11b for the job directory 21b is evaluated as "Working" and is stored in the database. Thus, the working state of the job is stored in the database as "Working".

In the state shown in Fig. 9, on the other hand, the client user 12 uses the front-end application software 11a to make a direct connection between the working directory 30a usable only in the state of connection by the front-end application software 11a and the job directory 21a for storing the job-related files, whereby the front-end application software 11a is placed in the state of connection, with the result that the working state for the job directory 21a is evaluated as "Working" and is stored in the database. Thus, the working state of the job is stored in the database as "Working".

In this case, connection by the front-end application software 11b is not yet established. The working state of the front-end application software 11a is evaluated as "Not Working" ("Discontinued" or "Terminated"), which is stored in the database.

As described above, the working state is determined for each front-end application software and the working state is administered, with the result that the working state for the job can be administered while the working state is grasped for each front-end application software.

The following describes the third embodiment of the job state administration system according to the present invention. This embodiment can be explained with reference to Figs. 10 and 11 which were used to describe the third embodiment of the working state administration system according to the present invention.

The present embodiment provides job state administration by determining the working state for each external client application software. A working directory is provided in conformity to the external client application software as a working subject and the job directory as a working object.

In the state shown in Fig. 10, the external client application software 13a uses the front-end application software to make a direct connection between the working directory 30a usable to the external client application software 13a and the job directory 21a, whereby the working state for the job directory 21a is stored in the database as "Working". Thus, the working state of the job is recorded in the database as "Working".

The external client application software 13b is not connected, so the working state of the external client application software 13b is recorded in the database as "Not Working" ("Discontinued" or "Terminated"). Thus, the working state of the job is recorded in the database as "Not Working" ("Discontinued" or "Terminated").

In the state shown in Fig. 11, on the other hand, the external client application software 13a is not connected; therefore, the working state of the external client application software 13a is stored in the database as "Not Working" ("Discontinued" or "Terminated").

The external client application software 13b uses the front-end application software to make a direct connection between the working directory 30b usable only to the external client application software 13b and the job directory 21c, with the result that the working state for the job directory 21c is stored in the database as "Working".

As described above, the working state is determined for each external client application software, and is stored in the database. This allows the working state to be administered for each external client application software.

The following describes the fourth embodiment of the job state administration system according to the present invention. This embodiment can be explained with reference to Figs. 12 and 13 which were used to describe the fourth embodiment of the working state administration system according to the present invention.

The present embodiment provides job state administration by determining the working state for each client terminal. A working directory is provided in conformity to the client terminal as a working subject and the job directory as a working object.

In the state shown in Fig. 12, the client user 12 uses the front-end application software 11a installed on the client terminal 10a to make a direct connection between the working directory 30a usable only in the state of connection by the client terminal 10a and the job directory 21a, whereby the client terminal 10a is placed in the state of connection. Thus, the working state of the client terminal 10a for the job directory 21a is evaluated as "Working" and is stored in the database, with the result that the working state of the job is stored in the database as "Working".

The client terminal 10b is not connected with the job directory 21b. Thus, the working state of the client terminal 10b for the job directory 21b is stored in the database as "Not Working" ("Discontinued" or "Terminated"), with the result that the working state of the job is stored in the database as "Not Working" ("Discontinued" or "Terminated").

In the state shown in Fig. 13, on the other hand, the client terminal 10a is not connected. Thus, the working state of the client terminal 10a for the job directory 21a is stored in the database as "Not Working" ("Discontinued" or "Terminated"), with the result that the working state of the job is stored in the database as "Not Working" ("Discontinued" or "Terminated").

The client user 12 uses the front-end application software 11b installed on the client terminal 10b to make a direct connection between the working directory 30b usable only in the state of connection by the client terminal 10b and the job directory 21b storing job-related files, whereby the client terminal 10b is placed in the state of connection. Thus, the working state of the client terminal 10b for the job directory 21b is evaluated as "Working" and is stored in the database, with the result that the working state of the job is stored in the database as "Working".

As described above, the working state is determined for each client terminal, and is stored in the database. This allows the working state to be administered for each client terminal.

The job state administration system is a group consisting of working subjects comprising multiple client users, front-end application software, external client application software, client terminal and others. The job state can be administered also in the group work sharing the load of the work for the relevant job in a group, so the following describes the job state administration system in the case of such a group work:

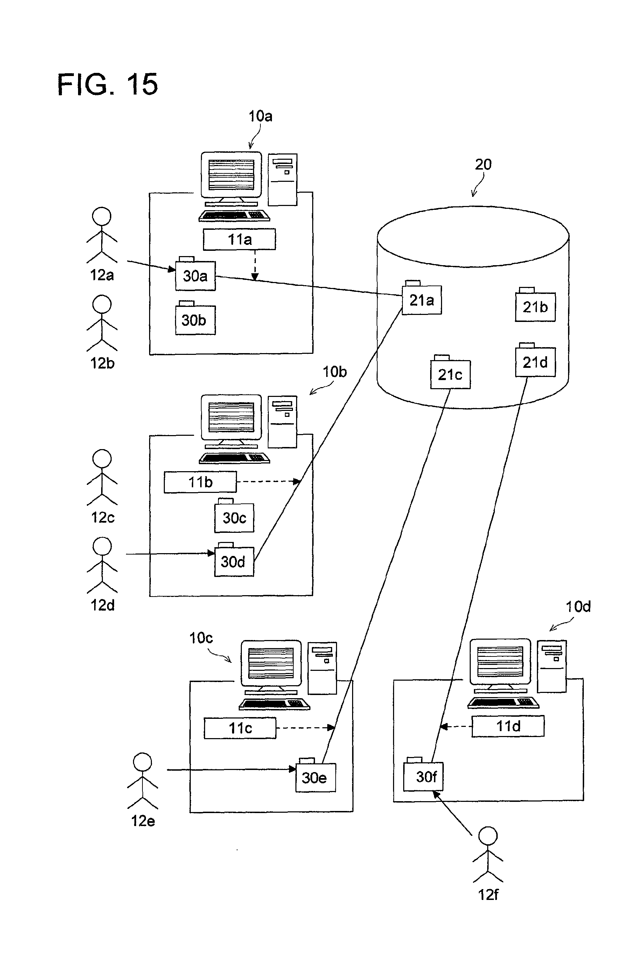

Fig. 15 is a drawing illustrating the job state administration system in the work of the group consisting of the working subjects made up of multiple client users;
The same reference numerals with those of Fig. 2 denote the same configurations, and their detailed description will be omitted.

The following describes the present embodiment on the assumption that a group consisting of client users 12a, 12b, 12c and 12d is set for the job stored in the job directory 21a, and a group comprising client users 12e and 12f is set for the job stored in the job directory 21b. Further, a group comprising client users 12e and 12f is set for the job stored in the job directory 21c, and a group comprising client users 12e and 12f is set for the job stored in the job directory 21d. However, the group setting for the job is not restricted thereto.

In Fig. 15, the job directory 21a is connected with the client users 12a and 12d, so client users 12a and 12d are evaluated as "Working" with respect to the job stored in the job directory 21a, and are stored in the database, with the result that the working state of the job stored in the job directory 21a is stored in the database as "Working".

In the job state administration system according to the present invention, if the working state of at least one client user as a working subject in the group corresponding to the job to be administered is "Working", then the working state of this job is recorded in the database as "Working". This shows that the working state of the job in the group work is "Working" when a group is composed of client users.

Further, the job directory 21b is not connected with the client users 12e and 12f constituting a corresponding work group. Accordingly, the working state for client user 12e is stored as "Discontinued" in the database. When the working state for the client user 12f is stored in the database as "Terminated", then the working state of the job stored in the job directory 21b is recorded as "Discontinued" in the database. If the working states of both client users 12e and 12f are stored in the database as "Terminated", the working state of the job stored in the job directory 21b is recorded as "Terminated" in the database.

If the working state of at least one client user as a working subject in the group corresponding to the job to be administered is "Discontinued", and there is no working subject whose working state is "Working", then the working state of this job is recorded as "Discontinued" in the database. This shows that the working state of the job in the group work is "Discontinued" when a group is composed of client users.

If the working state of client users as all working subjects in the group corresponding to the job to be administered is "Terminated", the working state of this job is recorded as "Terminated" in the database. This shows that the working state of the job in the group work is "Terminated" when a group is composed of client users.

The job directories 21c and 21d are connected with client users 12e and 12f respectively, so the working state of each of client users 12e and 12f is recorded as "Working" in the database. Accordingly, the working state of the job stored in the job directories 21c and 21d is recorded as "Working" in the database.

As described above, the working state for the job is determined depending on whether the job directory and one or more client users are connected or not, and the working state of the job is recorded in the database in conformity to the determined working state. This makes it possible to administer the working state of the job when a group consists of client users.

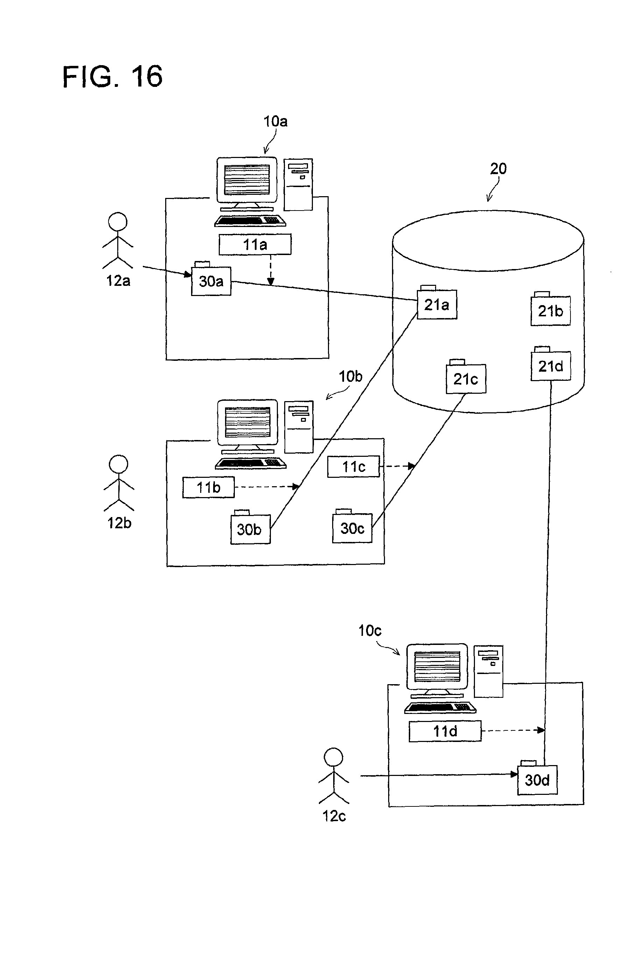

Fig. 16 is a drawing illustrating the job state administration system in the work of the group consisting of the working subjects made up of multiple front-end application softwares.

The same reference numerals with those of Fig. 2 denote the same configurations, and their detailed description will be omitted.

The present embodiment will be described based on the following assumption: A group comprising front-end application softwares 11a and 11b is set for the job stored in the job directory 21a; a group comprising front-end application softwares 11c and 11c is set for the job stored in the job directory 21b; a group comprising front-end application softwares 11c and 11d is set for the job stored in the job directory 21c; and a group comprising front-end application softwares 11c and 11d is set for the job stored in the job directory 21d. However, setting of the group for a job is not restricted thereto.

In Fig. 16, the job directory 21a is connected with the front-end application softwares 11a and 11b, so the front-end application softwares 11a and 11b is evaluated as "Working" with respect to the job stored in job directory 21a and is stored in the database. Thus, the working state for the job stored in job directory 21a is stored in the database as "Working".

In the job state administration system according to the present invention, if the working state of at least one front-end application software as a working subject in the group corresponding to the job to be administered is "Working", then the working state of this job is recorded in the database as "Working". This shows that the working state of the job in the group work is "Working" when a group is composed of front-end application softwares.

Further, the job directory 21b is not connected with the front-end application softwares 12c and 12d constituting a corresponding work group. Accordingly, the working state for front-end application software 11c is stored as "Discontinued" in the database. When the working state for front-end application software 11d is stored in the database as "Terminated", then the working state of the job stored in the job directory 21b is recorded as "Discontinued" in the database. If the working states of both front-end application softwares 11c and 11d are stored in the database as "Terminated", the working state of the job stored in the job directory 21b is recorded as "Terminated" in the database.

If the working state of at least one front-end application software as a working subject in the group corresponding to the job to be administered is "Discontinued", and there is no working subject whose working state is "Working", then the working state of this job is recorded as "Discontinued" in the database. This shows that the working state of the job in the group work is "Discontinued" when a group is composed of front-end application softwares.

If the working state of front-end application softwares as all working subjects in the group corresponding to the job to be administered is "Terminated", the working state of this job is recorded as "Terminated" in the database. This shows that the working state of the job in the group work is "Terminated" when a group is composed of front-end application softwares.

The job directories 21c and 21d are connected with front-end application softwares 11c and 11d respectively, so the working state of each of front-end application softwares 11c and 11d is recorded as "Working" in the database. Accordingly, the working state of the job stored in the job directories 21c and 21d is recorded as "Working" in the database.

As described above, the working state for the job is determined depending on whether the job directory and one or more front-end application softwares are connected or not, and the working state of the job is recorded in the database in conformity to the determined working state. This makes it possible to administer the working state of the job when a group consists of front-end application softwares.

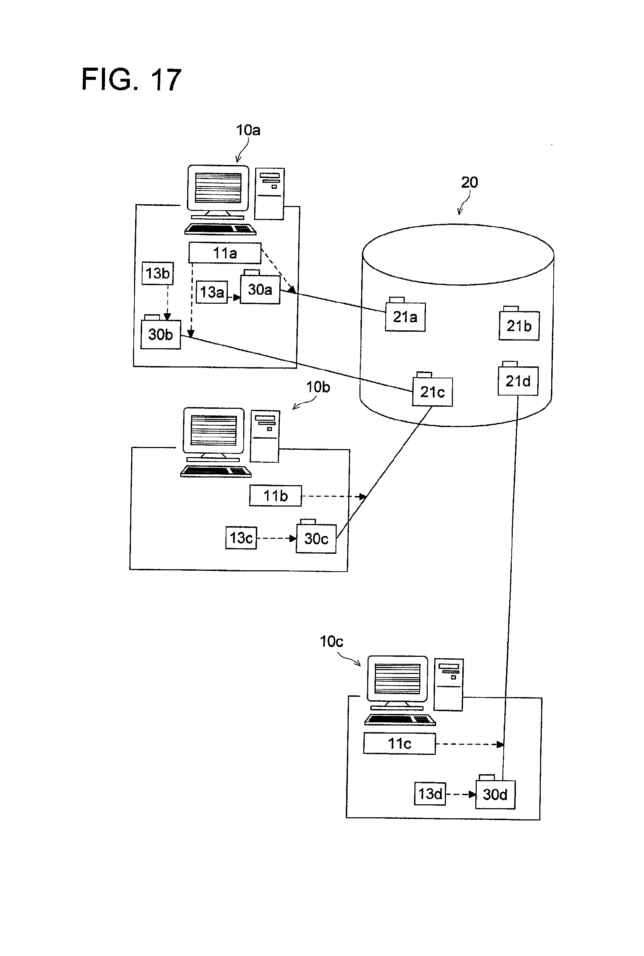

Fig. 17 is a drawing illustrating the job state administration system in the work of the group consisting of the working subjects made up of multiple packages of external client application software.

The same reference numerals with those of Fig. 2 denote the same configurations, and their detailed description will be omitted.

The present embodiment will be described based on the following assumption: A group comprising external client application software 13a and 13b is set for the job stored in the job directory 21a; a group comprising external client application software 13c and 13d is set for the job stored in the job directory 21b; a group comprising external client application software 13b and 13c is set for the job stored in the job directory 21c; and a group comprising external client application software 13c and 13d is set for the job stored in the job directory 21d. However, setting of the group for a job is not restricted thereto.

In Fig. 17, the job directory 21a is connected with the external client application software 13a, so the external client application software 13a is evaluated as "Working" with respect to the job stored in job directory 21a and is stored in the database. Thus, the working state for the job stored in job directory 21a is stored in the database as "Working".

In the job state administration system according to the present invention, if the working state of external client application software as at least one working subject in the group corresponding to the job to be administered is "Working", then the working state of this job is recorded in the database as "Working". This shows that the working state of the job in the group work is "Working" when a group is composed of external client application software.

Further, the job directory 21b is not connected with the external client application software 13c and 13d constituting a corresponding work group. Accordingly, the working state for external client application software 13c is stored as "Discontinued" in the database. When the working state for external client application software 13d is stored in the database as "Terminated", then the working state of the job stored in the job directory 21b is recorded as "Discontinued" in the database. If the working states of both external client application software 13c and 13d are stored in the database as "Terminated", the working state of the job stored in the job directory 21b is recorded as "Terminated" in the database.

If the working state of the external client application software as at least one working subject in the group corresponding to the job to be administered is "Discontinued", and there is no working subject whose working state is "Working", then the working state of this job is recorded as "Discontinued" in the database. This shows that the working state of the job in the group work is "Discontinued" when a group is composed of external client application software.

If the working state of external client application software as all working subjects in the groups corresponding to the job to be administered is "Terminated", the working state of this job is recorded as "Terminated" in the database. This shows that the working state of the job in the group work is "Terminated" when a group is composed of external client application software.

The job directories 21c and 21d are connected with external client application software 13b and 13c, and external client application software 13d respectively, so the working state of each of external client application software 13b and 13c, and external client application software 13d is recorded as "Working" in the database. Accordingly, the working state of the job stored in the job directories 21c and 21d is recorded as "Working" in the database.

As described above, the working state for the job is determined depending on whether the job directory and one or more packages of external client application software are connected or not, and the working state of the job is recorded in the database in conformity to the determined working state. This makes it possible to administer the working state of the job when a group consists of external client application software.

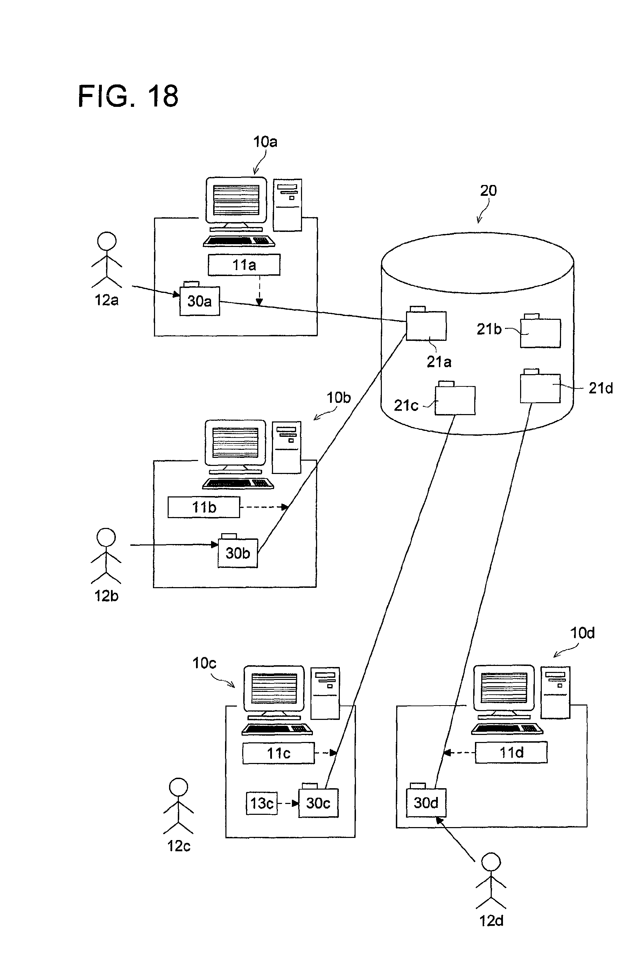

Fig. 18 is a drawing illustrating the job state administration system in the work of the group consisting of the working subjects made up of multiple client terminals;

The same reference numerals with those of Fig. 2 denote the same configurations, and their detailed description will be omitted.

The present embodiment will be described based on the following assumption: A group comprising the client terminals 10a and 10b is set for the job stored in the job directory 21a; a group comprising the client terminals 10c and 10d is set for the job stored in the job directory 21b; a group comprising the client terminals 10b and 10c is set for the job stored in the job directory 21c; and a group comprising the client terminals 10c and 10d is set for the job stored in the job directory 21d. However, setting of the group for a job is not restricted thereto.

In Fig. 18, the job directory 21a is connected with the client terminals 10a and 10b, so the client terminals 10a and 10b are evaluated as "Working" with respect to the job stored in the job directory 21a, and are stored in the database, with the result that the working state of the job stored in the job directory 21a is stored in the database as "Working".

In the job state administration system according to the present invention, if the working state of the client terminal as at least one working subject in the group corresponding to the job to be administered is "Working", then the working state of this job is recorded in the database as "Working". This shows that the working state of the job in the group work is "Working" when a group is composed of client terminals.

Further, the job directory 21b is not connected with client terminals 10c and 10d constituting a corresponding work group. Accordingly, the working state for client terminal 10c is stored as "Discontinued" in the database. When the working state for client terminal 10d is stored in the database as "Terminated", then the working state of the job stored in the job directory 21b is recorded as "Discontinued" in the database. If the working states of both client terminals 10c and 10d are stored in the database as "Terminated", the working state of the job stored in the job directory 21b is recorded as "Terminated" in the database.

If the working state of the client terminal as at least one working subject in the group corresponding to the job to be administered is "Discontinued", and there is no working subject whose working state is "Working", then the working state of this job is recorded as "Discontinued" in the database. This shows that the working state of the job in the group work is "Discontinued" when a group is composed of client terminals.

If the working state of client terminals as all working subjects in the group corresponding to the job to be administered is "Terminated", the working state of this job is recorded as "Terminated" in the database. This shows that the working state of the job in the group work is "Terminated" when a group is composed of client terminals.

The job directories 21c and 21d are connected with client terminals 10c and 10d respectively, so the working state of each of client terminals 10c and 10d is recorded as "Working" in the database. Accordingly, the working state of the job stored in the job directories 21c and 21d is recorded as "Working" in the database.

As described above, the working state for the job is determined depending on whether the job directory and one or more client terminals are connected or not, and the working state of the job is recorded in the database in conformity to the determined working state. This makes it possible to administer the working state of the job when a group consists of client terminals.

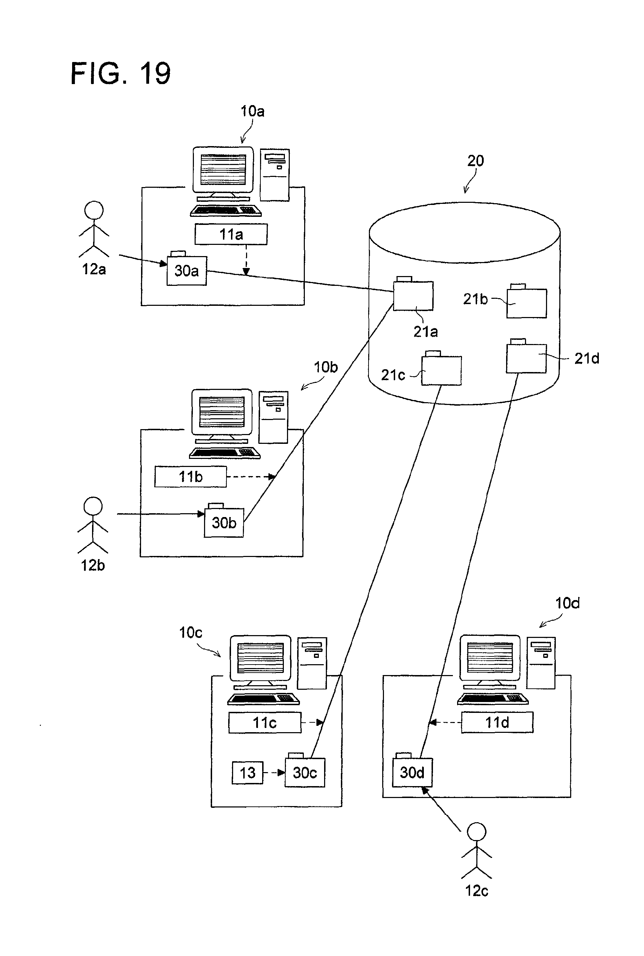

Fig. 19 is a drawing illustrating the job state administration system in the work of the group consisting of the working subjects made up of at least one of multiple client users, front-end application softwares, external client application software and client terminals.

The same reference numerals with those of Fig. 2 denote the same configurations, and their detailed description will be omitted. The present embodiment will be described based on the following assumption: A group comprising a client user 12a, front-end application software 11b, external client application software 13c and client terminal 10d is set for the jobs stored in the job directories 21a, 21b, 21c and 21d. However, setting of the group for a job is not restricted thereto.

In Fig. 19, the job directory 21a is connected with the client user 12a and front-end application software 11b, so the client user 12b front-end application software 11b are evaluated as "Working" with respect to the job stored in job directory 21a and is stored in the database. Thus, the working state for the job stored in job directory 21a is stored in the database as "Working".

In the job state administration system according to the present invention, if the working state of at least one of the client user, front-end application software, external client application software and client terminal as at least one working subject in the group corresponding to the job to be administered is "Working", then the working state of this job is recorded in the database as "Working". This shows that the working state of the job in the group work is "Working" when a group is composed of the client user, front-end application software, external client application software and client terminal.

Further, the job directory 21b is not connected with the client user 12a, front-end application software 11b, external client application software 13c and client terminal 10d constituting a corresponding work group. Accordingly, the working state is stored as "Discontinued" in the database. When the working state for the front-end application software 11b, external client application software 13c and client terminal 10d is stored in the database as "Terminated", then the working state of the job stored in the job directory 21b is recorded as "Discontinued" in the database. If the working states of all the client user 12a, front-end application software 11b, external client application software 13c and client terminal 10d are stored in the database as "Terminated", the working state of the job stored in the job directory 21b is recorded as "Terminated" in the database.

If the working state of at least one of the client user, front-end application software, external client application software and client terminal as at least one working subject in the group corresponding to the job to be administered is "Discontinued", then the working state of this job is recorded in the database as "Discontinued". This shows that the working state of the job in the group work is "Discontinued" when a group is composed of the client user, front-end application software, external client application software and client terminal.

If the working state of at least one of the client user, front-end application software, external client application software and client terminal as at least one working subject in the group corresponding to the job to be administered is "Terminated", then the working state of this job is recorded in the database as "Terminated". This shows that the working state of the job in the group work is "Terminated" when a group is composed of the client user, front-end application software, external client application software and client terminal.

Job directories 21c and 21d are connected with the external client application software 13c and client terminal 10d respectively, so external client application software 13c and client terminal 10d are evaluated as "Working" and are stored in the database. Thus, the working state for the job stored in job directories 21c and 21d is stored in the database as "Working".

As described above, the working state for the job is determined depending on whether the job directory and one or more of at least one type of client users, front-end application softwares, external client application software packages and client terminals are connected or not. The working state of the job is recorded in the database in conformity to the determined working state. This makes it possible to administer the working state of the job when a group consists of at least one of the client user, front-end application software, external client application software and client terminal.

The aforementioned embodiments provide;
a data access method for identifying the job which the working subject is currently in contact with out of multiple jobs,
a working state administration system allowing a simple administration of the work progress with respect to the job,
a job state administration system permitting a simple administration of the progress of the job, and
a job administration system enabling a simple administration of the progress of the job in the work of the group comprising multiple clients.

The following describes the details of the working state administration system permitting administration in terms of actions according to the present invention (hereinafter referred to as "working state administration system permitting administration according to the present invention"

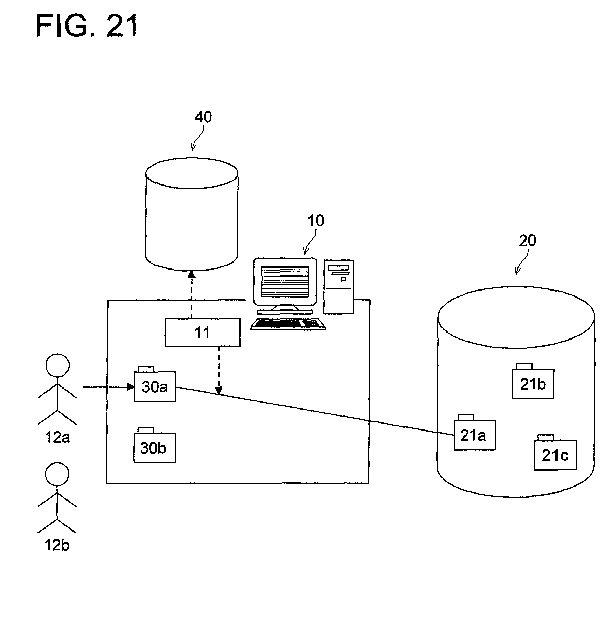

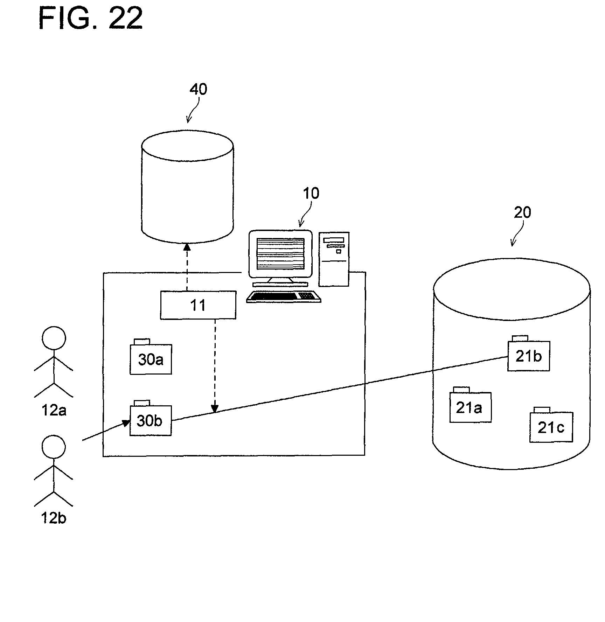

Figs. 21 and 22 are drawings illustrating the fifth embodiment of the working state administration system according to the present invention;

In this embodiment, the working state is administered for each client user, and a working directory is provided in conformity to the client user as a working subject and job directory as a working object.

In Figs. 21 and 22, numeral 10 denotes a client terminal, 11 indicates a front-end application software installed on the client terminal 10, and 12a and 12b show a client user for operating the client terminal 10. Numeral 20 denotes a recording medium or a file server containing a logical storage of job directories 21a, 21b and 21c storing the job data. Numerals 30a and 30b denote work directories corresponding to the client user 12a as a working subject and job directory 21a, and the client user 12b and job directory 21b, respectively. Numeral 40 denotes a database server recording the information on working subject.

A normal PC (hardware resource) can be used as the client terminal 10.

The front-end application software 11 is a program installed on the client terminal 10. Upon receipt of information specifying the action set on the job as an object for work from the working subject and the operation step for this action, a logically direct connection is established between working directories 30a and 30b corresponding to the working subject and job directories 21a, 21b and 21c. Subsequent to this direct connection, the job directory can be accessed from any external application software, independently of the type of external application software. Since the front-end application software is independent of the external application software as described above, it is possible to provide working state administration independent of the external application software.

Upon receipt of the information specifying the action set on the job as an object for work from the working subject and the operation step for this action, a logically direct connection is established between working directories, the front-end application software 11 records in the database server 40 the information on the working state of the working subject in response to the action set on the job.

A recording medium capable of reading and writing or a file server provided with such a recording medium can be used as a recording medium or file server 20. In this case, a hard disk, floppy disk, magneto-optical disk, CD-ROM, etc. can be used as a recording medium.

Job directories 21a, 21b and 21c store files on a series of related jobs, and are logically stored in a recording medium or file server 20. Each of job directories 21a, 21b and 21c can be stored logically in one recording medium, or can be present in an overlapped form across multiple recording mediums.

Working directories 30a and 30b are stored in such a recording medium as a hard disk in the client terminal 10, and serve as a connection point provided in response to the client user as a working subject. Such a connection point is unique to the working subject. These directories are so set that they can be accessed only by the corresponding working subject.

To ensure that these directories are accessible only to the working subjects corresponding to the working directories 30a and 30b, it is possible to use the method of authenticating access to the working directory; for example, a method of issuing a password for each working subject, whereby access to the working directory is authenticated by this password, or a method of using the directory protecting mechanism of the OS (operating system) wherein permission to read and write on the directory can be set separately for each of the owner of the directory, the group to which the owner belong and other users.

When setting is made to ensure that such a working directory can be accessed only by the corresponding working subject, then the state of connection of the aforementioned working directory will agree with that of the working subject, with the result that the connection state can be administered for each working subject.

The front-end application software 11 may be used to make a logically direct connection between the recording medium or file server 20 (each of job directories 21a, 21b and 21c) and client terminal 10 (working directories 30a and 30b) through the network of LAN, WAN or Internet, or a logically direct connection may be made between the two in the environment wherein such a control means as the CPU of the client terminal 10 will control the recording medium or file server 20 (each of job directories 21a, 21b and 21c).

The database server 40 comprises at least the database capable of recording such data as information on the working subject. Such recording media as hard disk, floppy disk, magneto-optical disk and CD-ROM can be used as the aforementioned database, but the database is not is not restricted to them.

In the present invention, the configuration of the database table of the database server 40 is important, and will be described below:

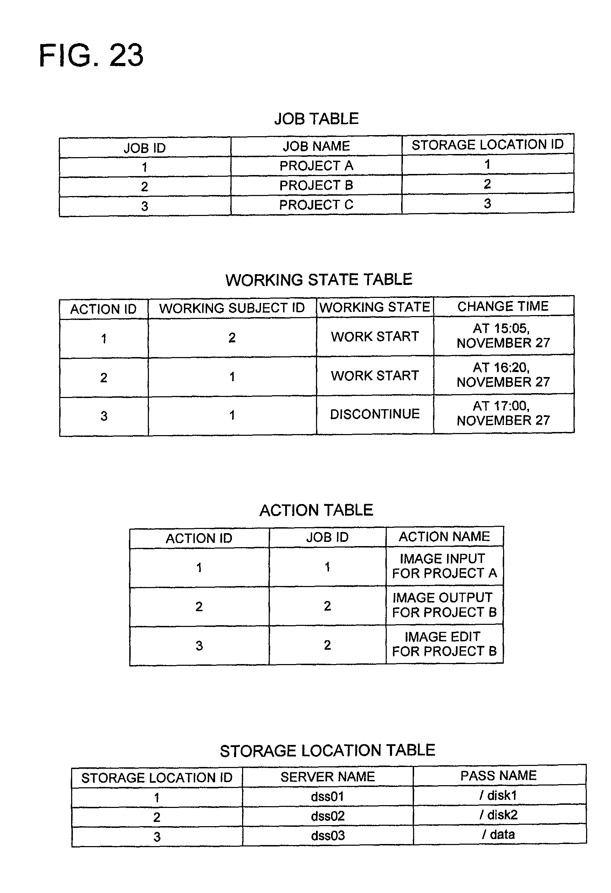

Fig. 23 is a drawing representing an example of the configuration of the table of the database server 49.

The table of the database server 40 consists of at least;
a job table which associates among the job ID, job name and storage location ID,
an action table associating among action ID, job ID and action name,
a storage location table associates among the storage location ID and storage location data, and
a working state table associating among working subject ID, action ID, working state in response to the action and the time of changing the working state.

The job ID corresponding to the job at a one-to-one ratio and the working subject ID corresponding to the working subject at a one-to-one ratio are issued by registration of the job to be administered or working subject.

The job ID is recorded in the job table with the storage location ID associated with each job.

Furthermore, each job allows an action to be set. If the action is set, the ID corresponding to it at a one-to-one ratio is issued, and is recorded in the action table associated with the action name and job ID to be set.

The storage location table retains a record of the storage location of the job to be administered together with the storage location ID. The front-end application software 11 can obtain the storage location of your job from the job table and storage location table when starting connection.

The working subject ID for administration of the working state in conformity to the instruction of the front-end application software 11 and the working subject ID and the working state associated with the action ID are recorded in the working state table as appropriate. At least any one of the first to third working states recorded as the aforementioned working state.

According to the present invention, the first working state denotes that the working subject is working. The second working state shows that the working subject has discontinued work. The third working state indicates that the working subject has terminated the work. In Fig. 23, the first working state is represented as "Work start", the second working state "Discontinued" and the third working state "Terminated". In the present specification, the first working state will be described "Work start", the second working state "Discontinued" and the third working state "Terminated", as required.

Such a table configuration allows the working subject to perform the work by giving to the front-end application software 11 only the information on the action as a working object and the operation step in response to this action. It also allows the operation step in response to the action to be administered merely by accessing the database server 40.

Further, a working state history table associating among the working subject ID, action ID, working state and the time of changing the working state is provided as the table for database server 40. The time of changing the working state is used to calculate the working time of the working subject in response to this action. The result of calculation is recorded in the working state table associated with the working subject ID and action ID. This allows the working time to be administered for each action of the working subject.

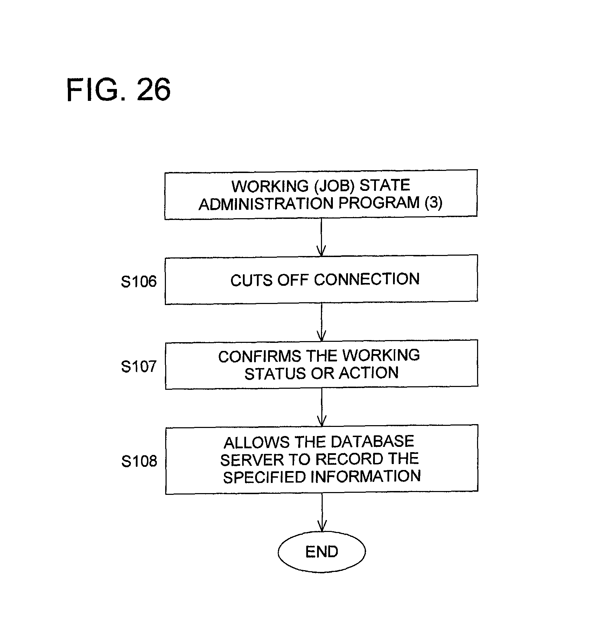

Figs. 21 and 26 will be used to explain the flow of processing in the first embodiment of the working state administration system according to the present invention.

In order to perform work in response to the action of "Image input for project A", the client user 12a as a working subject enters "Start the work of working subject" for the "Image input of project A" into the front-end application software as information specifying the action set on the job as an object of work and the operation step in response to this action.

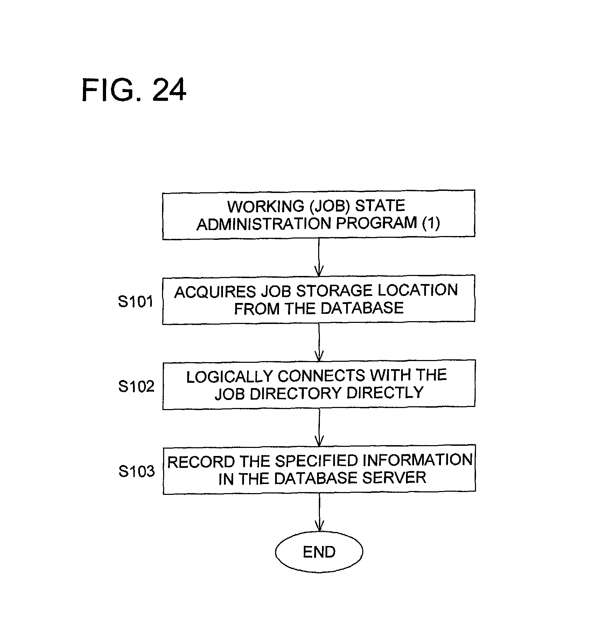

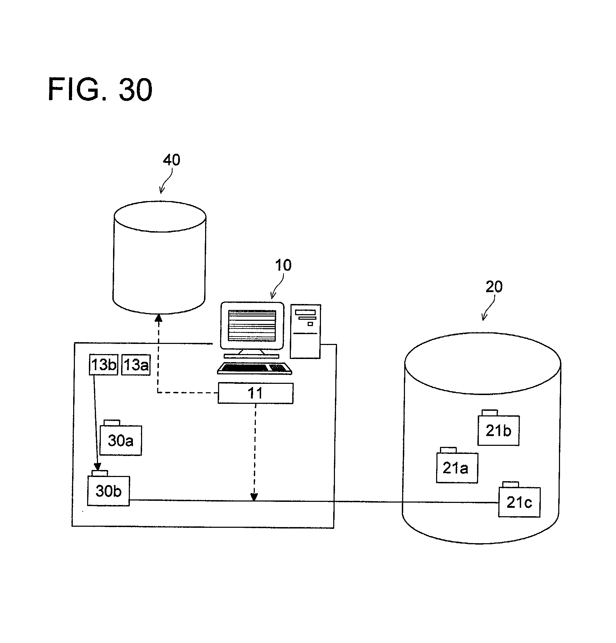

Upon receipt of the information of "Work start" for "Image input of project A" as information specifying the action set on the job as an object of work and the operation step in response to this action, the front-end application software 11 performs the process of acquiring the information on the storage location of the job "Project A" from the database shown in Fig. 23 in conformity to the flow of processing as shown in Fig. 24 (S101), wherein the "Image input of project A", an action as the object of work, is set on the aforementioned job "Project A". Then a logically direct connection is established between the job directory 21a storing the job and the aforementioned working directory 30a in conformity to the obtained information on the storage location, as shown in Fig. 30a (S102).

After creating an environment where work can be performed by establishing a logically direct connection between the working directory 30a usable only to the client user 12a and the job directory 21a, the front-end application software 11 performs the process of recording the "Work start" representing the first working state into the database server 40, as information on the working state of the working subject in response to the action set on the job (S103).

After a logically direct connection between the working directory 30a usable only to the client user 12a and the job directory 21a has been established as described above, the first working state is recorded in the database server 40. This method creates an environment ensuring a reliable performance of the work if the first working state is recorded. This improves system reliability in the sense that "the first working state" means "working".

When discontinuing the aforementioned "Image input of project A" subsequent to establishing the connection state as shown in Fig. 21, the client user 12a enters "Discontinue the working subject" for "Image input of project A" into the front-end application software 11 as the information specifying the action set on the job as an object of work and the operation step in response to this action, in order to discontinue work in response to the action of "Image input of project A".

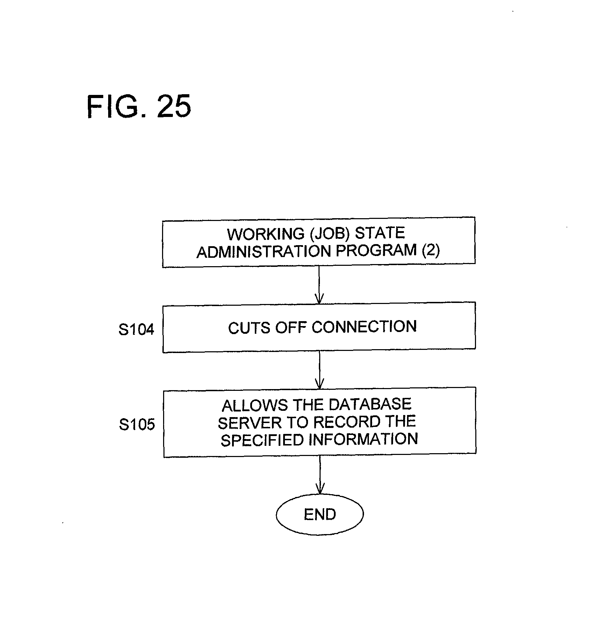

Upon receipt of "Discontinue the working subject" for "Image input of project A" into the front-end application software 11 as the information specifying the action set on the job as an object of work and the operation step in response to this action, the front-end application software 11 cuts off the logically direct connection between the working directory 30a usable only to the client user 12a and the job directory 21a as shown in Fig. 2, in conformity to the flow of processing given in Fig. 25 (S104).

After the work confirmation processing is not performed subsequent to cutting off the logically direct connection between the working directory 30a usable only to the client user 12a and the job directory 21a and creating an embodiment where work is completely disabled, the front-end application software 11 records "Discontinued" indicating the second working state in the database server 40 as information on the working state of the working subject in response to the action set on the job (S105).

After the logically direct connection between the working directory 30a usable only to the client user 12a and the job directory 21a has been cut off, the second working state is recorded into the database server 40, as described above. Then work conformation is not performed in the environment where work is completely disabled when the second working state is recorded; therefore, this method improves system reliability in the sense that "the second working state" means "Discontinue".

When terminating the work of "Image input of project A" after establishing a connection state shown in Fig. 21, the client user 12a enters "Terminate the working subject" for "Image input of project A" into the front-end application software 11 as information specifying the action set on the job as an object of work and the operation step in response to this action, in order to terminate the work in response to the action of "Image input of project A".

Upon receipt of information of "Terminate" for "Image input of project A" as information specifying the action set on the job as an object of work and the operation step in response to this action, the front-end application software 11 cuts off the logically direct connection between the working directory 30a usable only to the client user 12a and the job directory 21a in conformity to the flow of processing shown in Fig. 26 as shown in Fig. 22 (S106), and confirms the working state or action (S107).

The process of confirming the working state or action is to terminate the work for the purpose of processing the corresponding action and to disable the work to be restarted.

After the logically direct connection between the working directory 30a usable only to the client user 12a and the job directory 21a has been cut off and the work has been confirmed, the front-end application software 11 records "Terminate" indicating the third working state in the database (S105), as the information on the working state of the working subject in response to the action set on the job.

After the logically direct connection between the working directory 30a usable only to the client user 12a and the job directory 21a has been cut off and the work has been confirmed, the third working state is recorded in the database server 40, as described above. Then work confirmation is performed in the environment where work is completely disabled when the third working state is recorded; therefore, this method improves system reliability in the sense that "the third working state" means "Terminate".

In the same way, the working state of the client user 12b is "Discontinue" or "Terminate" in Fig. 21, and "Work start" in Fig. 22.

If the front-end application software 11 enables a logically direct connection of the corresponding working directory only when the client user as a working subject (12a in Fig. 21 and 12b in Fig. 22) is working, as described above, the working state of the working subject can be administered virtually by administration of the connection state of the working subject.

The aforementioned front-end application software allows at least one of the first to third working states to be recorded in the database server as the information on the working state of the working subject in response to the action set on the job, with the result that the working state can be monitored by three states.

If the front-end application software 11 records the time of changing this working state in the database simultaneously as it records each working state (S103, S105 and S108) or sequentially thereafter, then the time of changing this working state can be administered.

Using the time of changing the working state, the aforementioned database server calculates the working time of the aforementioned working subject in response to the action and records the result. This makes it easy to administer the time of the working subject having worked in response to each action.

In the aforementioned embodiment, upon receipt of an instruction on the first to third working states, the database server 40 is used to make an inquiry about the current working state of the working subject as a process of authentication by the front-end application software 11 prior to connection or disconnection (S101, S104 and S106). Evaluation is made to see if it can be accepted or not. If it cannot be accepted, inability of acceptance is notified. This processing ensures that an instruction on the second or third working state can be accepted only from the working subject having engaged in the work.

In the process of the aforementioned authentication, the acceptability of the instruction of the first working state is evaluated depending on whether an action as the working object is present or the state is in the second working state. The acceptability of the instruction of the third working state is evaluated depending on whether the state is in the first or second working state.

Authentication of the front-end application software 11 may be processed by the file server.

The working subject ID having been issued at a one-to-one correspondence to the working subject is issued at a one-to-one correspondence to a combination between the working subject and client terminal, the same working subject can be subjected to a separate administration for each client terminal.

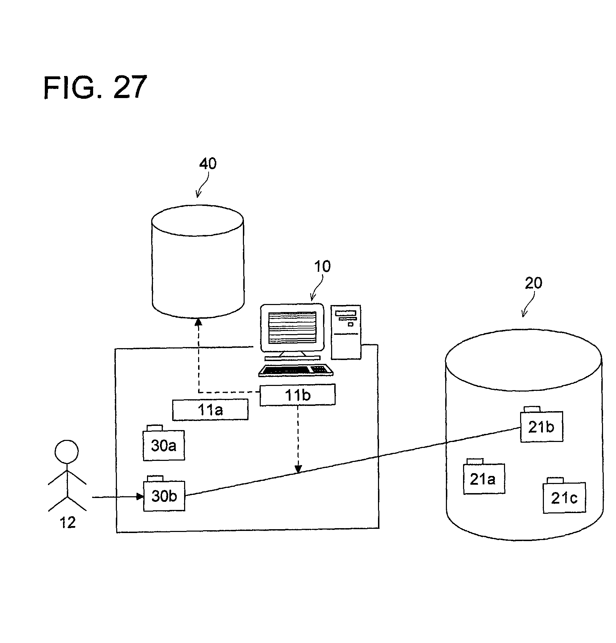

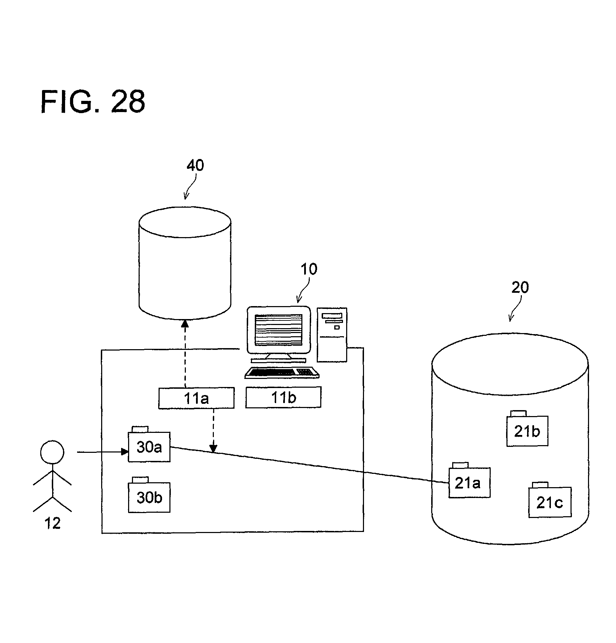

Figs. 27 and 28 are drawings illustrating the sixth embodiment of the working state administration system according to the present invention. In Figs. 27 and 28, the same reference numerals with those of Fig. 21 denote the same configurations, and their detailed description will be omitted.

The present embodiment differs from the aforementioned embodiments in that the working directory provided for each client user in the aforementioned embodiments is provided in conformity to the front-end application software (working directory 30a for the front-end application software 11a, and working directory 30b for front-end application software 11b) since the front-end application software serves as a working subject.

In the present embodiment, the front-end application software serves as a working subject. Actually, however, the client user or external client application software enters the information on the working state of the working subject in response to the action set on the job into each of the front-end application softwares 11a and 11b, and performs work in response to the action.

For example, even if the client user actually performs the action set on the job stored in the job directories 21a and 21b as objects to be connected with the working directories 30a and 30b corresponding to front-end application softwares 11a and 11b as shown in Figs. 27 and 28, the working state recorded in the database server 40 is "Work start" in the case of the front-end application software 11 as a working subject in Fig. 27, and is "Work start" in the case of the front-end application software 12a in Fig. 28.

As described above, if the front-end application software is used as a working subject and a corresponding working directory is provided for administration, the working state of each front-end application software can be administered, independently of an actually working entity.

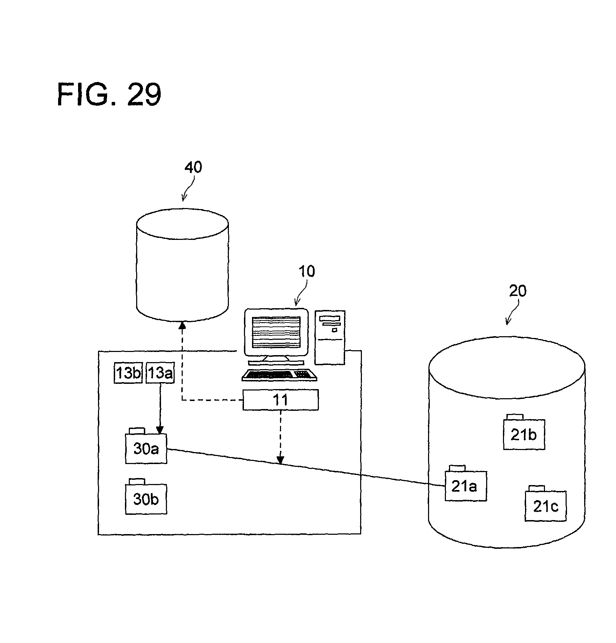

Figs. 29 and 30 are drawings illustrating the seventh embodiment of the working state administration system according to the present invention. In Figs. 29 and 30, the same reference numerals with those of Fig. 21 denote the same configurations, and their detailed description will be omitted.

The present embodiment differs from the aforementioned embodiments in that the working directory provided for each client user in the first embodiment is provided in conformity to the external client application software (working directory 30a for the external client application software 13a, and working directory 30b for external client application software 13b) since the external client application software serves as a working subject.

In the present embodiment, the external client application software serves as a working subject. Actually, however, the external client application software as a working subject or client user enters the information on the working state of the working subject in response to the action set on the job into each of the front-end application softwares 11, and performs work in response to the action.

For example, even if the client user actually performs the action set on the job stored in the job directories 21a and 21b as objects to be connected with the working directories 30a and 30b corresponding to external client application software 13a and 13b as shown in Figs. 29 and 30, the working state recorded in the database server 40 is "Work start" in the case of the external client application software 13a as a working subject in Fig. 29, and is "Work start" in the case of the external client application software 13b in Fig. 30.

As described above, if the external client application software is used as a working subject and a corresponding working directory is provided for administration, the working state of each external client application software can be administered, independently of an actually working entity.

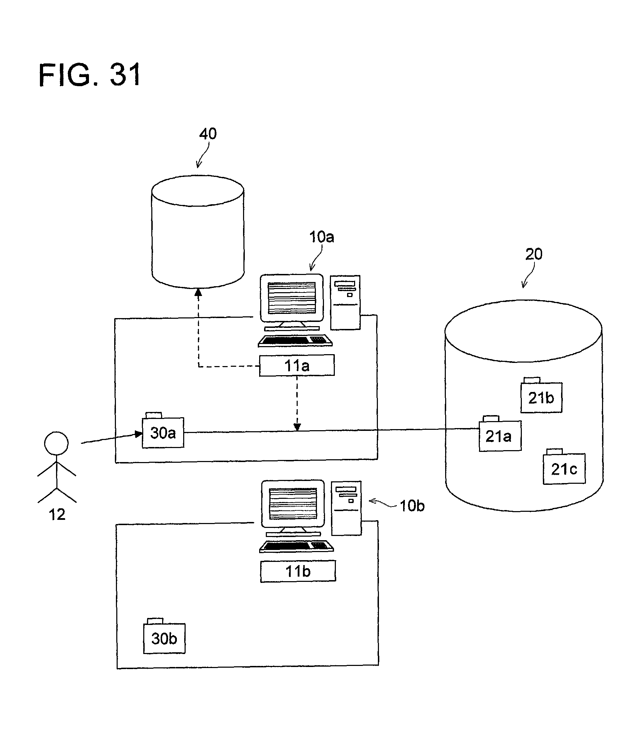

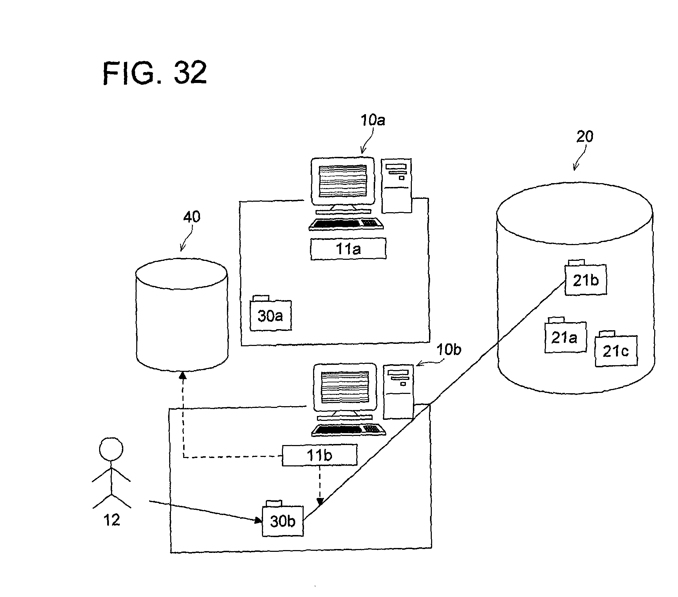

Figs. 31 and 32 are drawings illustrating the eighth embodiment of the working state administration system according to the present invention. In Figs. 31 and 32, the same reference numerals with those of Fig. 21 denote the same configurations, and their detailed description will be omitted.

The present embodiment differs from the aforementioned embodiments in that the working directory provided for each client user in the first embodiment is provided in conformity to the client terminal (working directory 30a for the client terminal 10a, and working directory 30b for client terminal 10b external client application software 13b) since the client terminal serves as a working subject.

In the present embodiment, the client terminal serves as a working subject. Actually, however, the external client application software or client user enters the information on the working state of the working subject in response to the action set on the job into each of the front-end application softwares 11.

For example, even if the client user actually performs the action set on the job stored in the job directories 21a and 21b as objects to be connected with the working directories 30a and 30b corresponding to client terminals 10a and 10b as shown in Figs. 31 and 32, the working state recorded in the database server 40 is "Work start" in the case of the client terminal 10a as a working subject in Fig. 31, and is "Work start" in the case of the client terminal 10b in Fig. 32.

As described above, if the client terminal is used as a working subject and a corresponding working directory is provided for administration, the working state of each client terminal can be administered, independently of an actually working entity.

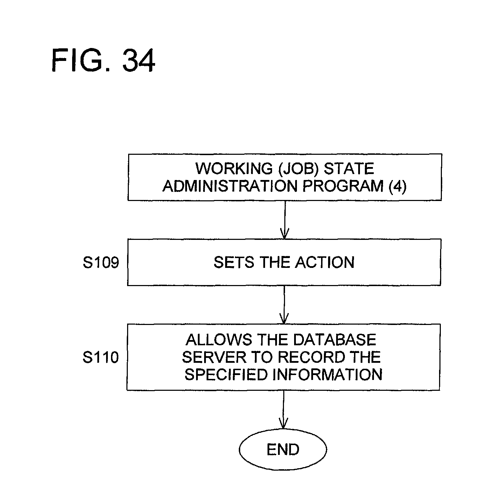

The following describes the details of the job state administration system permitting administration in units of action according to the present invention:
The job state administration system permitting administration will be described below: This embodiment can be described with reference to Fig. 21 illustrating the first embodiment of the work state administration system according to the present invention, and Figs. 22, 24, 26, 33 and 34.

The job state administration system according to the present invention is different from the technological concept with attention focused on the working state of the working subject in the previously described working state administration system in the present invention. This working-job state administration system is an embodiment of the technological concept with attention focused on the working state in response to the action set on the job, independently of the type of the working subject. The following description of the present embodiment uses the client user as a working subject. However, it is to be understood that the working subject is not limited to it. It can be a front-end application software, external client application software or client terminal.

The configuration of the embodiment given in Figs. 21 and 22 has already been described with reference to the fifth embodiment of the working state administration system according to the present invention. Description of the hardware except for database server 40 will be omitted.

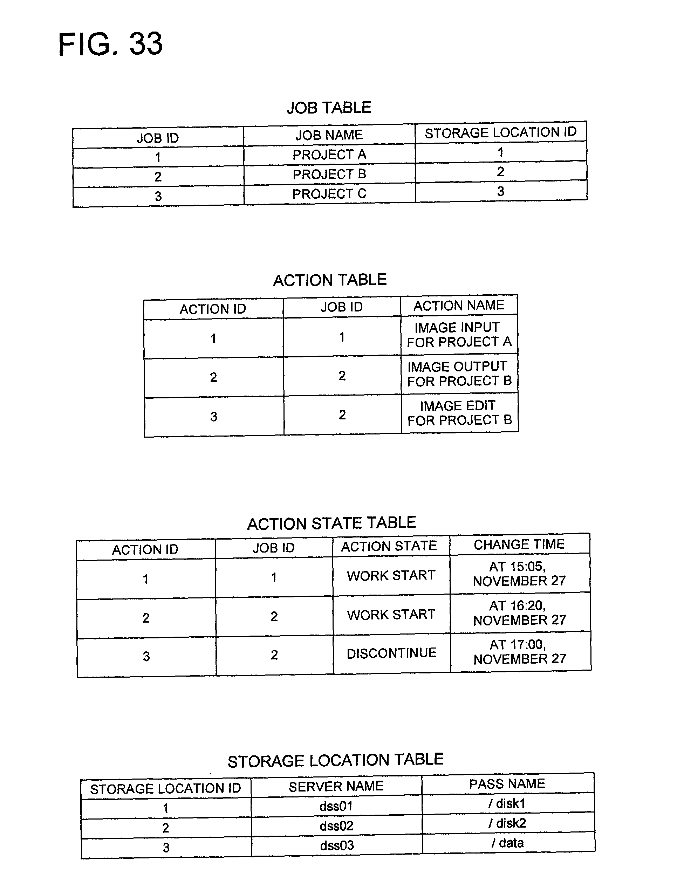

The job state administration system in the present invention uses the database server 40 having a table configuration shown in Fig. 33, instead of the table configuration of the database server 40 used in the working state administration system.

In Fig. 33, the same portions as those of Fig. 23 will not be described.

The action state table in Fig. 33 contains the action ID, the ID of the hob where the action is set, action state and the time for changing the action state which are associated with one another.

An action ID is issued when an action is set, and is recorded in this action state table associated with the ID of the job to be set and the action state.

The action ID for administration of the job in terms of the action state and the action state associated with the ID of the job with the action set thereon are recorded in the action state table with changes in the action state as appropriate, in conformity to the instruction of the front-end application software 11. At least one of the first to fourth action state is recorded as this action state.

In the present invention, the first action state indicates that the action is set to the job, and the second action state shows that the action is being worked. The third action state denotes that the work of the action is discontinued, and fourth action indicates that the work of the action has been terminated. In Fig. 33, the first action state is expressed as "Entry", the second action state as "Work start", the third action state as "Discontinue", and the fourth action state as "Terminate". In the present specification, the first action state will be called "Entry", the second action state "Work start", the third action state "Discontinue", and the fourth action state "Terminate".

The following describes an example of the flow of processing in the job state administration system according to the present invention:
The administrator setting the action for a job inputs "Entry" (step) for "Image input" (action) of the "Project A" (job) into the database server 40.

Action for the job is set by the database server 40 having received the information on the "Entry" of the "Image input" of "Project A" as information specifying the action set on the job as an object of work and the operation step in response to this action (S109).

As described above, after the action has been set, the front-end application software 11 allows "Entry" indicating the first action state to be recorded into the database server 40 as the information on the state of the action set on the job (S110).

If the first action state is recorded into the database server 40 after the action has been set for the job as described above, recording of the first action state is ensured for the job when the first action state is recorded. This improves consistency in the sense that "the first action state" means that action has been set.

Then in order to perform work in response to the action of "Image input of project A", the client user 12a enters "Action work start" for "Image input of project A" into the front-end application software 11 as information specifying the action set on the job as an object of work and the operation step in response to this action.

Upon receipt of information on the "Action work start" for "Image input of project A" as information specifying the action set on the job as an object of work and the operation step in response to this action, the front-end application software 11 performs the process of acquiring from the database shown in Fig. 33 the information on the storage location of the job, "Project A" where the "Image input of project A", an action serving as an object of the work, is set (S101), in conformity to the flow of processing shown in Fig. 4. A logically direct connection is established between the job directory 21a storing the job and the aforementioned work directory according to the information on the obtained storage location (S102).

After a logically direct connection has been established between the working directory 30a usable only to the client user 12a and the job directory 21a, the front-end application software 11 records "Work start" indicating the second action state into the database server 40 as information on the state of the action set on the job (S103).

As described above, the second action state is recorded into the database server 40 after a logically direct connection has been established between the working directory 30a usable only to the client user 12a and the job directory 21a. This ensures the work to be performed when the second action state is recorded, and improves system reliability in the sense that "the second action state" means "Working".

When discontinuing the work of "Image input of project A" after the connection shown in Fig. 21 has been established, the client user 12a enters "Discontinue action" for "Image input of project A" into the front-end application software 11 as information on the state of the action set on the job in order to discontinue the work in response to the action of "Image input of project A".

Upon receipt of the information on "Discontinue the Image input of project A" as information specifying the action set on the job as an object of work and the operation step in response to this action, the front-end application software 11 cuts off the logically direct connection between the working directory 30a usable only to the client user 12a and the job directory 21a according to the flow of processing shown in Fig. 25 as shown in Fig. 22 (S104).

After the logically direct connection between the working directory 30a usable only to the client user 12a and the job directory 21a has been cut off, the front-end application software 11 records the "Discontinue" indicating the third action state into the database server 40 as information on the state of the action set on the job (S105).

After the logically direct connection between the working directory 30a usable only to the client user 12a and the job directory 21a has been cut off, the second working state is recorded into the database server 40, as described above. Then action is not confirmed in the environment where work is completely disabled when the third working state is recorded; therefore, this method improves system reliability in the sense that "the third working state" means "Discontinue".

When terminating the work of "Image input of project A" after the connection shown in Fig. 21 has been established, the client user 12a enters "Terminate action" for "Image input of project A" into the front-end application software 11 as information on the state of the action set on the job in order to terminate the work in response to the action of "Image input of project A".

Upon receipt of the information on "Terminate the Image input of project A" as information specifying the action set on the job as an object of work and the operation step in response to this action, the front-end application software 11 cuts off the logically direct connection between the working directory 30a usable only to the client user 12a and the job directory 21a according to the flow of processing shown in Fig. 26 as shown in Fig. 22 (S106), and confirms the action (S107).

The process of confirming action is to terminate the work for the purpose of processing the action and to disable the work to be restarted in response to the action.

After the logically direct connection between the working directory 30a usable only to the client user 12a and the job directory 21a has been cut off and the action has been confirmed, the front-end application software 11 records "Terminate" indicating the fourth working state in the database (S105), as the information on the state of the action set on the job.

After the logically direct connection between the working directory 30a usable only to the client user 12a and the job directory 21a has been cut off and the action has been confirmed, the fourth working state is recorded in the database server 40, as described above. Then work confirmation is performed in the environment where work is completely disabled when the fourth working state is recorded; therefore, this method improves system reliability in the sense that "the fourth working state" means "Terminate".

If the front-end application software 11 enables a logically direct connection of the corresponding job directory only when the working state of the action is "Work start" (21a in Fig. 21 and 21b in Fig. 22) is working, as described above, the working state of the working subject can be administered virtually by administration of the connection state of the working subject.

The aforementioned front-end application software allows at least one of the first to fourth working states to be recorded in the database server 40 as the information on the state of the action set on the job, with the result that the working state can be monitored in terms of four states.

If the front-end application software 11 records the time of changing this working state in the database simultaneously as it records each working state (S3, S5 and S8), then the time of changing this working state can be administered.

Using the time of changing the working state, the aforementioned database server calculates the working time of the aforementioned working subject in response to the action and records the result. This makes it easy to administer the time of the working subject having worked in response to each action.

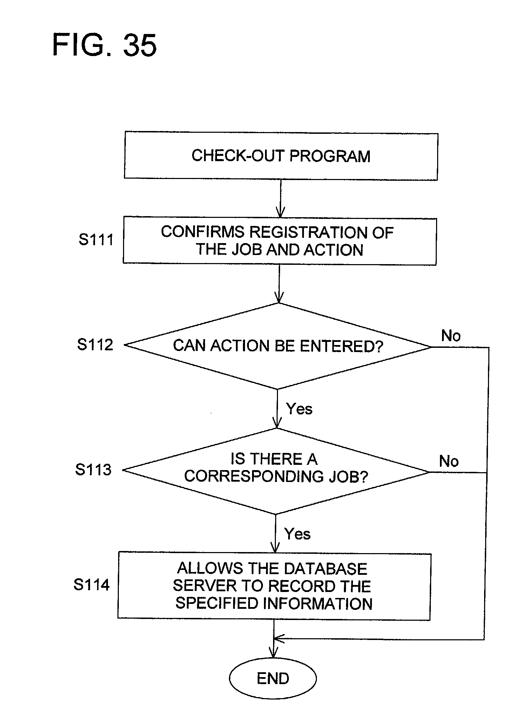

In the aforementioned embodiment, it is preferred that the file server controlling the recording medium for logical storage of the job directory 21 implement authentication prior to logical direct connection through the front-end application software 11. The process of authentication will be described below:
The file server having received a request for connection authentication from the front-end application software 11 accesses the aforementioned database to verify registration of the action as an object of the request and job, according to the flow of processing shown in Fig. 35 (S111). It evaluates to see if the requested action can be entered or not (S112). If it can be entered according to S113, it checks if a job corresponding to the action is present or not (S113). If a job corresponding to the action is present according to S114, the job directory is checked out (setting of accessible mode) (S114). If entry is not possible according to S113 and a job corresponding to the action is present according to S114, a report is sent to the front-end application software 11 to notify that connection is not allowed.

When a job can be checked out by the file server as described above, the file server checks in the job directory for the job with the aforementioned fourth action state recorded thereon (setting of inaccessible mode).

After getting from the database the information on the storage location of the job where the action as an object of the work is set, the front-end application software 11 requests the aforementioned file server to authenticate connection. The aforementioned direct connection can be established only when connection is authenticated by the file server. This method provides an action administration system characterized by high reliability.

In the aforementioned embodiment, upon receipt of an instruction on the first to fourth working states, the database server 40 is used to make an inquiry about the current working state of the working subject as a process of authentication by the front-end application software 11 prior to setting of the action, connection or disconnection (S101, S104, S106 and S109).

Evaluation is made to see if it can be accepted or not. If it cannot be accepted, inability of acceptance is notified. This processing ensures that an instruction on the second or third working state can be accepted only from the working subject having engaged in the work. Evaluation is made to see if it can be accepted or not. If it can be accepted, the next processes (S101, S104, S106 and S109) are carried out. If it cannot be accepted, inability of accepting such an instruction is notified. This procedure ensures that an instruction causing the second, third or fourth action state can be accepted only from the working subject having engaged in the work of this action, and provides administration of the state of the job where the action is set.

In the process of the aforementioned authentication, the acceptability of the instruction of the first action state is evaluated depending on whether a job as an object to be set is present or not; the acceptability of the instruction of the second action state is evaluated depending on whether the state is in the first action state or not; the acceptability of the instruction of the third action state is evaluated depending on whether the state is in the second action state or not; and the acceptability of the instruction of the fourth action state is evaluated depending on whether the state is in the third action state or not.

Authentication of the front-end application software 11 may be processed by the file server.

The following describes the details of the working-job state administration system permitting administration in units of action according to the present invention:
The working-job state administration system according to the present invention is characterized in that the front-end application software records into the database server the information on the working state of the working subject in response to the action set on the job and information on the state of the action set on the job in the aforementioned working state administration system and job state administration system. So description of the same hardware configuration as that of the aforementioned working state administration system and job state administration system will be omitted.

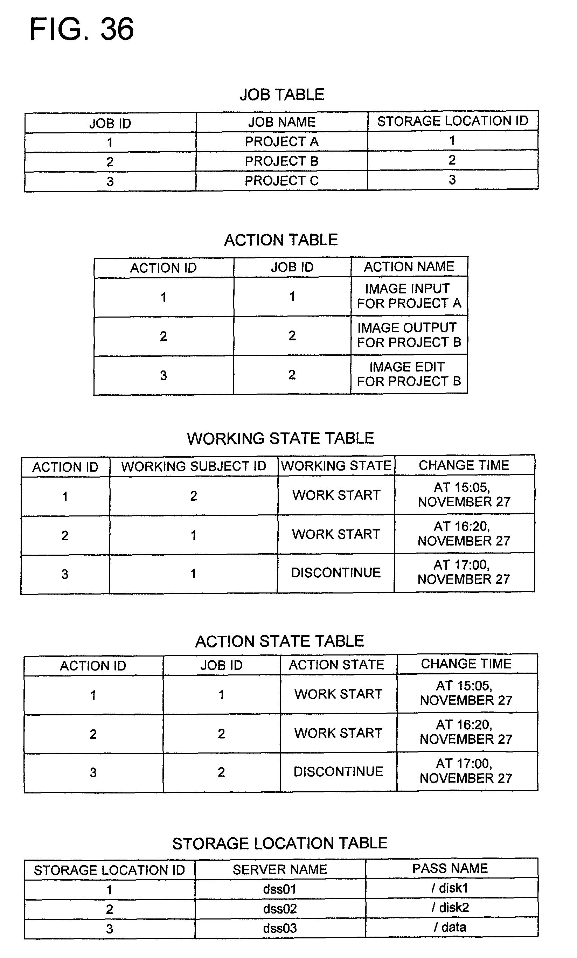

The table of the database server 40 in the working-job state administration system according to the present invention is based on the configuration shown in Fig. 36. This table configuration consists basically of a combination between the table configuration shown in Fig. 23 and that in Fig. 33, and so will not be described.

The following describes an example of the flow of processing in the working-job state administration system according to the present invention.

The job administrator setting the action for a job enters the "Image input" (action) as an "Entry" (operation step) into the database server 40 as information specifying the action set on the job as an object of work and the operation step in response to this action.

Action for the job is set by the database server 40 having received the information on the "Entry" of the "Image input" of "Project A" as information specifying the action set on the job as an object of work and the operation step in response to this action (S109).

As described above, after the action has been set, the front-end application software 11 allows "Entry" indicating the first action state to be recorded into the database server 40 as the information on the state of the action set on the job (S110).

If the first action state is recorded into the database server 40 after the action has been set for the job as described above, recording of the first action state is ensured for the job when the first action state is recorded. This improves consistency in the sense that "the first action state" means that action has been set.

Then in order to perform work in response to the action of "Image input of project A", the client user 12a enters "Work and action work start" for "Image input of project A" into the front-end application software 11 as information specifying the action set on the job as an object of work and the operation step in response to this action.

Upon receipt of information on the "Work start" for "Image input of project A" as information specifying the action set on the job as an object of work and the operation step in response to this action, the front-end application software 11 performs the process of acquiring from the database shown in Fig. 33 the information on the storage location of the job, "Project A" where the "Image input of project A", an action serving as an object of the work, is set (S101), in conformity to the flow of processing shown in Fig. 24. A logically direct connection is established between the job directory 21a storing the job and the aforementioned work directory according to the information on the obtained storage location (S102).

After a logically direct connection has been established between the working directory 30a usable only to the client user 12a and the job directory 21a, the front-end application software 11 records "Work start" indicating the first working state and "Work start" indicating the second working state into the database server 40 as information on the working state of the working subject in response to the action set on the job and information on the state of the action set on the job (S103).

As described above, the second action state is recorded into the database server 40 after a logically direct connection has been established between the working directory 30a usable only to the client user 12a and the job directory 21a. This ensures the work to be performed when the second action state is recorded, and improves system reliability in the sense that "the first action state" means that the working subject is currently in the process of working and "the second action state" means "that the second action state is in the process of working in response to the action.

When discontinuing the work of "Image input of project A" after the connection shown in Fig. 21 has been established, the client user 12a enters "Discontinue work and action" for "Image input of project A" into the front-end application software 11 as information on the state of the action set on the job in order to discontinue the work in response to the action of "Image input of project A".

Upon receipt of the information on "Discontinue the Image input of project A" as information specifying the action set on the job as an object of work and the operation step in response to this action, the front-end application software 11 cuts off the logically direct connection between the working directory 30a usable only to the client user 12a and the job directory 21a according to the flow of processing shown in Fig. 25 as shown in Fig. 22 (S104).

After the logically direct connection between the working directory 30a usable only to the client user 12a and the job directory 21a has been cut off, the front-end application software 11 records the "Discontinue" indicating the second working state and the "Discontinue" indicating the third working state into the database server 40 as information on the working state of the working subject in response to the action set on the job and information on the state of the action set on the job (S105).

After the logically direct connection between the working directory 30a usable only to the client user 12a and the job directory 21a has been cut off, the second working state is recorded into the database server 40, as described above. Then action is not confirmed in the environment where work is completely disabled when the third working state is recorded; therefore, this method improves system reliability in the sense that "the second working state" means that the work of the working subject is discontinued and "the third working state" means that the work in response to the action is discontinued.

When terminating the work of "Image input of project A" after the connection shown in Fig. 21 has been established, the client user 12a enters "Terminate work and action" for "Image input of project A" into the front-end application software 11 as information on the state of the action set on the job in order to terminate the work in response to the action of "Image input of project A".

Upon receipt of the information on "Terminate the Image input of project A" as information specifying the action set on the job as an object of work and the operation step in response to this action, the front-end application software 11 cuts off the logically direct connection between the working directory 30a usable only to the client user 12a and the job directory 21a according to the flow of processing shown in Fig. 26 as shown in Fig. 22 (S106), and confirms the work and action (S107).

After the logically direct connection between the working directory 30a usable only to the client user 12a and the job directory 21a has been cut off and the work and action have been confirmed, the front-end application software 11 records "Terminate" indicating the third action state and "Terminate" indicating the fourth action state in the database (S105).

As described above, after the logically direct connection between the working directory 30a usable only to the client user 12a and the job directory 21a has been cut off and the work and action have been confirmed, the fourth action state is recorded in the database. Then work is performed in the environment where work is completely disabled when the fourth action state is recorded; therefore, this method improves system reliability in the sense that "the third working state" means termination of the work by the working subject, and "the fourth action state" means termination of the work in response to action.

If the front-end application software 11 enables a logically direct connection of the corresponding job directory only when the working state of the action is "Work start" (21a in Fig. 21 and 21b in Fig. 22) is working, as described above, the working state of the working subject can be administered virtually by administration of the connection state of the working subject.

The aforementioned front-end application software 11 allows at least one of the first to fourth action states to be recorded in the database server 40 as the information on the state of the action set on the job, with the result that the working state can be monitored in terms of four states.

If the front-end application software 11 records the time of changing this working state in the database simultaneously as it records each working state (S103, S105 and S108), then the time of changing this working state can be administered.

Using the time of changing the working state, the aforementioned database server calculates the working time of the aforementioned working subject in response to the action and records the result. This makes it easy to administer the time of the working subject having worked in response to each action.

In the aforementioned embodiment, it is preferred that the file server controlling the recording medium for logical storage of the job directory 21 implement authentication prior to logical direct connection through the front-end application software 11. The process of authentication will be described below:
The file server having received a request for connection authentication from the front-end application software 11 accesses the aforementioned database to verify registration of the action as an object of the request and job, according to the flow of processing shown in Fig. 35 (S111). Evaluation is made to see if the requested action can be entered or not (S112). If it can be entered according to S113, it checks if a job corresponding to the action is present or not (S113). If a job corresponding to the action is present according to S114, the job directory is checked out (setting of accessible mode) (S114). If entry is not possible according to S113 and a job corresponding to the action is present according to S114, a report is sent to the front-end application software 11 to notify that connection is not allowed.

When a job can be checked out by the file server as described above, the file server checks in the job directory for the job with the aforementioned fourth action state recorded thereon (setting of inaccessible mode).

After getting from the database the information on the storage location of the job where the action as an object of the work is set, the front-end application software 11 requests the aforementioned file server to authenticate connection. The aforementioned direct connection can be established only when connection is authenticated by the file server. This method provides an action administration system characterized by high reliability.

It is preferred that the aforementioned working state administration system and job state administration system be used when a single working subject performs work in response to the action set on the job. As explained in aforementioned embodiment, the working-job state administration system according to the present invention has been described when there is one working subject for each action. However, this can also be used when work is performed in response to the action set on the job by a group of working subjects consisting of multiple client users, multiple front-end application softwares, multiple external client application softwares and multiple client terminals, or two or more working subjects selected from among a client user, front-end application software, external client application software and client terminal.

When a group is composed of multiple working subjects in the present invention and work is performed in response to one action by this group, the system operations are basically the same, independently of whether the working subject consists of any of the client user, front-end application software, external client application software and client terminal. Accordingly, the following describes the working-job state administration system according to the present invention with reference to the case where multiple working subjects constituting the group are multiple client users. The working subject may be any of the client user, front-end application software, external client application software and client terminal.

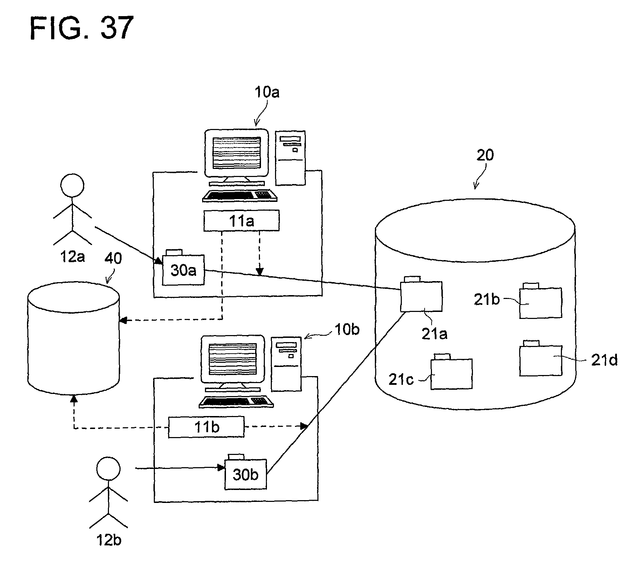

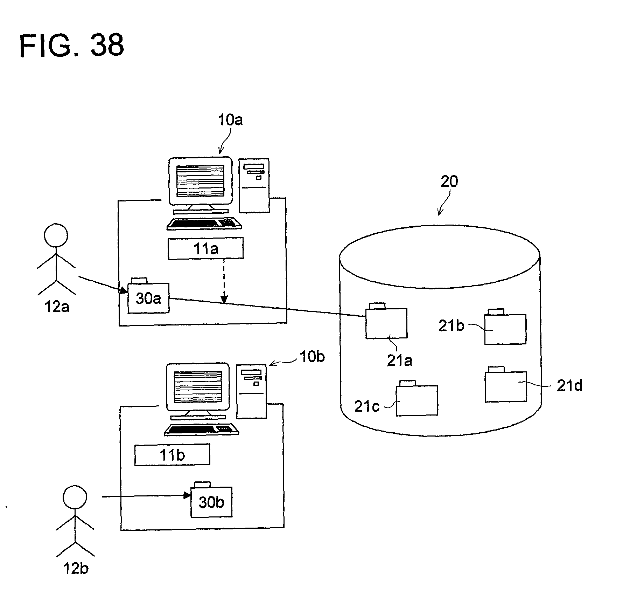

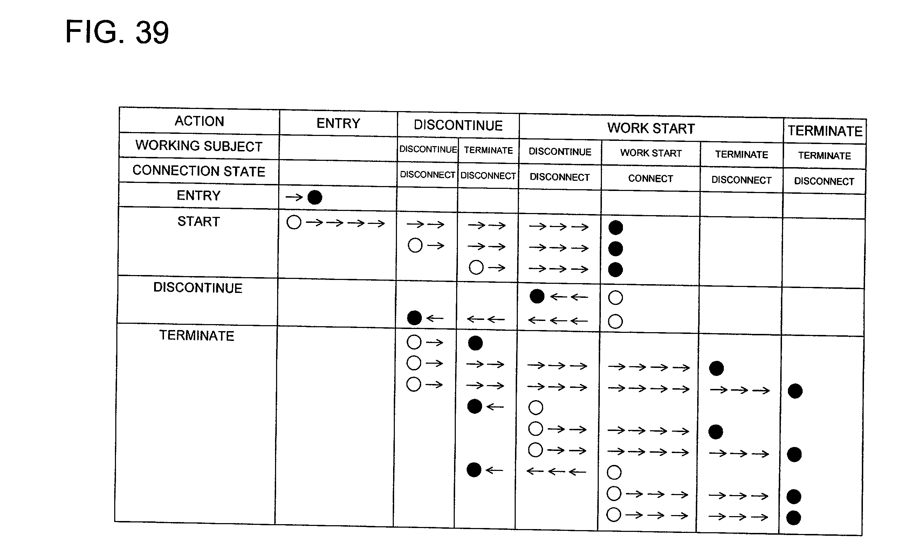

Fig. 37 is a drawing representing the state of connection when there is one client users as a working subject for action. Fig. 38 is a drawing representing the state of connection when there is one client user as a working subject for action. Fig. 39 is a state transition diagram representing the correspondence between the working state of the working subject and the action state of the job in the working-job state administration system.

In Figs. 37 and 38, only one action (hereinafter referred to as "action A" as required) is assumed to be set to job 21a.

In the state shown in Fig. 37, only client user 12a is the working subject performing work in response to action A, so the state of action A is changed with a change in the working state of the client user 12a as a working subject.

However, if client user 12b also start working as shown in Fig. 18 when the state of action A is not yet confirmed, client users 12a and 12b as such working subjects will be working for action A as a group. In this case, the state of action A is determined according to the combination of the working states of the client user 12a and 12b.

In Fig. 38, for example, the job directory 21a is connected with client user 12a and 12b, so client users 12a and 12d are determined as "Work start" in response to the action A set on the job stored in job directory 21a. Accordingly, the state of action A is recorded as "Work start" in the database.

In such a job state administration system according to the present invention, when the working state of the client user as at least one working subject in the group corresponding to the action set on the job to be administered (client users 12a and 12b in Fig. 38) is "Work start", the state of the action set on this job is determined as "Work start".

Further, when the working state of at least one working subject in the group working in response to the aforementioned action is the first working state (Work start), the state of this action is described as the second action state (Work start) in the database; when the working states of all working subjects in the group working in response to the aforementioned action are the third states (Terminate), the state of this action is described as the fourth action state (Terminate) in the database; and when the working state of at least one working subject in the group working in response to the aforementioned action is the second working state (Work start) and there is no working subject whose working state is the first working state (Work start), the state of this action is described as the third action state (Discontinue) in the database.

The correspondence between each working state of a working subject and action state with consideration given to such group work is represented in Fig. 39. It indicates that the working state of the working subject can be either "Discontinue" or "Terminate" when the action of the job is "Discontinue"; the working state of the working subject can be "Discontinue", "Work start" or "Terminate" when the action of the job is "Work start"; and the working state of the working subject can be "Terminate" when the action of the job is "Terminate".

For the operation step given on the leftmost position in the working state or action state on the top line shown in Fig. 39, "○" is placed in the column receiving the input. "●" is described in the column showing the working state or action state subsequent to entry of such an operation step. For example, if "Work start" is input as information specifying the operation step, the action state when such an input can be accepted is "Entry" or "Discontinue". It means that the working state is "Discontinue" or "Terminate", or the working state is not yet confirmed.

If a system allows the working state of the working subject and action state of the job to be administered in an associated form as described above, administration can be carried out with both the working subject and action playing a major role, even when multiple working subjects perform work for one action.

The following describes the details of the working state administration system according to the present invention characterized by specialized access level:

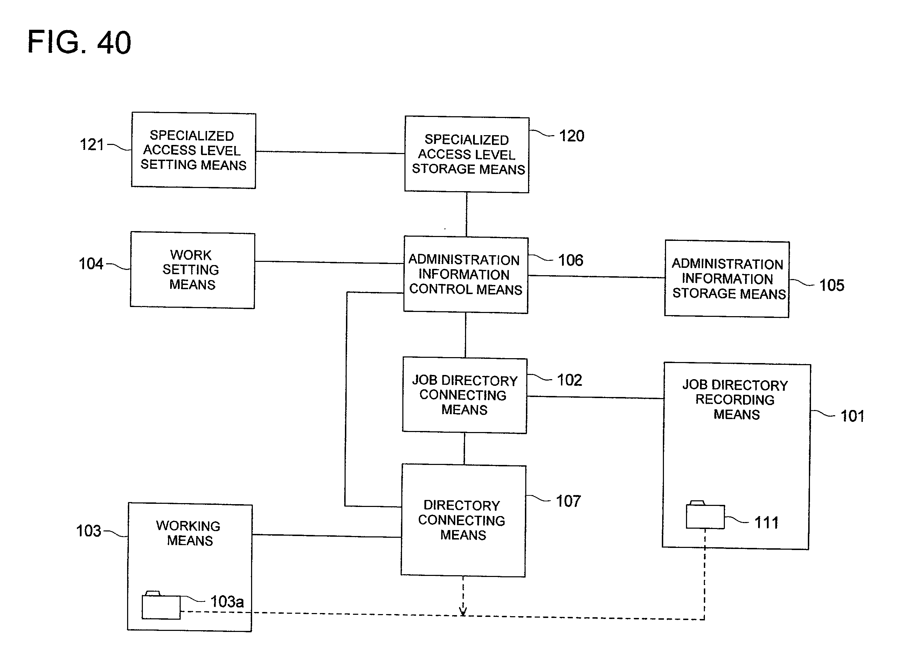

Fig. 40 is a block diagram illustrating the ninth embodiment of the working state administration system according to the present invention.

Numeral 101 in Fig. 40 denotes a job directory record means for recording the job directory locally storing the jobs, and 102 indicates a job directory control means for controlling the job directory record means. Numeral 03 shows a working means for the working subject to perform work, and 104 indicates a work setting means for setting the work and workable working subject on the job. Numeral 105 denotes an administration information storage means for recording administration information, 106 signifies an administration information control means for controlling the administration information storage means, and 107 indicates a directory connection means for changing the state of logically direct connection between the job directory and working directory 303a on the aforementioned working means.

The job directory record means 101 contains a record of one or more job directories with logic storage of jobs, and various types of recording media can be used.

Each job directory 111 of the job directory record means 101 contain a logic storage of jobs and is provided for each job.

The job directory control means 102 performs read/write operation with job directory record means 101, and various control means such as CPU can be used.

The job directory control means 102 provides an access control method wherein the job directory of job directory record means 101 is set in advance in such a way that it cannot be connected (hereinafter referred to as "access" as required) by directory connecting means 107; and if there is a request for access from the directory connection means 107, it is made accessible after the request for this access has been confirmed as legitimate.

According to an access control method described above, the storage area of the job directory record means 101 is separated into two areas; an area accessible to the directory connecting means 101 and an area inaccessible to the directory connecting means 101, and the job directory is moved to the accessible area or inaccessible area by job directory control means 102 as required, or a hard link is provided in the accessible area, thereby ensuring control of access to the job directory from the directory connecting means 107. According to another access control method, the job directory itself recorded in the job directory record means is controlled by directory control means (hereinafter referred to as "file sharing mechanism" as required) between settings; one of them allows connection from the directory connecting means, while the other does not, whereby access is controlled. These access control methods can be adopted.

In the present invention, a hard link is defined as a link provided for the originally present data (an entrance for access) without directory data itself being recorded.

According to the method for evaluating the legitimacy of the request for access by directory connection means 107, information is obtained regarding the work set on the job set by the work setting means stored in the administration information storage means 105 through administration information control means 106 and regarding the working subject which can perform this work. If the working subject related to the request for access is set as a working subject which can perform work set on the job directory as an object of access, this request of access is evaluated as legitimate, based on the aforementioned information.

The working means 103 is intended for the working subject to perform work. Various devices including an input means such as a PC (personal computer) and PDA (cellular information terminal), recording means and control means can be used.

A working means 103 is provided with the working directory 103a corresponding to the working subject. The working directory is defined as a connection point accessible only to the corresponding working subject. The working subject can perform work by accessing this working directory.

As a method for allowing such a working directory accessible only to the working subject, it is possible to use the method wherein the password corresponding to the working subject is issued and the working directory can be accessed only by entering this password, or the method by a directory protecting mechanism based on the user ID of the OS (operating system).

A work setting means 104 ensures that a work setting personnel can set the work for the job logically stored in the job directory recorded in the job directory record means 101, and the working subject capable of performing this work. Various apparatuses provided with the input/output means and storage control means including a PC (personal computer) and PDA (cellular information terminal) can be used.

The work setting means 104 can verify the working state of the set work and the working subject set on the work. When this working state is verified, the work setting means 104 accesses the administration information storage means 105 via the administration information control 106 to get information on the working state of the work set on the job or working state of the working subject. Such information is output by various input/output means; for example, it is displayed on the monitor or notified by sound, whereby verification is made by the work setting subject.

The administration information storage means 105 is intended to store (1) job storage information, (2) information on the work set on the job in the work setting means 104 and working subject capable of performing the work, and (3) information on the working state for the work set on the job and/or the working state of the working subject. It is possible to use various recording media which can be read by a computer.

The administration information control means 106 performs read/write operation with the aforementioned administration information storage means. Various control means including CPU can be used.

At the request of the directory connection means 107 and job directory control means 102, the administration information control means 106 exchanges various types of information for connection recorded in the administration information storage means 105.

Job storage information includes information on the location where the job directory is recorded and information on the job logically stored in the job directory, for example. When a new job directory is provided on the job directory record means 101, such information is stored in the administration information storage means 105 via the administration information control means 106 by the job directory control means 101.

Information on the work set on the job and working subject capable of performing the work is recorded in the administration information storage means 105 by the administration information control means 106 when the work setting means 104 has set the work for the job logically stored in each job directory and the working subject capable of performing the work.

The directory connection means 107 provides logically direct connection between the job directory and work directory; it is a program to control the operation for connection.

When the entry of starting work is given by working means 103, the directory connection means 107 establishes a logically direct connection with the job directory logically storing the job wherein the work which can be performed by the working subject corresponding to the working directory is set.

The working state for the work set on the job subjected to change due to the connection and/or the working state of the working subject is recorded in the administration information storage means 105 by the directory connection means 107 via the administration information control means 106.

The following describes the flow of processing until a logically direct connection is established according to the present invention:

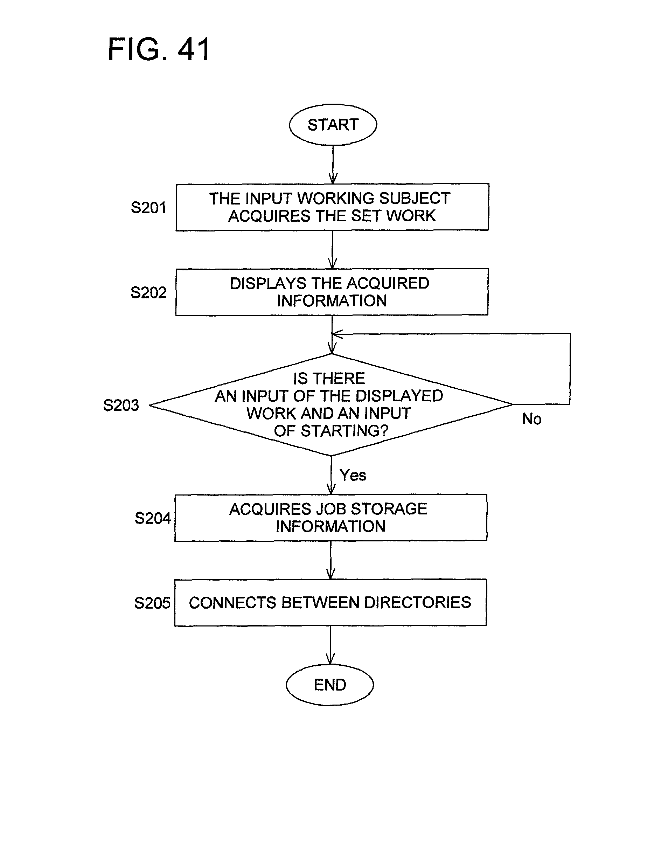

Fig. 41 is a drawing displaying the work which is set in such a way that it can be performed by the working subject input by the working means. It represents a flow of processing when connection is made by a directory connection means for connection between the working directory and the job directory where only the displayed work is an object for work.

When the working subject is input by the working means 103, the directory connection means obtains the work where input working subject is set, from the administration information storage means via the administration information control means, as shown in Fig. 41 (S202). The working means displays the work which can be performed by the input working subject based on the obtained information (S202).

When the working means has entered the command of starting work together with entry of the work displayed by the working means in S202 (S203), the directory connection means obtains the storage information of the job where the work input in S203 is set, from the administration information storage means via the administration information control means (S204). Based on the information obtained, a logically direct connection is established between the job directory logically storing the job where the work is set and the working directory provided in conformity to the working subject on the aforementioned working means.

In the aforementioned flow of processing, it is possible to obtain only the work which is set as being able to be performed by the working subject input in S201, and the connection can be established only between the working directory and the job directory where the work obtained in S205 is an object. This makes it possible to ensure that only the working subject set for the work is allowed to perform it.

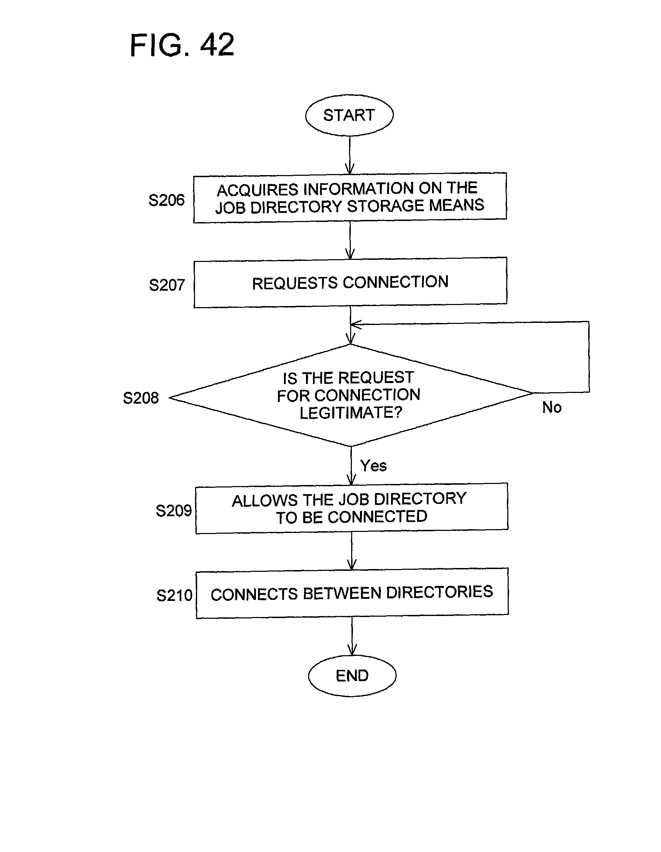

The following describes the logically direct connection by the flow of processing shown in Fig. 42 as a flow of processing different from that explained with reference with Fig. 41.

This flow of processing shows the case where the job directory of the job directory record means is preset to the state where connection by the directory connection means is disabled, and the job directory is set to the state where connection by the directory connection means is enabled by the job directory control means whenever required.

When work as an object of work and the working subject are input by the working means, the directory connection means obtains from the administration information storage means via the administration information control means the information on the directory storage means containing the job directory logically storing the job where the work input by the working means is set (S206). Based on the obtained information, the directory connection means requests the job directory control means for controlling the directory storage means to establish a logically direct connection of the working directory corresponding to the working subject with the job directory.

Based on the information stored in the administration information storage means, the job directory control means requested to establish connection in S207 evaluates to see if the request for connection is legitimate or not (S208). If it is evaluated as legitimate, the job directory control means sets the job directory requested in S207 to the state where logically direct connection with the working directory is enabled (S209).

After the job directory is set in S209 in such a way that direct connection with the working directory is enabled, the directory connection means establishes a logically direct connection between the job directory and working directory (S210).

In the aforementioned flow of processing, the job directory control means 102 evaluates to see if request for connection from the directory connection means in S208 is legitimate or not. Only when it is evaluated as legitimate, connection between directories can be established by the directory connection means. This allows work to be performed only by the working subject set for the work.

In the aforementioned flow of processing, the job directory of the job directory record means is preset to the state where connection by the directory connection means is disabled, and the state is set in such a way as to allow a logically direct connection of the job directory with the working directory in S209. This can be achieved by;
(1) a method wherein the job directory storage means is divided into two areas -- a connectable area where connection by the job directory connection means is enabled and an unconnectable area where it is disabled, and the job directory is preset in the unconnectable area, then the job directory is moved from the unconnectable area to the connectable area in S209;
(2) a method wherein the job directory record means is set in the same manner as (1), the job directory is preset in the unconnectable area, and a hard link of the job directory is provided in the connectable area in S209,
   thereby enabling connection by the directory connection means; and
(3) a method wherein a file sharing mechanism is used to preset the job directory to the state where connection by the directory connection means is disabled, and the aforementioned file sharing mechanism is again used to shift the job directory in S209 to the state where connection by the directory connection means is enabled.

The file sharing mechanism is defined as a mechanism used to select between sharing or non-sharing of the file owned by the OS or the like.

In the flow of processing given in Fig. 42, if there is only one job directory storage means, it is possible to omit the process of obtaining the information on the job directory storage means where the job directory is recorded (S206).

In the flow of processing given in Fig. 41, connection between directories in S205 may be replaced by processing shown in Fig. 42. This provides double confirmation (S201 and S208) to ensure that work is performed only by the authorized working subject with respect to the job directory containing a logical storage of the job where work is set. It ensures that only the working subject set to the work is allowed to perform the work. This method is preferred in ensuring system stability.

In the aforementioned administration system, it is preferred to ensure that the specialized access level can be set for the aforementioned working subject by providing;
a specialized access level setting means 121 of setting a specialized access level for the work setting subject to be to be described below, and
a specialized access level storage means 120 of recording the specialized access level set by the specialized access level setting means.

The specialized access level storage means 120 is intended to record the specialized level set by the aforementioned specialized access level setting means 121. Various recording media can be used to allow reading by a computer.

The specialized access level setting means 121 is designed to set a specialized access level for the work setting subject set by the aforementioned work setting means 104. It allows the set specialized access level to be recorded in the specialized access level storage means 120 by using various input means including a mouse or keyboard.

If a specialized access level is set in such a specialized access level setting means 121, a restriction is imposed on the subject which can be set as a working subject capable of performing the work set on the job when work is set by the work setting means 104.

In conformity to each stage, restriction can be imposed on the specialized access level which can be set by the specialized access level setting means 121 in such a way as to allow the following settings as the working subject which can perform the work set on the job;
(1) setting as a work setting subject itself,
(2) setting as a work setting subject itself and a work group including the work setting subject,
(3) setting as a work setting subject itself, a work group including the work setting subject and a working subject or work setting subject belonging to the work group including the work setting subject,
(4) setting as a work setting subject itself,
   a work group including the work setting subject and a work group without the working subject or work setting subject belonging to the group including the work setting subject, and
(5) setting as a working setting subject itself and all other working subjects.

In the aforementioned setting of specialized access level, setting a work group as a working subject is defined as the setting which allows working subjects to be set without distinguishing between work setting subjects or all the working subjects constituting a work group comprising one or more working subjects and/or work setting subjects. Setting a work setting subject or a working subject belonging to the work group as a working subject is defined as the setting which allows working subjects to be set by distinguishing between work setting subjects and each of the working subjects constituting a work group comprising one or more working subjects and/or work setting subjects.

In the working state administration system shown in Fig. 40, connection by the aforementioned directory connection means has been described in the case where only the working directory associated with the working subject can be connected to the job directory containing a logical storage of the job where the work is set, when the working subject input in the aforementioned working means can perform the work set on the job.

Without being restricted to the case mentioned above, however, the job directory containing a logical storage of the job where the work is set can also be connected with the working directory having the following association, in addition to the working directory associated with the working subject set as a working subject for the work set on the job.

Another embodiment of the aforementioned working state administration system is an embodiment of connection between the working directory associated with the input working subject and the job directory containing a logical storage of the job, when the working subject input by the aforementioned working means is set as a work setting subject or a working subject capable of performing the work set on the job.

This embodiment is preferred in that, when the working subject capable of performing the work set on the job has got into the state where it cannot perform the work, the work setting subject can perform the work in place of the working subject, thereby ensuring the work to be processed without fail.

A further embodiment of the aforementioned working state administration system is the one wherein the system administration subject administering this system has an administration means for administering this system, and, when the working subject input by the aforementioned working means is set as a working subject capable of performing the work set on the job, work setting subject or system administration subject, connection is established between the working directory associated with the input working subject and the job directory containing a logical storage of the job.

This embodiment is preferred in that, when the work setting subject cannot perform the work in addition to the state shown above, the system administration subject can perform the work in place of the work setting subject, thereby ensuring the work to be processed without fail.

A still further embodiment of the aforementioned working state administration system is the one wherein connection is established between the working directory associated with the input working subject and the job directory containing a logical storage of the job, when the working subject input by the aforementioned work is set as a working subject belonging to the group comprising the work setting subject and one or more working subjects capable of performing the work set on the job.

According to this embodiment, work can be set using the work group as an object, so the work setting subject and the working subject belonging to a work group jointly perform work. Thus, this embodiment is preferred in that it can meet the requirements for urgent processing of work.

A still further embodiment of the aforementioned working state administration system is the one wherein connection is established between the working directory associated with the input working subject and the job directory containing a logical storage of the job, when the working subject input by the aforementioned work is set as a working subject or work setting subject belonging to the group comprising the work setting subject and one or more working subjects capable of performing the work set on the job.

According to this embodiment, work can be set using the work group as an object, so the working subject belonging to a work group jointly performs work. Even when the work setting subject cannot perform the work, the work setting subject can perform the work in place of the working subject; thus, this embodiment is preferred in that it can meet the requirements for urgent processing of work.

A further embodiment of the aforementioned working state administration system is the one wherein the system administration subject administering this system has an administration means for administering this system, and connection is established between the working directory associated with the input working subject and the job directory containing a logical storage of the job, when the working subject input by the aforementioned working means is set as a working subject, work setting subject or system administration subject belonging to the group comprising the work setting subject and one or more working subjects capable of performing the work set on the job.

According to this embodiment, work can be set using the work group as an object, so the working subject and work setting subject belonging to a work group jointly performs work. Even when the working subject and work setting subject cannot perform the work, the system administration subject can perform the work in place of the working subject and work setting subject; thus, this embodiment is preferred in that it can meet the requirements for urgent processing of work.

A still further embodiment of the aforementioned working state administration system is the one wherein the working subject input by the aforementioned working means is set as a working subject belonging to a group comprising multiple working subjects and work setting subjects capable of performing the work set on the job, and connection is established between the working directory associated with the input working subject and the job directory containing a logical storage of the job when the input working subject is the first one having started the work.

According to this embodiment, work can be set using a desired working subject in the work group as an object, and the working subject itself can select the working subject which will perform the work in the final stage; thus, this embodiment is preferred when it is required that multiple working subjects constitute a group and the working subject select a desired work out of the work set on this group.

A still further embodiment of the aforementioned working state administration system is the one wherein the working subject input by the aforementioned working means is set as a working subject or work setting subject belonging to a group comprising multiple working subjects and work setting subjects capable of performing the work set on the job, and connection is established between the working directory associated with the input working subject and the job directory containing a logical storage of the job when the input working subject is the first having started the work.

According to this embodiment, work can be set using a desired working subject in the work group as an object, the working subject itself can select the working subject which will perform the work in the final stage, and the work setting means can perform work even if the working subject cannot; thus, this embodiment is preferred when it is required that multiple working subjects constitute a group and the working subject select a desired work out of the work set in this group.

A further embodiment of the aforementioned working state administration system is the one wherein
the system administration subject administering this system has an administration means for administering this system, and connection is established between the working directory associated with the input working subject and the job directory containing a logical storage of the job, when the working subject input by the aforementioned working means is set as a working subject, work setting subject or system administration subject belonging to the group comprising the work setting subject and multiple working subjects capable of performing the work set on the job, and the input working subject is the first one having started the work.

According to this embodiment, work can be set using a desired working subject in the work group as an object, the working subject itself can select the working subject which will perform the work in the final stage, and the
system administration subject can perform work even if the working subject and work setting means cannot; thus, this embodiment is preferred when it is required that multiple working subjects constitute a group and the working subject select a desired work out of the work set in this group.

As described above, the present embodiment provides a working state administration system which permits a simple administration of the progress of work set on the job, wherein work can be performed only by the working subject preset for the job.

The following describes the embodiment of an accounting system according to the present invention:
The accounting system according to the present invention is effectively used when work is performed by accessing data in the environment of a computer connected on the network. For example, it can be used for desktop publishing (DTP) and prepressing in the printing industry, for administration and operation of X-ray images in the medical circle, and for on-line publishing, electronic publishing and preparation of postcard in the photo and image processing industry.

The following describes the accounting system according to the present invention:

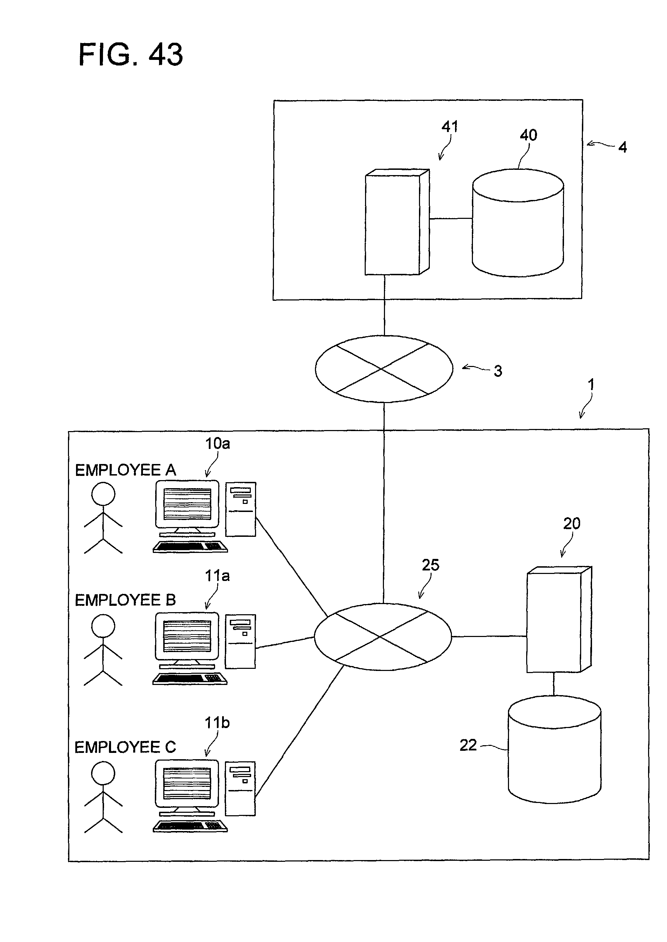

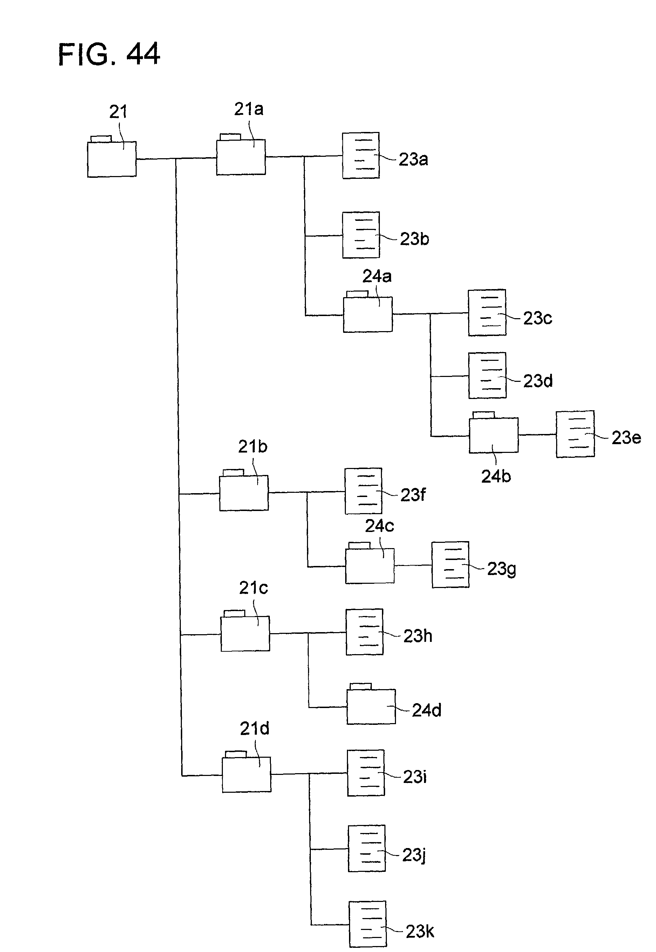

Fig. 43 is a drawing illustrating the working state administration system according to the present invention in the printing company or printing plate manufacturer (hereinafter referred to as "printing company" for short). Fig. 44 is a drawing illustrating the directory configuration of a job directory.

In Fig. 43, numeral 1 denotes is a user site system for the user represented by a printing company A. The system 1 comprises an administrator terminal 10a, multiple worker terminals 11a and 11b and file server 20 connected via the network line 25.

Numeral 4 is a provider site system comprising a database server 40 connected to the user site system 1 via the network 3.

The hardware of the user site system according to the present invention is provided by the user, and that of the provider site system is supplied by the provider. The provider site system performs accounting work through administration of the job data of the aforementioned user site system.

The user according to the present invention is defined as a person billed in the accounting system, and the provider is a person who bills the user in the accounting system.

The file server 20 of the user site system 1 has a recorder 22, and this recorder 22 has a logical storage of the job directory containing the job data on the job. A hard disk, floppy disk, magneto-optical disk and CD-ROM can be used as this recorder 22. Further, file server control software supplied by the provider (hereinafter referred to as "DSS" as required) is installed in the file server 20 to control the operation of the file server 20.

Each job directory of the recorder 22 of the file server 20 has a logical directory configuration shown in Fig. 44.

Each job directory of the recorder 22 will be described with reference to Fig. 2. Job directories 21a, 21b, 21c and 21d contain job files 23a, 23b, 23c, etc. and sub-directories 24a, 24b, 24c, etc., respectively.

Assume, for example, that job files 23a, 23b, ... 23e denote data files including "Product description original", "Product photo" or the like as an object of work in a printing company, and job directory 21a indicates a job directory on the job of "New spring catalog" in the printing company. Then job files 23a, 23b ... 23e under the job directory 21a are the data file for "Product description original", "Product photo" or the like on "New spring catalog".

Data on specific data (hereinafter referred to as "job data" as required) is stored in each job directory 21a.

Action set on the job in the present invention signifies a step of processing, not job files 23a, 23b, etc. themselves. For example, two actions, "Correction of image 1" and "Correction of image 2" can be set for the job having two job files, "image 1" and "image 2" under the job directory, and two actions, "Correction of image 1 and image 2" can also be set for this job.

Terminal control software supplied by the provider (hereinafter referred to as "DBC" as required) is installed in the administrator terminal 10a and worker terminal 11a and 11b in the user site system 1 to control the movement of terminals 10a, 11a and 11b.

A normal PC (hardware resource) can be used as such an administrator terminal 10a and worker terminals 11a and 11b.

The aforementioned administrator terminal 10a has a job input means for registering a job, setting action on the job and canceling job registration. The aforementioned worker terminals 11a and 11b have a state input means for changing the state of the work in response to the action set on the job.

A working directory as a point of connection with the job directory selected as appropriate by the installed DBC is provided on the administrator terminal 10a and worker terminals 11a and 11b.

A specific description of the aforementioned working directory will be given below:
The working directory is a directory stored in such a recording medium as hard disk in each of the administrator terminal 10a and worker terminals 11a and 11b, and constitutes a connection point in response to the working subject. This connection point is unique to the working subject, and is accessible only to the corresponding working subject, not accessible to working subjects other than the corresponding working subject.

To ensure that the connection point is accessible only to the corresponding working subject, it is possible to use the method of authenticating access to the working directory; for example, a method of issuing a password for each working subject, whereby access to the working directory is authenticated by this password, or a method of using the directory protecting mechanism of the OS (operating system) wherein permission to read and write on the directory can be set separately for the owner of the directory.

When setting is made to ensure that such a working directory can be accessed only by the corresponding working subject, then the state of connection of the aforementioned working directory will agree with that of the working subject, with the result that the connection state can be administered for each working subject.

The DBC allows logically direct connection of the working directories administrator terminal 10a and worker terminals 11a and 11b, with the job directory 21a, 21b or 21c.

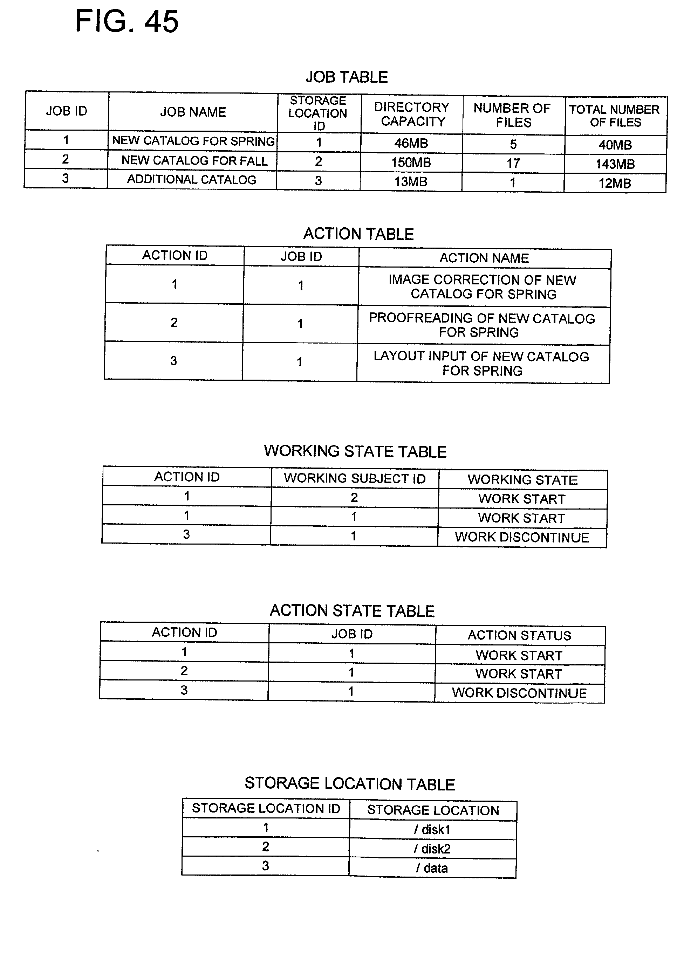

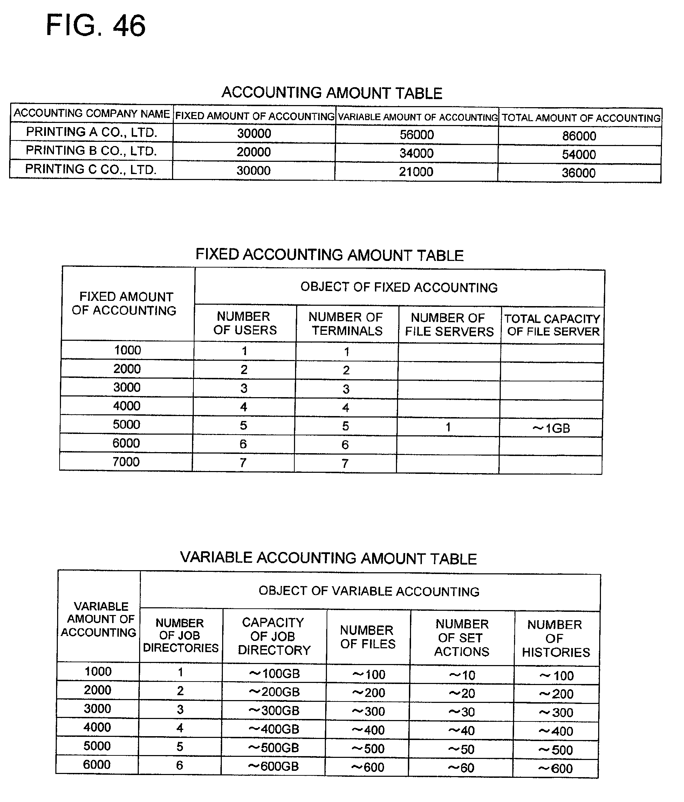

Figs. 45 and 46 are the drawing representing a preferred example of the table configuration of the recorder 41 of the database server 40.

The recorder 41 of the database server 40 consists of an administration table of Fig. 45 and an accounting table comprising the amount table of Fig. 46.

The administration table consists of a job table, action table, working state table, action state table and storage location table.

The job table contains the job ID, job name, storage location ID, the capacity of job directory, number of job files and the total capacity of job files wherein they are associated with one another. The action table contains the action ID, job ID and action name in a form associated with one another. The working state table contains the action ID, working subject ID, working state in a form associated with one another. The action state table contains the action ID, job ID and action state in a form associated with one another. The storage location table contains the storage location ID and storage location in a form associated with one another.

The working state according to the present invention is the state of the work of the working subject input from the work input means in the worker terminal. Action state is the state of the work viewed from the action set on the job as an object of the work.

The amount table consists of an accounting amount table, fixed accounting amount table and variable accounting amount table.

The accounting amount table stores an accounting company name, fixed amount of accounting, variable amount of accounting and total amount of accounting in a form associated with one another. The fixed accounting amount table stores a fixed amount of accounting and fixed object of accounting in a form associated with one another. The variable accounting amount table stores a variable amount of accounting and object of variable accounting in a form associated with one another.

The fixed object of accounting is an indicator determined at the time of signing a contract, and is not subjected to immediate changes due to the operation of this system. The object of variable accounting is an indicator subjected to changes due to processing of the DBC and DSS according to the present invention. It is changed by the operation of this system.

In the description of the present embodiment, the object of accounting for fixed amount of accounting is exemplified by the number of users, terminals and file servers, and the overall capacity of file servers, while the object of accounting for variable amount of accounting is exemplified by the number and capacity of job directories, the number and capacity of files, the number of action settings and the number of histories. However, it is to be understood that they are not limited thereto. Further, the fixed accounting amount table and variable accounting object table are not restricted to the embodiment shown in Fig. 46. It is also possible to provide a separate table with the amount associated for each indicator of the fixed object of accounting and variable object of accounting.

In the aforementioned database 40, upon receipt of the job name to be registered, action name registered in the job, storage location of the job directory where the job is set, company name for which the job is registered, number and capacity of job directories, number of files constituting job directories and the number of set actions, job ID, action ID and storage location ID will be issued; and the job ID, job name and storage location ID are stored in the job table in a form associated with one another. The storage site ID and storage location are stored in the storage location table in a form associated with one another, whereby the job is registered. The action ID, job ID and action name are stored in the action table in a form associated with one another, whereby action is registered (hereinafter referred to as "set" as required). At the same time, the relevant variable amount of accounting is extracted from the variable accounting amount table of the accounting table based on the company name for which job is registered, number of job directories, capacity of job directories, number of files constituting the job directory, and number of actions set. The extracted variable amount of accounting is added to the variable amount of accounting corresponding to the accounting company name in the accounting amount table.

Upon receipt of the information on the change in the working state of the working subject or the state of action, the relevant action ID, working subject ID and working state as a history of the working subject are stored into the working state table in a form associated with one another, and the relevant action ID, job ID and action state are stored into the action state table as a history of action in a form associated with one another. Synchronously as there is an increase in the number of the histories in the working state table and action state table in this way, the variable amount of accounting corresponding to the number of histories of the variable accounting amount table will be extracted. The extracted variable amount of accounting is added to the variable amount of accounting corresponding to the accounting company name in the accounting amount table.

Conversely to the aforementioned job registration, when the job name to be deleted has been received, the data corresponding to that job will be deleted from the administration table and the variable amount of accounting corresponding to the deleted variable object of accounting is extracted. Then the extracted variable amount of accounting is subtracted from the variable amount of accounting corresponding to the accounting company name.

The following describes the effect of the accounting system when a "New spring catalog" is produced in three steps; "image correction", "proofreading of the original" and "layout input", wherein the employee is set as the unit of the working subject in "Company A", a printing company of Fig. 43.

The job data regarding the job of "New spring catalog" is registered as an object of administration through the job input means of the administrator terminal 10a by employee A who is in charge of administering the job data regarding the job of "New spring catalog". At the same time, input is given to set the actions of "image correction", "proofreading of the original" and "layout input" to the job.

When the job data regarding the job of "New spring catalog" has been registered as an object of administration and input has been given to set the actions of "image correction", "proofreading of the original" and "layout input" to the job, the administrator terminal 10a having received this information transfers the job data regarding the job of "New spring catalog" together with information on the set action to the file server 20.

Upon receipt of the job data regarding the job of "New spring catalog" together with the information on the action set from the administrator terminal 10a, the file server 20 logically stores this job data into the recorder 22 as job directory 21a as an object of logical administration. At the same time, it sends information on the job "New spring catalog" to the database server 40.

The aforementioned information on the job "New spring catalog" should include at least one of the following items; of the company name (Company A), the job name to be registered ("New spring catalog"), number of job directories corresponding to this job ("one job directory"), storage location of job directory 21a and its capacity, number of files constituting the job directory, number of actions set on the job and their names ("image correction", "proofreading of the original" and "layout input"), but is not restricted to them so long as such an item is the information required for accounting.

Upon receipt of information on the job, the database server 40 records the information into the accounting table of the recorder 41; then the job and action are registered based on this information. The variable object of accounting in the variable accounting amount table is extracted, and the extracted variable amount of accounting is added to the variable amount of accounting in the accounting amount table.

As described above, In the accounting system according to the present invention, when input is given through the administrator terminal 10a to set the "New spring catalog" as the job, it is recorded in the accounting table of the database server, and accounting is processed accordingly. This makes it possible to change accounting in conformity to the change of the object to be administered present in the user site system over the network.

Input is given by an employee B wishing to perform work in response to the activity "image correction" set on the job "New spring catalog" to start the work ("Work start") in response to the activity "image correction" set on the job "New spring catalog", using the state input means of the worker terminal 11a.

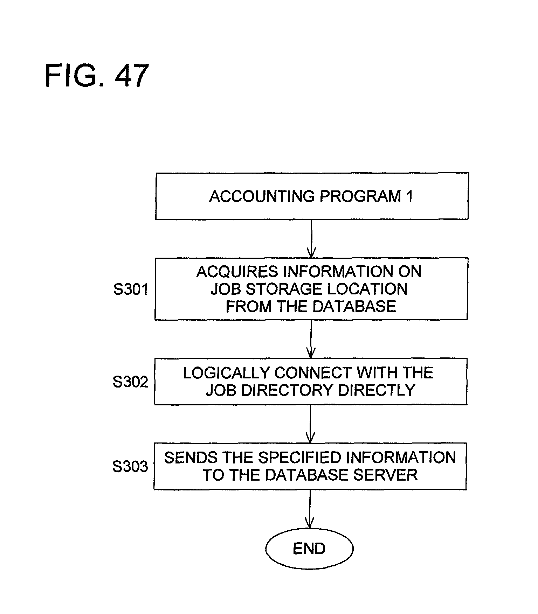

Upon receipt of the activity "image correction" set on the job "New spring catalog" to start the work ("Work start") in response to the activity "image correction" set on the job "New spring catalog", the worker terminal 11a accesses the administration table of the recorder 41 of the database server shown in Fig. 45 through the DBC in conformity to the flow of processing shown in Fig. 47, and gets information on the storage location of the "New spring catalog" as an object of work from the job table (S301). Then in conformity to the stored information on the storage location, a logically direct connection is established between the job directory 21a containing the hob data on the job "New spring catalog" and the working directory corresponding to an employee B as a working subject (S302). Then "Work start" is sent to the database server 40 (S103) as the working state of the employee B as a working subject and the action state of "image correction" set on the action "New spring catalog".

Upon receipt of information "Work start" as the working state of employee B, a working subject, and the action state of "image correction" set on the action "New spring catalog", the database 40 records a new history of information "Work start" as the working state of the employee B, a working subject, into the working state table of the administration table of the recorder 41, and as the action state of "image correction" set on the action "New spring catalog" into the action state table. At the same time, based on the number of histories increased by the working state table, the variable amount of accounting is extracted from the variable accounting amount table of the accounting table, and the variable amount of accounting extracted is added to the variable amount of accounting in the accounting amount table.

When employee B wishes to discontinue (or terminate) work in response to "image correction" set on the action "New spring catalog" after information "Work start" has been sent to the database server 40 in S303 and has been recorded in the recorder 41, he or she can use the state input means of the worker terminal 11a to enter the "Discontinue work" (or "Terminate work") for "image correction" set on the action "New spring catalog".

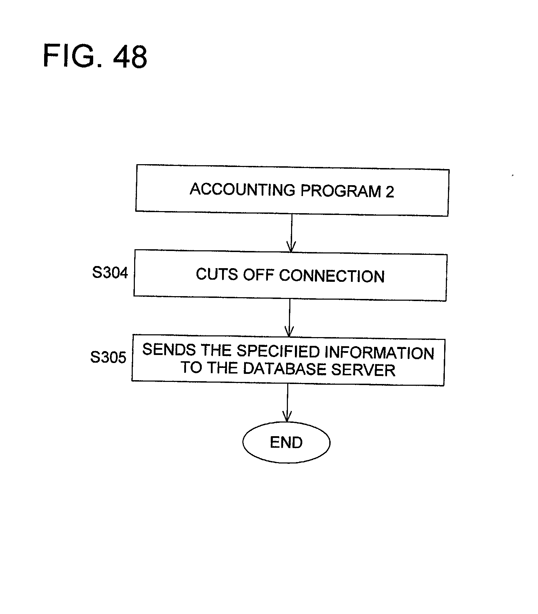

Upon receipt of the input of "Discontinue work" (or "Terminate work") in response to the action of "image correction" set on the action "New spring catalog", the worker terminal 11a uses the DBC to establish a logically direct connection between the working directory usable only to the employee B and the job directory 21a having a storage of the job data on "New spring catalog" in conformity to the flow of processing shown in Fig. 48 (S304). As the working state of the employee B, a working subject, and the action state of "image correction" set on the action "New spring catalog", "Discontinue work" (or "Terminate work") is set to the database server 40 (S305).

Upon receipt of the information "Discontinue work" (or "Terminate work") as the working state of the employee B, a working subject, and the action state of "image correction" set on the action "New spring catalog", the database server 40 records a new history of information "Work start" as the working state of the employee B, a working subject into the working state table of the administration table of the recorder 41, and as the action state of "image correction" set on the action "New spring catalog" into the action state table. At the same time, based on the number of histories increased by the working state table and action state table, the variable amount of accounting is extracted from the variable accounting amount table of the accounting table, and the variable amount of accounting extracted is added to the variable amount of accounting corresponding to the company name in the accounting amount table.

In the accounting system according to the present invention, when the state of the work in response to the action set on the job has been changed in the worker terminal 11a, the state of connection with the job directory containing a storage of the job data on this job is changed. At the same time, the working state and action state subsequent to this change are recorded in the aforementioned working state table and action state table. Based on this record, the record is entered into the accounting table, whereby accounting work is performed.

Then, for all actions set on the "New spring catalog", information of "Work start" is sent to the database server 40 in S305 and is recorded in the recorder 41. After that, employee A administering the "New spring catalog" can access the database server 40 to confirm that production of the "New spring catalog" has been terminated. In this case, the employee A gives the input to the job input means of the administrator terminal 10a to cancel the registration of the job "New spring catalog". Then the job is canceled from the scope of administration.

Having received the input of canceling the registration of the job "New spring catalog", the administrator terminal 10a uses the DBC to send to the file server 20 the instruction of canceling the registration of the job "New spring catalog".

Upon receipt of the instruction of canceling the registration of the job "New spring catalog", the file server 20 uses the DSS to send to the database server 40 the instruction of canceling the data on the job. At the same time, the job directory 21a storing the job data on "New spring catalog" is removed from the scope of administration.

Upon receipt of the instruction of removing from the scope of administration the job directory 21a storing the data on the job "New spring catalog", the database server 41 removes the data on the job "New spring catalog" from each table of the recorder 41. Based on the removed data, the variable amount of accounting obtained by extracting the variable amount of accounting corresponding to the variable object of accounting in the variable accounting amount table is subtracted from the variable amount of accounting in the accounting amount table, whereby work without accounting is performed.

In the aforementioned embodiments, start of work, discontinuation of work and termination of work are called "Start work", "Discontinue work" and Terminate work", respectively. However, it is to be understood that expressions are not limited thereto.

The description of the aforementioned embodiments is based on the case where different terminals (PCs, etc.) are used as an administrator terminal 10a and a worker terminal 11a. However, one and the same terminal (PC, etc.) may be used to perform the work of the administrator terminal 10a and worker terminal 11a.

The description of the aforementioned embodiments is based on the case where the network inside the user site system is different from the network for connection between the user site system and provider site system. However, one and the same network may be used.

The description of the aforementioned embodiments is based on the case where a single file server is used in the user site, however, multiple file servers may be used. When there are multiple file servers, multiple job directories may be provided to correspond to multiple file servers.

The description of the aforementioned embodiments is based on the case where one user site system is present for one provider site system. If multiple user site systems are provided for one provider site system, multiple user site systems can be administered by one database server. This method is preferred because server maintenance work can be centralized.

Further, the description of the aforementioned embodiments is based on the case where job data is transferred from the administrator terminal in setting the job and is made an object of administration in this system by the file server having received this job data. However, the data of the job originally present in the file server can be made an object of administration in this system by changing the setting, without the data being transferred from the administrator terminal.

As described above, the accounting system according to the present invention provides software comprising the DBC and DSS to the network (hardware) composed of a terminal owned by a printing company or a book binding company and a file server, and working state of an employee as a working subject or such a job as "New spring catalog" is administered by an appropriate use of a provider database through this software via the network line, whereby accounting administration for use of this administration system is also provided.

## Claims

1. An administration system comprising:
at least one job directory for storing a file on a job wherein said job directory is recorded in a recording medium;
a database for recording the working state of a working subject or of said job;
a client terminal;
an application software employed by a client user at each client terminal; and
a working directory on a client terminal provided corresponding to said working subject and said job directory;
wherein if a connection state, between said working subject or said working directory corresponding thereto and said job directory, is changed, said application software records information regarding said connection state of said working subject onto said database so that said working state of said job is administered.

2. The administration system of claim 1, wherein said working state of said working subject, corresponding to said job, is administered.

3. The administration system of claim 1, wherein said working state, corresponding to said job, is determined according to information of said connection state so that said working state of each job is administered.

4. The administration system of claim 1, wherein said working subject is said client user.

5. The administration system of claim 4, wherein said application software is a front-end application software.

6. The administration system of claim 1, wherein said working subject is said application software.

7. The administration system of claim 6, wherein said application software is a front-end application software.

8. The administration system of claim 6, wherein said application software is an external application software.

9. The administration system of claim 1, wherein said working subject is said client terminal.

10. The administration system of claim 1, wherein said working directory is only accessible by said working subject, corresponding to said working directory.

11. The administration system of claim 1, wherein said working subject is in a connecting state when said working subject is in work; and said working subject is in a disconnecting state when said working subject is not in work.

12. The administration system of claim 1, wherein said information regarding said connection state includes at least pieces of information for identifying said working subject, said job and a change of said connection state.

13. The administration system of claim 1, wherein said information regarding said connection state includes at least pieces of information for identifying said working subject, said job, a change of said connection state and the time of said change of said connection state

14. The administration system of claim 13, wherein a working time period, for said job regarding said working subject, is calculated in accordance with said time of said change of said connection state.

15. The administration system of claim 1, wherein said connecting state is either a state of a connected condition or a state of a disconnected condition.

16. The administration system of claim 1, wherein said database includes a job table which comprises a job ID and a job name, a working subject table which comprises a working subject ID and a working subject name, a working state table which comprises a working subject ID and a working subject state in relation with said job ID, and a working state change time table which comprises a job ID and a working state change time in relation with said working subject ID.

17. The administration system of claim 1, wherein when said working subject is brought into a state of a connected condition in response to a command for start or restart of work by said working subject, said working state of said working subject is recorded as "Working" in said database; when said working subject is brought into a state of a disconnected condition in response to a command for discontinuation of work by said working subject, the working state of said working subject is recorded as "Discontinued" in said database; and when said working subject is brought into a state of a disconnected condition in response to a command for the end of work by said working subject, the working state of said working subject is recorded as "Terminate" in said database.

18. The administration system of claim 17, wherein said working state of said job is recorded as "Working" in said database when said working state of said working subject is in a state of "Working".

19. The administration system of claim 17, wherein said working state of said job is recorded as "Discontinued" in said database when said working state of said working subject is in a state of "Discontinued".

20. The administration system of claim 17, wherein said working state of said job is recorded as "Terminate" in said database when said working state of said working subject is in a state of "Terminate".

21. The administration system of claim 1, wherein said working state of said working subject is verified by accessing said database so as that said working state of said working subject is administered.

22. The administration system of claim 1, wherein said database includes a working subject table which comprises a working subject name and a working subject ID in relation with said client terminal.

23. The administration system of claim 1, wherein said job directory is stored in a recording medium of a file server.

24. The administration system of claim 1, wherein said database is stored in a database server.

25. The administration system of claim 1, wherein said connection state is changed when said application receives an action set on said job as a working object and information for specifying an operation for said action.

26. The administration system of claim 25, wherein said working state of said action regarding at least one of said client user, said application and said client terminal is administered in accordance with a record of said database.

27. The administration system of claim 26, wherein said application is a front-end application software.

28. The administration system of claim 26, wherein said application is an external application.

29. The administration system of claim 25, wherein said application is a front-end application software.

30. The administration system of claim 29, wherein said working state of said working subject, regarding said job, is administered by said administration system.

31. The administration system of claim 30, wherein said front-end application software causes at least one of a first, second and third working states to be recorded in said database as information regarding said working state of said working subject with respect to said action set on said job.

32. The administration system of claim 31, wherein said front-end application software further causes the time of said change in said working state to be recorded in said database as information regarding said working state of said working subject with respect to said action set on said job.

33. The administration system of claim 32, wherein said database uses said time of said change in said working state to calculate a working time of said working subject for said action, and said database records said working time therein.

34. The administration system of claim 32, wherein said front-end application software uses said time of said change in said working state to calculate a working time of said working subject for said action.

35. The administration system of claim 31, wherein said first working state is recorded in said database after said front-end application software has acquired from said database a piece of information on a storage position for said job where said action as a working object is set, and a direct connection has been made between said job directory, storing said job, and said working directory according to said piece of information on said storage position.

36. The administration system of claim 35, wherein said second working state is recorded in said database after said direct connection has been disconnected by said front-end application software.

37. The administration system of claim 35, wherein said third working state is recorded in said database after said direct connection has been disconnected by said front-end application software and a work of said working subject is confirmed.

38. The administration system of claim 31, wherein upon receipt of a command on any one of said first, second and third working states, said front-end application software executes;
1) a process of referring said database said working state of said working subject as a authentication process, prior to a change of said connection state,
2) a process of determining, based on the result of said process of referring, if said command can be accepted or not,
3) a process of performing said change of said connection state when said command is accepted according to said process of determination, and
4) a process of sending a report that said command is not accepted when said command is not accepted according to said process of determination.

39. The administration system of claim 38, wherein in said authentication process, acceptability of a command on said first working state is determined according to whether said action as a working object is present or not, or whether said working state is said second working state or not; acceptability of a command on said second working state is determined according to whether said working state is said first working state or not; and acceptability of a command on said third working state is determined according to whether said working state is in either one of said first working state or said second working state or not.

40. The administration system of claim 31, wherein said job directory is stored in a recording medium of a file server; and
upon receipt of a command on any one of said first, second and third working states, said file server executes;
1) a process of referring said database said working state of said working subject as an authentication process, prior to a change of said connection state,
2) a process of determining, based on the result of said process of referring, if said command can be accepted or not,
3) a process of performing said change of said connection state when said command is accepted according to said process of determination, and
4) a process of sending a report that said command is not accepted when said command is not accepted according to said process of determination.

41. The administration system of claim 40, wherein in said authentication process, acceptability of a command on said first working state is determined according to whether said action as a working object is present or not, or whether said working state is said second working state or not; acceptability of a command on said second working state is determined according to whether said working state is said first working state or not; and acceptability of a command on said third working state is determined according to whether said working state is in either one of said first working state or said second working state or not.

42. The administration system of claim 29, wherein said working state, regarding said job, is determined by a piece of information in response with said connection state so that said working state of said job is administered by said administration system.

43. The administration system of claim 42, wherein said front-end application software causes at least one of a first, second, third and fourth action states to be recorded in said database as information regarding a action state of said action set on said job.

44. The administration system of claim 43, wherein said front-end application software further causes the time of a change in said action state to be recorded in said database as information regarding said action state of said action set on said job.

45. The administration system of claim 44, wherein said front-end application software uses said time of said change in said action state to calculate a working time of said action.

46. The administration system of claim 44, wherein said database uses said time of said change in said action state to calculate a working time of said action, and said database records said working time therein.

47. The administration system of claim 43, wherein said first action state is recorded in said database after said front-end application software has set an action to said job.

48. The administration system of claim 43, wherein said second action state is recorded in said database after said front-end application software has acquired from said database a piece of information on a storage position for said job where said action as a working object is set, and a direct connection has been made between said job directory, storing said job, and said working directory according to said piece of information on said storage position.

49. The administration system of claim 48, wherein said third action state is recorded in said database after said direct connection has been disconnected by said front-end application software.

50. The administration system of claim 48, wherein said fourth action state is recorded in said database after said direct connection has been disconnected by said front-end application software and an action has been confirmed by said database.

51. The administration system of claim 43, wherein said first action state is recorded after a action for said job has been set by said front-end application software; said second action state is recorded after said front-end application software has acquired from said database a piece of information on a storage position for said job where said action as a working object is set, and a direct connection has been made between said job directory, storing said job, and said working directory according to said piece of information on said storage position; said third action state is recorded after said direct connection has been disconnected by said front-end application software; and said fourth action state is recorded after said direct connection has been disconnected by said front-end application software, and said action has been confirmed by said database.

52. The administration system of claim 43, wherein upon receipt of a command on any one of said first, second, third and fourth action states, said front-end application software executes;
1) a process of referring said database said action state of said action as a authentication process, prior to setting of said action and a change of said connection state,
2) a process of determining, based on the result of said process of referring, if said command can be accepted or not,
3) a process of performing said change of said connection state and said setting of said action when said command is accepted according to said process of determination, and
4) a process of sending a report that said command is not accepted when said command is not accepted according to said process of determination.

53. The administration system of claim 52, wherein in said authentication process, acceptability of a command on said first action state is determined according to whether said job to be set is present or not; acceptability of a command on said second action state is determined according to whether said action state is said first action state or not; acceptability of a command on said third action state is determined according to whether said action state is said second action or not; and acceptability of a command on said fourth action state is determined according to whether said action state is either one of said second action or said third action or not.

54. The administration system of claim 43, wherein said job directory is stored in a recording medium of a file server; and
upon receipt of a command on any one of said first, second, third and fourth action states, said file server executes;
1) a process of referring said database said action state of said action as an authentication process, prior to setting of said action and a change of said connection state,
2) a process of determining, based on the result of said process of referring, if said command can be accepted or not,
3) a process of performing said setting of said action and said change of said connection state when said command is accepted according to said process of determination, and
4) a process of sending a report that said command is not accepted when said command is not accepted according to said process of determination.

55. The administration system of claim 54, wherein in said authentication process, acceptability of a command on said first action state is determined according to whether said job to be set is present or not; acceptability of a command on said second action state is determined according to whether said action state is said first action state or not; acceptability of a command on said third action state is determined according to whether said action state is said second action state or not; and acceptability of a command on said fourth action state is determined according to whether said working state is either one of said second working state or said third working state or not.

56. The administration system of claim 1, wherein a plurality of working subjects of said working subject are set as a group corresponding to said job in said job directory.

57. The administration system of claim 56, wherein when said working subject is brought into a state of a connected condition in response to a command for start or restart of work by said working subject, said working state of said working subject is recorded as "Working" in said database; when said working subject is brought into a state of a disconnected condition in response to a command for discontinuation of work by said working subject, the working state of said working subject is recorded as "Discontinued" in said database; and when said working subject is brought into a state of a disconnected condition in response to a command for the end of work by said working subject, the working state of said working subject is recorded as "Terminate" in said database.

58. The administration system of claim 57, wherein said working state of said job is recorded as "Working" in said database when said working state of at least one of said plurality of working subjects, in said group corresponding to said job to be administered, is in a state of "Working".

59. The administration system of claim 57, wherein said working state of said job is recorded as "Terminate" in said database when said working state of all of said plurality of working subjects, in said group corresponding to said job to be administered, is in a state of "Terminate".

60. The administration system of claim 57, wherein said working state of said job is recorded as "Discontinued" in said database when said working state of at least one of said plurality of working subjects, in said group corresponding to said job to be administered, is in a state of "Discontinued".

61. The administration system of claim 56, wherein said application software is a front-end application software.

62. The administration system of claim 61, wherein said working subject is one of said client user, said front-end application software, a client external application software and said client terminal.

63. The administration system of claim 61, wherein said front-end application software causes at least one of a first, second and third working states to be recorded in said database as information regarding a working state of said working subject with respect to said action set on said job; and said front-end application software causes at least one of a first, second, third and fourth action states to be recorded in said database as information regarding an action state of said action set on said job.

64. The administration system of claim 63, wherein said front-end application software further causes the time of said change in said working state to be recorded in said database as information regarding said working state of said working subject with respect to said action set on said job; and said front-end application software uses said time of said change in said action state to calculate a working time of said action as information regarding said action state of said action set on said job.

65. The administration system of claim 64, wherein said database uses said time of said change in said working state to calculate a working time of said working subject for said action, and said database records said working time therein.

66. The administration system of claim 64, wherein said database uses said time of said change in said action state to calculate a working time of said action, and said database records said working time therein.

67. The administration system of claim 63, wherein said first action state is recorded in said database after said front-end application software has set an action to said job.

68. The administration system of claim 63, wherein said first working state is recorded in said database after said front-end application software has acquired from said database a piece of information on a storage position for said job where said action as a working object is set, and a direct connection has been made between said job directory, storing said job, and said working directory according to said piece of information on said storage position.

69. The administration system of claim 63, wherein said second working state is recorded in said database after said direct connection has been disconnected by said front-end application software.

70. The administration system of claim 63, wherein said third working state is recorded in said database after said direct connection has been disconnected by said front-end application software and a work of said working subject is confirmed.

71. The administration system of claim 63, wherein said second action state, said third action state and fourth action state are determined in accordance with said working state of said plurality of working subjects.

72. The administration system of claim 71, wherein when said working state of at least one of said plurality of working subjects in said group performing a work for said action is said first working state, a state of said action is recorded as "the second action state" in said database.

73. The administration system of claim 71, wherein when said working state of all of said plurality of working subjects in said group performing a work for said action is said third working state, a state of said action is recorded as "the fourth action state" in said database.

74. The administration system of claim 71, wherein when said working state of at least one of said plurality of working subjects in said group performing a work for said action is said second working state and there is not any one of said plurality of working subjects whose working state is said first working state, a state of said action is recorded as "the third action state" in said database.

75. The administration system of claim 63, wherein said job directory is stored in a recording medium of a file server; and
upon receipt of a command on any one of said first, second and third working states, one of said file server and said front-end application software executes;
1) a process of referring said database said working state of said working subject as an authentication process, prior to a change of said connection state,
2) a process of determining, based on the result of said process of referring, if said command can be accepted or not,
3) a process of performing said change of said connection state when said command is accepted according to said process of determination, and
4) a process of sending a report that said command is not accepted when said command is not accepted according to said process of determination.

76. The administration system of claim 75, wherein in said authentication process, acceptability of a command on said first working state is determined according to whether said action as a working object is present or not, or whether said working state is said second working state or not; acceptability of a command on said second working state is determined according to whether said working state is said first working state or not; and acceptability of a command on said third working state is determined according to whether said working state is in either one of said first working state or said second working state or not.

77. A data access method, comprising the steps of:
providing a direct logical connection to a job directory for storing a file on a job as an object of a corresponding working subject, out of a plurality of job directories, according to requirements of said working subject; and
accessing said file of said job through said direct logical connection.

78. The data access method of claim 77, wherein out of said plurality of job directories, a direct connection is made only to the ones of said plurality of job directories of said corresponding working subject, in which said plurality of job directories are on a work activity; and
a direct connection is not made to the ones of said plurality of job directories of said corresponding working subject, in which said plurality of job directories are on a non-working activity.

79. The data access method of claim 77, wherein said job directory is recorded in a recording medium; and information regarding said working subject or a connection state, corresponding said job, is recorded in a database in accordance with said direct logical connection to said job directory.

80. The data access method of claim 79, wherein a recording action of said information to said database is executed by a front-end application software in a client terminal.
